# EUROPEAN PATENT SPECIFICATION

(11) **EP 0 725 398 B1**
(45) Date of publication and mention of the grant of the patent: **24.05.2000**
(21) Application number: 96400228.1
(22) Date of filing: 02.02.1996
(51) Int. Cl.: G11B 15/68

(54) **Auto-loading system for recording medium cartridge**
Automatisches Ladesystem für Aufzeichnungsmedium-Kassette
Système de chargement automatique pour cassette à support d'enregistrement

(30) Priority: 03.02.1995 JP 3774995
(43) Date of publication of application: 07.08.1996
(73) Proprietor: SONY CORPORATION, Tokyo (JP)
(72) Inventor: Nakase, Hideo, c/o Sony Corporation, Tokyo (JP); Nakagawa, Jo, c/o Sony Corporation, Tokyo (JP); Shimizu, Hirohiko, c/o Sony Corporation, Tokyo (JP); Umemura, Tsuyoshi, c/o Sony Corporation, Tokyo (JP); Saito, Akira, c/o Sony Corporation, Tokyo (JP)
(74) Representative: Thévenet, Jean-Bruno

(56) References cited:
- US-A- 3 620 385
- US-A- 3 774 916
- US-A- 5 184 260

## Description

### BACKGROUND OF THE INVENTION

### Field of the Invention

The present invention relates to an auto-loading system for recording medium cartridges which is optimum for application to a tape streamer serving as a backup magnetic recording/reproducing device for storing data, for example, data of a computer (CPU), and particularly to an auto-loading system for recording medium cartridges which comprises a magazine capable of containing a plurality of recording medium cartridges so that the recording medium cartridges can continuously be rotated, i.e., automatically be changed, between the magazine and a drive, thereby increasing the storage capacity.

### Description of the Related Art

An example of such auto-loading systems for recording medium cartridges (referred to as "tape cartridges" hereinafter) is the auto-loader disclosed in U. S. Patent No. 5,184,260 A, according to the preamble of claim 1.

This known example comprises a magazine which contains tape cartridges including at least two upper tape cartridges and at least two lower tape cartridges, along the lengthwise direction, and which is horizontally set below a drive in a body of the auto-loader so that the tape cartridges are rotated in the magazine by a combination of horizontal reciprocating motion and vertical reciprocating motion to be successively transferred to a cartridge port formed in an upper portion at an end of the magazine in the lengthwise direction thereof.

The tape cartridges are successively automatically changed one by one between the cartridge port of the magazine and the cartridge port of the drive by using a pickup which is moved in two directions, i.e., vertical and horizontal directions, so that recording and reproduction can continuously be carried out on the tape cartridges.

The magazine is expensive because of a complicated structure for rotating the tape cartridges in the magazine by a combination of horizontal reciprocating motion and vertical reciprocating motion. The pickup moved in the two directions including the vertical and horizontal directions has a complicated structure and is thus expensive and operated with low reliability.

The pickup has the structure in which it is moved in the two directions, i.e., the vertical and horizontal directions, between the cartridge port of the magazine and the cartridge port of the drive while vertically holding an end of a tape cartridge so as to automatically change the tape cartridges. In automatic exchange of the tape cartridges by the pickup, the tape cartridge easily slips from the pickup, and there is thus the problem that the operation of automatically changing the tape cartridges has low reliability.

The system in which a tape cartridge is ejected from the cartridge port of the drive by vertically holding an end of the tape cartridge and drawing out the tape cartridge using the pickup cannot cope with variations in the size of the tape cartridge and the amount of ejection of the tape cartridge from the drive, and easily generates error in drawing out the tape cartridge, thereby causing the problem of low reliability of operation.

### SUMMARY OF THE INVENTION

The present invention has been achieved for solving the above problems, and an object of the present invention is to provide an auto-loading system for tape cartridges which permits the very simple and secure operation of rotating tape cartridges within the magazine and operation of transferring the tape cartridges between the magazine and the drive.

Another object of the present invention is to provide an auto-loading system for tape cartridges which permits the simple operation of rotating the tape cartridges within the magazine, an increase in the number of the tape cartridges contained in the magazine, and the rapid rotation of a specified tape cartridge in rotation of a plurality of tape cartridges between the magazine and the drive.

Still another object of the present invention is to provide an auto-loading system for tape cartridges which is capable of continuously securely ejecting the tape cartridges to a cartridge rotation mechanism between a magazine and a drive from a cartridge loading mechanism in the drive.

A further object of the present invention is to provide an auto-loading system for tape cartridges which permits the simple operation of rotating the tape cartridges within the magazine, and an increase in the number of the tape cartridges which can be contained in the magazine, and which can prevent interference between respective tape cartridges during the operation of rotating a plurality of tape cartridges between the magazine and the drive, thereby permitting smooth rotation.

A still further object of the present invention is to provide an auto-loading system for tape cartridges which permits the very simple and secure operations of rotating tape cartridges within a magazine and of transferring tape cartridges between the magazine and a drive, and the magazine to be automatically loaded in a body of the auto-loader at the same time as automatic setting of cartridge extruding means for extruding tape cartridges into an elevator from a cartridge ejection port of the magazine.

A further object of the present invention is to provide an auto-loading system for tape cartridges which permits the tape cartridge in a magazine automatically loaded in a body of an auto-loader, which projects from a cartridge insertion port or a cartridge ejection port in error, to be automatically returned into the magazine.

A further object of the present invention is to provide a magazine for tape cartridges which can contain at least eight tape cartridges, and which permits the simple operation of rotating the tape cartridges within the magazine and the simple operation of inserting and containing the tape cartridges in the magazine.

In order to achieve the objects, in accordance with an aspect of the present invention, an auto-loading system for tape cartridges comprises a cartridge containing unit for housing recording medium cartridges; driving means having a cartridge port for accessing a recording medium contained in a recording medium cartridge which is loaded through said cartridge port; and transfer means for transferring said recording medium cartridge between said cartridge containing unit and said driving means; characterised in that: said cartridge containing unit comprises a first space which is connected to a cartridge insertion port, a second space which is horizontally connected to said first space, a third space which is formed below said second space perpendicularly to said second space and which is connected to said second space, and a fourth space which is horizontally connected to said third space, which is parted from said first space by a partition, and which is connected to a cartridge ejection port formed at a position corresponding to said cartridge insertion port, so that at least one recording medium cartridge is contained in each of said first to fourth spaces; said transfer means are suitable for transferring a recording medium cartridge between said cartridge insertion port, said cartridge ejection port, and said cartridge port of said driving means; and in that it comprises: first cartridge extruding means for moving the recording medium cartridges positioned, in use, in said third and fourth spaces toward said cartridge ejection port by pushing the end surface of a recording medium cartridge positioned in said third space on the side opposite to said fourth space, to load the recording medium cartridge positioned in said fourth space in said transfer means through said cartridge ejection port; and second cartridge extruding means for inserting the recording medium cartridge loaded in said transfer means into said cartridge port of said driving means or to said cartridge insertion port of said cartridge containing unit by pushing the side surface of the recording medium cartridge loaded in said transfer means on the side opposite to said driving means and said cartridge insertion port.

In accordance with another aspect of the present invention, the cartridge containing unit further comprises a cartridge containment port having a fifth space which permits only one tape cartridge to be horizontally contained between the first space and the fourth space.

In accordance with still another aspect of the present invention, the second cartridge extruding means are suitable for inserting the tape cartridge loaded in the transfer means into the cartridge containment port by pushing the side surface of the tape cartridge loaded in the transfer means on the side opposite the cartridge containment port.

In accordance with a further aspect of the present invention, the auto-loading system further comprises third cartridge extruding means for pushing only the tape cartridge contained in the fifth space toward the transfer means to load the tape cartridge in the transfer means.

In accordance with a still further aspect of the present invention, the auto-loading system further comprises cartridge containing unit loading means for automatically drawing the cartridge containing unit into the auto-loading system so that the cartridge containment port and the cartridge ejection port of the cartridge containing unit are set at positions corresponding to the cartridge port of the driving means.

In accordance with a further aspect of the present invention, the cartridge containing unit loading means comprises latch means for latching the cartridge containing unit; and a slide driving member for linearly moving the latch means in the directions of drawing and extrusion of the cartridge containing unit.

In accordance with a further aspect of the present invention, the auto-loading system further comprises a cartridge insertion port for inserting the cartridge containing unit therein; a cover for opening and closing the cartridge insertion port; cover opening/closing means for closing the cover before the completion of the operation of loading the cartridge containing unit by the cartridge containing unit loading means, and opening in correspondence with the start of the ejection of the cartridge containing unit by the cartridge containing unit loading means; and control means for, when the tape cartridge in the cartridge containing unit projects from the cartridge insertion port or the cartridge ejection port, closing the cover by the cover opening/closing means and ejecting the cartridge containing unit by the cartridge containing unit loading means to push back the tape cartridge, which projects from the cartridge containing unit, into the cartridge containing unit when the tape cartridge contacts the inner side of the cover.

### BRIEF DESCRIPTION OF THE DRAWINGS

Figs. 1A and 1B are schematic sectional side views illustrating the operation of loading a magazine in an auto-loader for tape cartridges in accordance with an embodiment to which the present invention is applied;
Figs. 2A and 2B are schematic sectional side views illustrating the operation of ejecting a tape cartridge to a cartridge tray of an elevator from a cartridge ejection port of a magazine which is loaded in the auto-loader of Figs. 1A and B;
Figs. 3A and 3B are schematic sectional side views illustrating the operation of transferring the tape cartridge, which is ejected into the cartridge tray of the elevator from the cartridge ejection port of the magazine as in Figs. 2A and B, to a drive and supplying the tape cartridge into a cartridge port thereof;
Figs. 4A and 4B are schematic sectional side views illustrating the operation of transferring the tape cartridge, which is ejected into the cartridge tray of the elevator from the cartridge port of the drive, to the magazine, and returning the tape cartridge into a cartridge insertion port thereof;
Figs. 5A and 5B are schematic sectional side views illustrating the operation of returning the tape cartridge into the cartridge insertion port of the magazine from the cartridge tray of the elevator, and then ejecting the magazine from the auto-loader;
Figs. 6A and 6B are schematic sectional side views illustrating the operation of ejecting a tape cartridge into the cartridge tray of the elevator from a cartridge containment port of the magazine;
Figs. 7A and 7B are schematic sectional side views illustrating the operation of transferring a tape cartridge, which is ejected into the cartridge tray of the elevator from the cartridge containment port of the magazine as in Figs. 6A and B, to the cartridge port of the drive;
Figs. 8A and 8B are schematic sectional side views illustrating the operation of transferring the Fig. 7 tape cartridge between the cartridge tray of the elevator and the cartridge port of the drive;
Figs. 9A and 9B are schematic sectional side views illustrating the operation of returning the Fig. 7 tape cartridge, which is ejected into the cartridge tray of the elevator from the cartridge port of the drive, into the cartridge containment port of the magazine;
Figs. 10A and 10B are schematic sectional side views illustrating two-step extrusion positions of first and second extrusion positions when a tape cartridge is extruded into the cartridge tray of the elevator from the magazine and the drive of Figs. 1A to 9B;
Fig. 11 is a perspective view of the whole of the preferred embodiment of magazine as viewed from the front and the left side thereof;
Fig. 12 is a partly broken-away perspective view of the whole magazine of Fig. 11 as viewed from the front and the left side thereof;
Fig. 13 is a longitudinal sectional side view of the Fig. 11 magazine taken along a center line;
Fig. 14 is an enlarged sectional side view taken along line A-A of Fig. 13;
Fig. 15 is a sectional plan view taken along line B-B of Fig. 13;
Fig. 16 is a sectional plan view taken along line C-C of Fig. 13;
Fig. 17 is an enlarged sectional side view illustrating cartridge positioning means in the Fig. 11 magazine;
Fig. 18 is a longitudinal sectional view taken along a center line and illustrating a modified embodiment of the magazine;
Fig. 19 is a perspective of the whole of a preferred embodiment of auto-loader;
Fig. 20 is a schematic perspective illustrating a substantially U-shaped chassis of the Fig. 19 auto-loader;
Fig. 21 is a partly broken-away plan view of the whole Fig. 19 auto-loader without a cover;
Fig. 22 is a front view of the Fig. 19 auto-loader;
Fig. 23 is a rear view of the Fig. 19 auto-loader;
Fig. 24 is a partly broken-away sectional side view taken along line D-D of Fig. 21;
Fig. 25 is a partly broken-away sectional side view taken along line E-E of Fig. 21;
Fig. 26 is a partly broken-away plan view illustrating a magazine loading mechanism of the Fig. 19 auto-loader;
Fig. 27 is a sectional side view taken along line F-F of Fig. 26;
Fig. 28 is a sectional side view taken along line G-G of Fig. 26;
Fig. 29 is an enlarged sectional side view taken along line H-H of Fig. 26;
Figs. 30A and B are enlarged sectional side views illustrating a latch mechanism of the Fig. 26 magazine loading mechanism;
Fig. 31 is a perspective view illustrating a cartridge tray and a tray elevator of the elevator of the Fig. 19 auto-loader;
Fig. 32 is a perspective view illustrating the tray elevator and a vertical guide of the Fig. 31 elevator;
Fig. 33 is a perspective view illustrating the tray elevator and an inclined guide of the Fig. 31 elevator;
Fig. 34 is a partly broken-away plan view illustrating a tray elevating mechanism of the Fig. 31 elevator;
Fig. 35 is a sectional side view taken along line I-I of Fig. 34;
Fig. 36 is a sectional side view taken along line J-J of Fig. 34;
Fig. 37 is a sectional side view taken along line K-K of Fig. 34;
Fig. 38A is a side view illustrating optical sensors and optical shutter plates of a tray elevating mechanism of the Fig. 31 elevator and Fig. 38B is an enlarged sectional side view of a principal portion;
Fig. 39 is a perspective view illustrating a movable cover opening/closing mechanism of the Fig. 19 auto-loader;
Fig. 40 is a sectional side view illustrating the Fig. 39 movable cover opening/closing mechanism in the state wherein the movable cover is closed;
Fig. 41 is a sectional side view illustrating the operation of opening and closing the movable cover by the Fig. 39 movable cover opening/closing mechanism;
Fig. 42 is a sectional side view illustrating the state wherein opening of the movable cover is inhibited during the operation of automatically pushing a tape cartridge into a magazine;
Fig. 43 is a perspective view illustrating a locked state of a movable cover locking lever in the Fig. 39 movable cover opening/closing mechanism;
Fig. 44 is a perspective view illustrating the state wherein the movable cover locking lever of the Fig. 39 movable cover opening/closing mechanism is released from locking;
Fig. 45 is a sectional side view illustrating the state wherein the movable cover in a closed state is locked by the Fig. 39 movable cover locking mechanism;
Fig. 46 is a sectional side view illustrating the state wherein a lock of the movable cover is released by the movable cover locking lever;
Fig. 47 is a partly broken-away plan view illustrating a first cartridge extruding mechanism of the Fig. 19 auto-loader;
Fig. 48A is a side view of the first cartridge extruding mechanism of Fig. 47 and Fig. 48B is a sectional side view of a principal portion thereof;
Fig. 49 is a partly broken-away plan view illustrating a second cartridge extruding mechanism of the Fig. 19 auto-loader;
Fig. 50 is a sectional side view taken along line L-L of Fig. 49;
Fig. 51 is a sectional side view taken along line M-M of Fig. 49;
Fig. 52 is a side view illustrating a third cartridge extruding mechanism of the Fig. 19 auto-loader;
Fig. 53A is a partly broken-away plan view and Fig. 53B is a sectional side view of the third cartridge extruding mechanism of Fig. 52;
Fig. 54 is a partly broken-away plan view illustrating the operation of retracting a third extrusion arm of the Fig. 52 third cartridge extruding mechanism from a magazine insertion space;
Fig. 55 is a partly broken-away plan view illustrating the operation of moving the third extrusion arm of the Fig. 52 third cartridge extruding mechanism into the magazine insertion space, and the operation of extruding a tape cartridge by the third extrusion arm;
Fig. 56 is a sectional plan view illustrating a magazine locking mechanism of the Fig. 52 third cartridge extruding mechanism;
Fig. 57 is a schematic plan view illustrating a cartridge loading mechanism and a cartridge ejecting mechanism in a drive of the Fig. 19 auto-loader;
Fig. 58 is a schematic sectional side view taken along line N-N of Fig. 57;
Fig. 59 is a schematic plan view illustrating the state wherein a tape cartridge is completely loaded in the Fig. 57 drive, and a magnetic tape is completely loaded;
Fig. 60 is a schematic sectional side view taken along line O-O of Fig. 59;
Fig. 61 is a side view illustrating the standby state of the Fig. 57 cartridge ejecting mechanism;
Fig. 62 is a partly broken-away side view taken along line P-P of Fig. 61;
Fig. 63 is a schematic sectional side view illustrating the operation of ejecting a tape cartridge into a cartridge tray from a cartridge port by a cartridge ejection arm of the Fig. 57 cartridge ejecting mechanism;
Fig. 64 is an enlarged sectional side view taken along line Q-Q of Fig. 49 and illustrating the operation of detecting a first extrusion position of a tape cartridge in a cartridge tray;
Fig. 65 is an enlarged sectional side view taken along line Q-Q of Fig. 49 and illustrating the operation of detecting a second extrusion position of a tape cartridge in a cartridge tray;
Fig. 66 is an enlarged sectional side view taken along line R-R of Fig. 49 and illustrating the operation of detecting an insertion error of a tape cartridge in a cartridge tray;
Fig. 67 is a partly broken-away side view illustrating projection of a tape cartridge from a magazine which is loaded in the Fig. 19 auto-loader;
Fig. 68 is a partly broken-away side view illustrating the operation of automatically pushing a tape cartridge, which projects from a magazine, into the magazine;
Fig. 69 is a block diagram illustrating a control circuit for automatically pushing a tape cartridge, which projects from a magazine, into the magazine;
Fig. 70 is a flowchart illustrating the operation of automatically pushing a tape cartridge into a magazine by the control circuit shown in Fig. 69;
Fig. 71 is a schematic plan view illustrating a plurality of optical sensors in the Fig. 19 auto-loader;
Fig. 72 is a schematic right side view illustrating a plurality of further optical sensors in the Fig. 19 auto-loader;
Fig. 73 is a schematic left side view illustrating a plurality of still further optical sensors in the Fig. 19 auto-loader; and
Fig. 74 is a schematic plan view illustrating a plurality of optical sensors in the drive of the Fig. 19 auto-loader.

### DESCRIPTION OF THE PREFERRED EMBODIMENT

An auto-loading system for tape cartridges in accordance with a preferred embodiment in which the present invention is applied to a tape streamer will be described below with reference to the drawings. This embodiment uses a tape cartridge standardized as DDS2 cartridge in R-DAT cartridges for data recorders.

### [Outline of magazine and auto-loader]

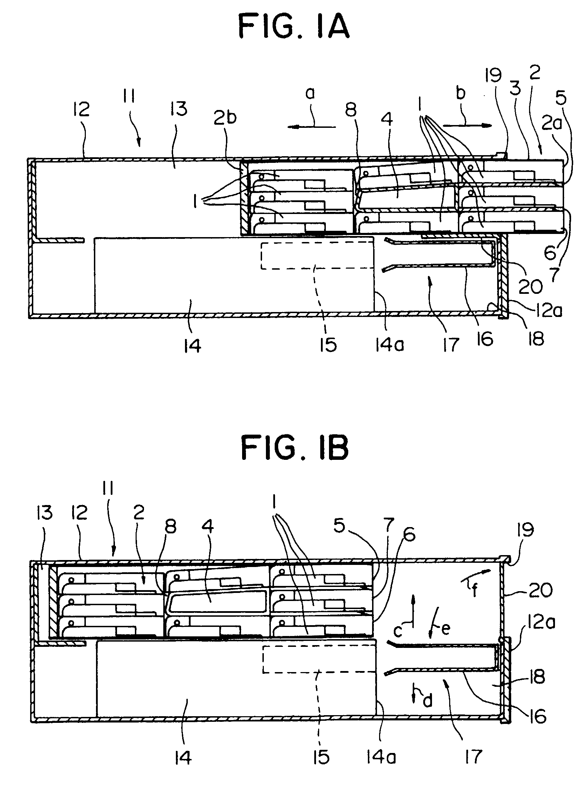

A magazine and an auto-loader are outlined with reference to Figs. 1A through 9B.

### [Outline of magazine]

As shown in Figs. 1A and 1B, a magazine 2 can contain a total of eight tape cartridges 1 in three stages and in the lengthwise direction thereof. The magazine 2 has a magazine body 3 formed in a substantially rectangular parallelepipedic box, and a hollow portion 4 formed in the box at substantially the center thereof. Three of the eight tape cartridges 1 are horizontally arranged in a line in a lower stage below the hollow portion 4, and two tape cartridges are horizontally spaced in an intermediate stage in front of and behind the hollow portion 4, the remaining three tape cartridges being horizontally arranged in a line in an upper stage above the hollow portion 4. These eight tape cartridges 1 are contained around the hollow portion 4.

In this embodiment, a cartridge insertion port 5 is formed in an upper stage of a side (the side of the point of arrow b) in the directions shown by arrows a and b along the lengthwise direction of the magazine 2, a cartridge ejection port 6 is formed in a lower stage of the side, and a cartridge containment port 7 is formed in a middle stage of the side.

A substantially U-shaped path extending from the cartridge insertion port 5 to the cartridge ejection port 6 with a circuit path around the hollow portion 4 forms a cartridge rotation path 8 so that the seven tape cartridges 1, which are successively inserted through the cartridge insertion port 5 in the direction shown by arrow a, can successively be contained in the rotation path 8 by a rotation system (one-way system), and successively be extruded toward the cartridge ejection port 6 in the direction shown by arrow b.

Only one tape cartridge 1 can be contained in the cartridge containment port 7 and freely be moved in and out of the cartridge containment port 7 in the directions shown by arrows a and b.

### [Outline of the auto-loader]

As shown in Fig. 1A through 9B, an auto-loader 11 has an auto-loader body 12 formed in a substantially rectangular parallelepipedic box. The auto-loader body 12 has a long horizontal magazine insertion space 13 which is formed in the upper portion of the body along the center thereof, and a drive 14 which serves as a helical scanning type magnetic recording/reproducing device and which is disposed below the magazine insertion space 13. A tray elevating space 18 containing an elevator 17 for vertically moving a cartridge tray 16 in the directions shown by arrows c and d, is formed between the front side 14a of the drive 14 where a cartridge port 15 is formed, and a front panel 12a of the auto-loader body 12.

A magazine insertion port 19 is formed at the center of the upper portion of the front panel 12a of the auto-loader body 12 opposite to the front side (on the side of the point of arrow b) of the magazine insertion space 13, an inwardly movable cover 20 being provided for opening and closing the magazine insertion port 19 so as to be rotatable inwardly of the front panel 12a in the directions shown by arrows e and f.

### [Operation of loading the magazine]

When loading the magazine 2 in the auto-loader 11, the cartridge tray 16 of the elevator 17 is moved downward to a drive position in the direction shown by arrow d, as shown in Fig. 1(A). A lengthwise side 2b of the magazine 2, which is opposite to the other side 2a thereof, is then inserted into the magazine insertion port 19 in the direction shown by arrow a. At this time, the magazine 2 is horizontally inserted into the magazine insertion space 13 in the direction shown by arrow a so as to push the movable cover 20 open by the side 2b of the magazine 2 in the direction shown by arrow e.

When the magazine 2 is inserted by a predetermined distance in the auto-loader 11, an auto-loading operation is carried out, i.e., the magazine 2 is automatically drawn into the magazine insertion space 13 in the direction shown by arrow a by the magazine loading mechanism which will be described below, so that the cartridge insertion port 5, the cartridge ejection port 6, and the cartridge containment port 7 of the magazine 2 are set in substantially the same plane with the cartridge port 15 of the drive 14, as shown in Fig. 1(B).

At the same time that the operation of automatically loading the magazine 2 is completed, the movable cover 20 is automatically closed by a movable cover opening/closing mechanism, which will be described below, in the direction shown by arrow f.

### [Operation of ejecting the magazine]

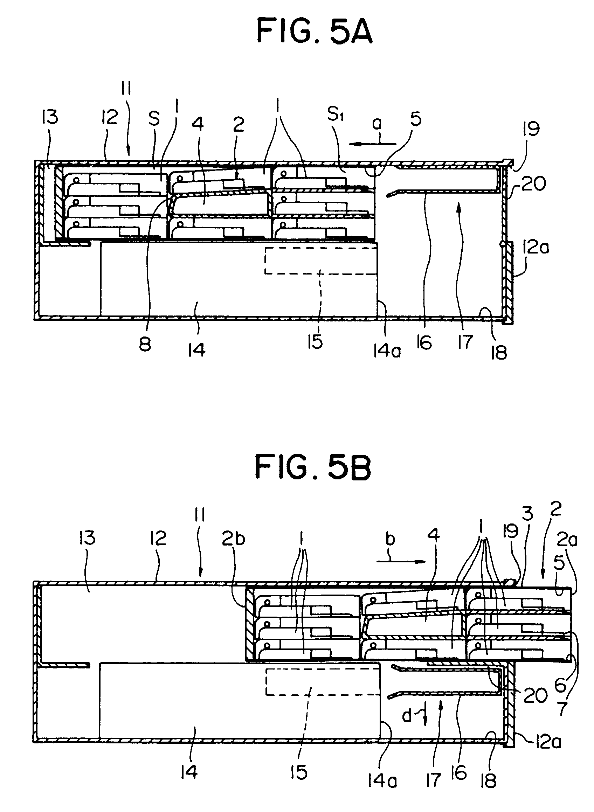

In ejection of the magazine 2 from the auto-loader 11, as shown in Fig. 5(B), when an eject button which will be described below, is pushed, or when an eject command is output from a host computer, it is first confirmed that the cartridge tray 16 of the elevator 17 is downwardly moved to the drive position in the direction shown by arrow d. After this confirmation, the movable cover 20 is automatically opened in the direction shown by arrow e. Thereafter, an auto-ejection operation is performed, i.e., the magazine 2 is automatically pushed out by a predetermined distance from the magazine insertion port 19 in the direction shown by arrow b.

When the magazine 2 is manually drawn from the magazine insertion port 19 in the direction shown by arrow b, the movable cover 20 is automatically closed in the direction shown by arrow f.

### [First operation of rotating tape cartridges in the auto-loader]

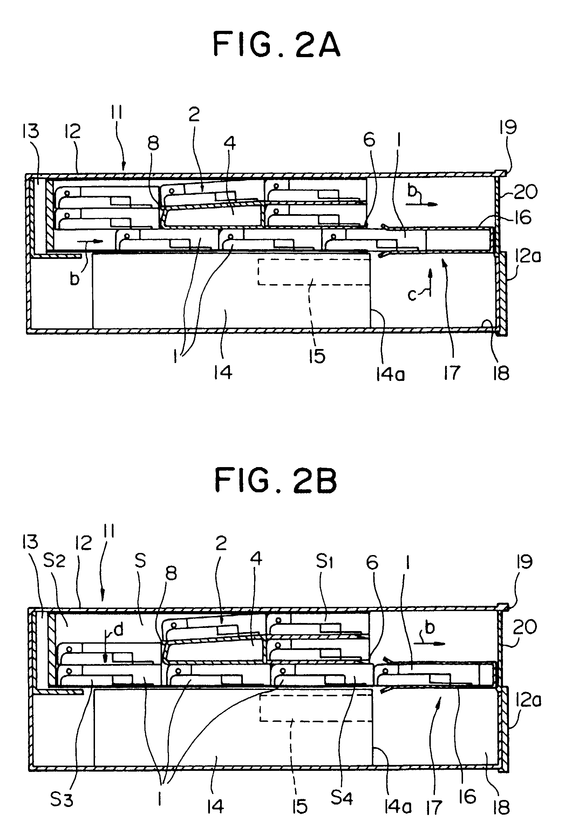

The cartridge tray 16 is first moved upward to the magazine lower stage position opposite to the cartridge ejection port 6 of the magazine 2, as shown in Fig. 2(A), from the drive position opposite to the cartridge port 15 of the drive 14, as shown in Fig. 1(B).

As shown in Fig. 2(A), when the tape cartridge 1 in third space S₃ in the magazine 2 is pushed by a first cartridge extruding mechanism, which will be described below, the three tape cartridges in the lower stage in the cartridge rotation path 8 of the magazine 2 are automatically pushed by a stroke corresponding to the length of one cartridge in the direction of arrow b, and the tape cartridge 1 contained in fourth space S₄ is horizontally pushed into the cartridge tray 16 from the cartridge ejection port 6.

The two tape cartridges 1 behind the hollow portion 4 (on the side of the point of arrow a) within the cartridge rotation path 8 of the magazine 2 are then simultaneously dropped down by a height corresponding to a difference in height between the stages, to produce a space S for one tape cartridge 1 in second space S₂ of the upper portion, as shown in Fig. 2(B).

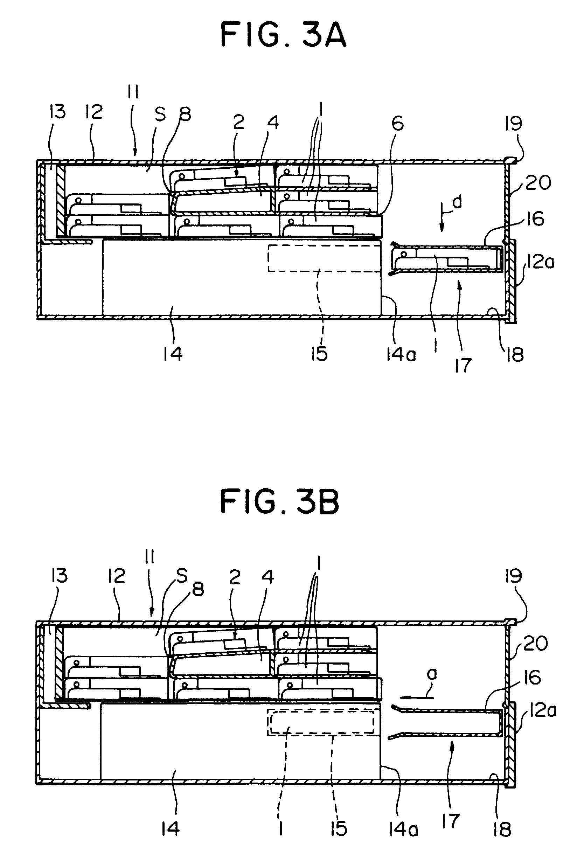

The tape cartridge 1 is then moved downward to the drive position in the direction of arrow d by the cartridge tray 16, as shown in Fig. 3(A), and the tape cartridge contained in the cartridge tray 16 is then horizontally pushed into the cartridge port 15 of the drive 14 in the direction of arrow a by a second cartridge extruding mechanism which will be described below, as shown in Fig. 3(B),

The tape cartridge 1 pushed into the drive 14 is automatically loaded in the drive 14 by a cartridge loading mechanism, which will be described below, so that desired recording or reproduction is performed, while the cartridge tray 16 is on standby at the drive position.

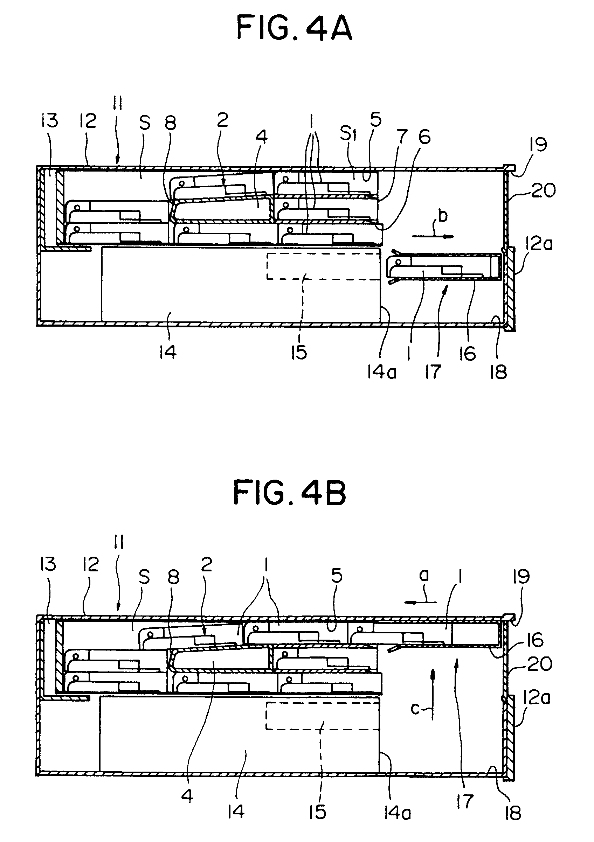

When recording or reproduction is completed, the tape cartridge 1 loaded in the drive 14 is horizontally pushed into the cartridge tray 16 from the cartridge port 15 by a cartridge ejecting mechanism in the drive 14, which will be described below, in the direction shown by arrow b, as shown in Fig. 4(A).

The tape cartridge 1, in which recording or reproduction is completed, is moved upward, by the cartridge tray 16, to the magazine upper stage position opposite to the cartridge insertion port 5 of the magazine 2 in the direction of arrow c, and then pushed into the cartridge insertion port 5 from the cartridge tray 16 by the second cartridge extruding mechanism which will be described below, in the direction of arrow a, as shown in Fig. 4(B).

The two tape cartridges 1 in the upper stage in the cartridge rotation path 8 are automatically pushed by a stroke corresponding to one tape cartridge, in the direction of arrow a, by the tape cartridge 1 which is pushed into first space S₁ from the cartridge insertion port 5 in the direction of arrow a, so that one tape cartridge 1 is contained in the space S shown in Fig. 2(B), as shown in Fig. 5(A).

Repetitions of the first rotation operation therefore permit the seven tape cartridges 1 to be successively continuously rotated (automatically changed) one by one between the magazine 2 and the drive 14 while being successively rotated by the stroke corresponding to one tape cartridge in the directions of arrows a and b within the cartridge rotation path 8 of the magazine 2, thereby permitting continuous recording and reproduction on and from the seven tape cartridges 1.

When seven tape cartridges 1 for recording computer data or the like are contained in the cartridge rotation path 8 of the magazine 2, therefore, the storage capacity of the auto-loader 11 can significantly be increased.

### [Second operation of rotating tape cartridges within the auto-loader]

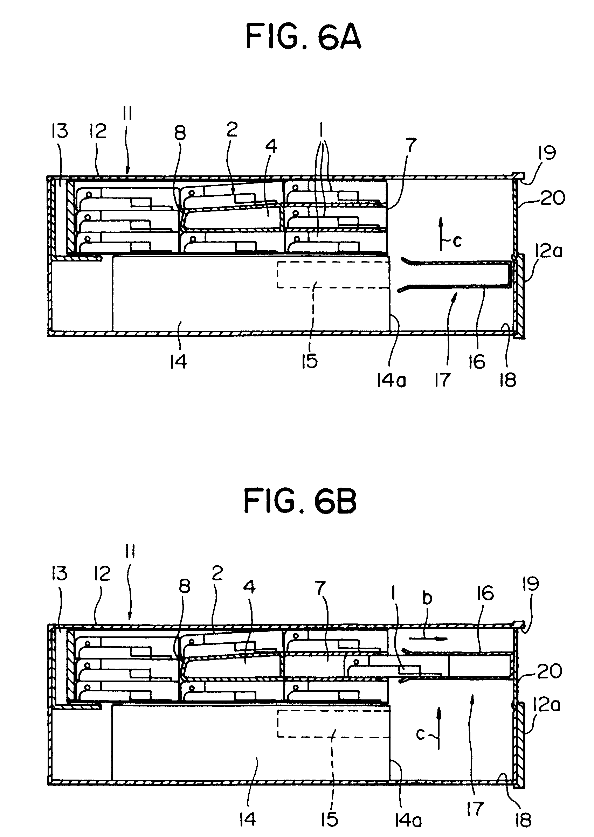

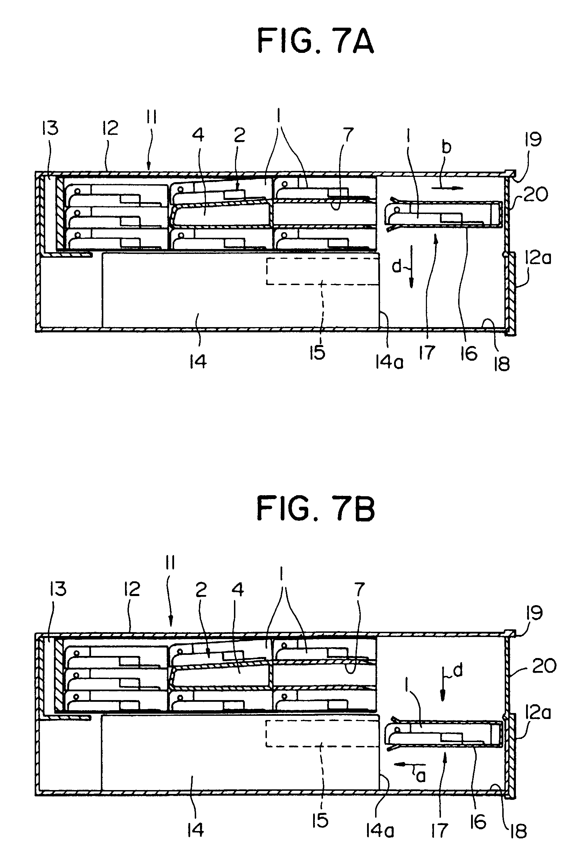

After the cartridge tray 16 is moved upward to the magazine middle stage position opposite to the cartridge containment port 7 of the magazine 2 from the drive position shown in Fig. 6(A), as shown in Fig. 6(B), only one tape cartridge 1 contained in the cartridge containment port 7 is horizontally pushed into the cartridge tray 16 in the direction of arrow b by a third cartridge extruding mechanism which will be described below, as shown in Figs. 6(B) and 7(A).

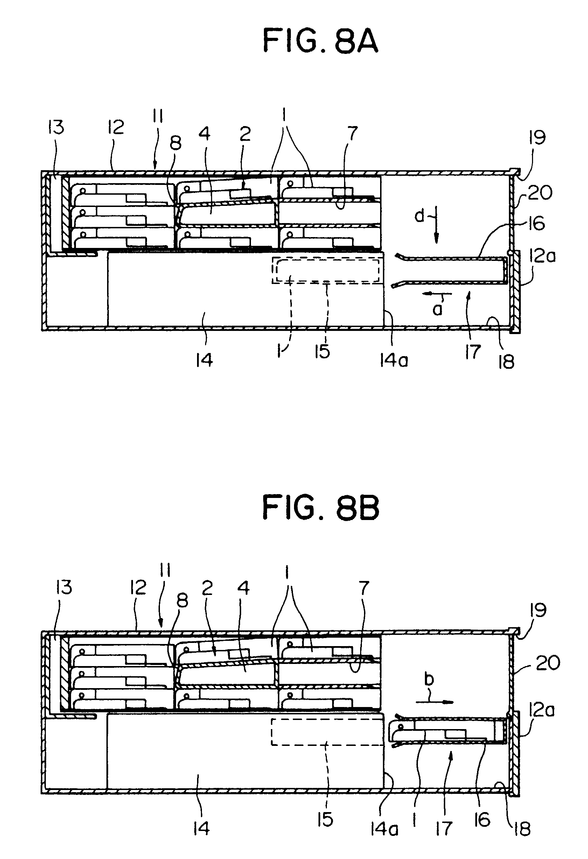

After the tape cartridge 1 is moved downward to the drive position in the direction of arrow d by the cartridge tray 16, as shown in Fig. 7(B), the tape cartridge 1 is horizontally pushed into the cartridge port 15 of the drive 14 from the cartridge tray 16 in the direction of arrow a by the same method as described above, as shown in Fig. 8(A), to be automatically loaded in the drive 14 for performing desired recording or reproduction.

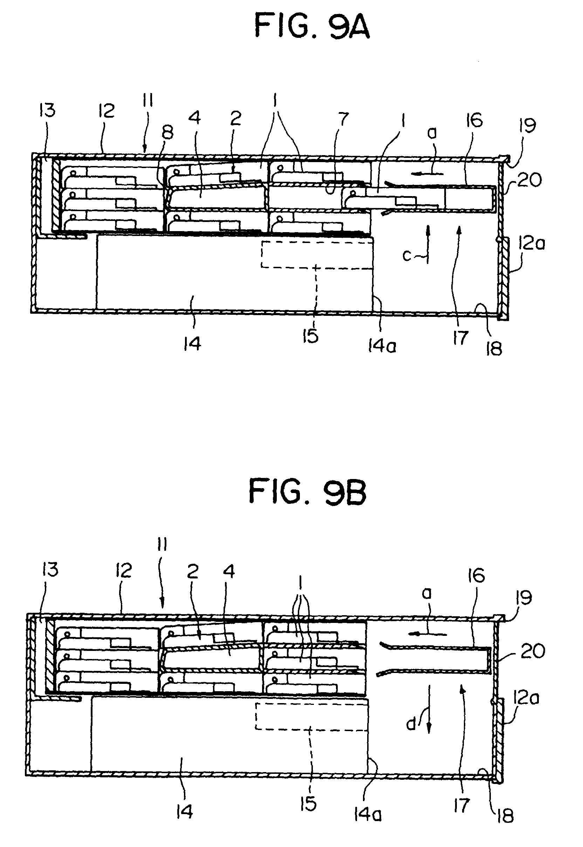

After recording or reproduction is completed, the tape cartridge 1 is horizontally pushed into the cartridge tray 16 from the cartridge port 15 of the drive 14 in the direction of arrow b by the same method as described above, as shown in Fig. 8(B), and is then moved upward to the magazine middle stage position by the cartridge tray 16 in the direction of arrow c, as shown in Fig. 9(A). The tape cartridge 1 is then horizontally pushed into the cartridge containment port 7 of the magazine 2 from the cartridge tray 16 in the direction of arrow a to be returned, as shown in Figs. 9(A) and (B), and the cartridge tray 16 is again moved downward to the drive position in the direction of arrow d.

The second rotation operation permits only one tape cartridge to be rapidly rotated between the magazine 2 and the drive 14.

If a special tape cartridge for an index or cleaning is contained in the cartridge containment port 7 of the magazine 2, the special tape cartridge 1 can rapidly be rotated between the magazine 2 and the drive 14, thereby permitting high-speed processing of the auto-loader 11.

Although not shown in the drawings, when it is desired selectively to eject and supply to the drive 14 a tape cartridge 1 at a position within the cartridge rotation path 8 other than the cartridge ejection port 6 of the magazine 2, the tape cartridges 1 are successively transferred from the cartridge ejection port 6 to the cartridge insertion port 5 while cartridge tray 16 is moved upward and downward in the directions shown by arrows c and d between the cartridge ejection port 6 and the cartridge insertion port 5, so that the tape cartridges 1 are rotated in the directions shown by arrows a and b within the cartridge rotation path 8.

### [Method of controlling a position where a tape cartridge is extruded into the elevator]

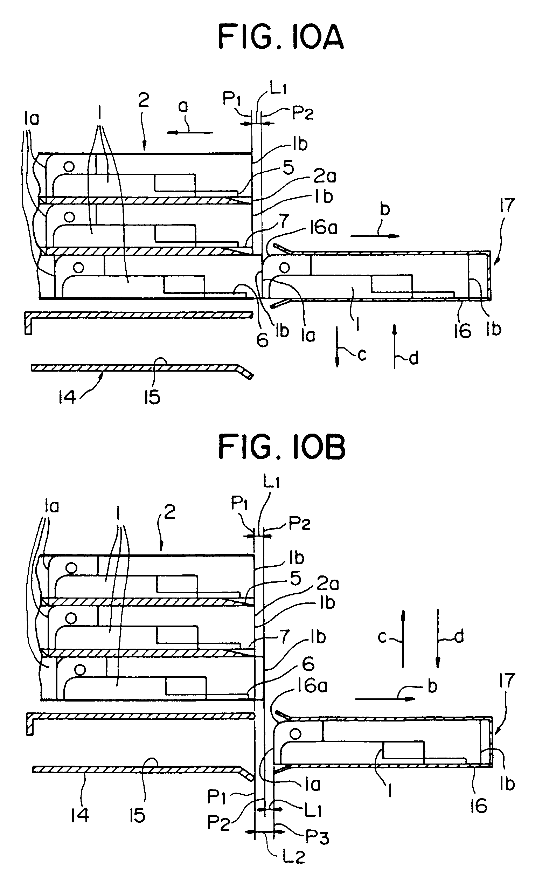

The method of controlling the extrusion position in extruding a tape cartridge into the elevator from the magazine and the drive of Figs. 1A to 9B is described below with reference to Figs. 10A and 10B.

As shown in Figs. 10(A) and (B), the tape cartridges 1 are respectively inserted into the cartridge insertion port 5 and the cartridge containment port 7 of the magazine 2 with the front ends 1a thereof at the head in the direction of arrow a. The tape cartridge 1 is pushed into the cartridge tray 16 of the elevator 17 from the cartridge ejection port 6 of the magazine 2 with the rear end 1b thereof at the head in the direction of arrow b.

The insertion position of the rear end 1b of the tape cartridge inserted into each of the cartridge insertion port 5 and the cartridge containment port 7 of the magazine 2 in the direction of arrow a is set to a reference position P₁ on substantially the same plane with the side 2a of the magazine 2, as shown in Fig. 10(A).

The extrusion position P₂ of the front end 1a of the tape cartridge 1 to be extruded into the cartridge tray 16 from the cartridge ejection port 6 of the magazine 2 in the direction of arrow b is set to a first extrusion position P₂ at a distance L₁ of about 1.5 mm, corresponding to one step, from the reference position P₁ in the direction of extrusion of the cartridges (the direction shown by arrow b), as shown in Fig. 10(A).

The extrusion position P₃ of the front end 1a of the tape cartridge 1 to be extruded into the cartridge tray 16 from the cartridge port 15 of the drive 14 and the cartridge containment port 7 of the magazine 2 in the direction of arrow b is set to a second extrusion position P₃ at a distance L₁ + L₁ corresponding to two steps from the reference position P₁ in the direction of extrusion of the cartridge (the direction of arrow b), as shown in Fig. 10(B).

Namely, the extrusion position P₃ of the front end 1a of the tape cartridge 1 to be extruded into the cartridge tray 16 from the cartridge port 15 and the cartridge containment port 7 is displaced to distance L₂ equal to 2L₁ (2L₁ = L₁ + L₁) from the reference position P₁ in the direction of arrow b.

In this way, when the tape cartridges 1 are respectively extruded into the cartridge tray 16 from the cartridge ejection port 6 of the magazine 2 and the cartridge port 15 of the drive 14 in the direction of arrow b, the front ends 1a of the tape cartridges 1 are controlled to the extrusion position P₁ displaced to a position at distance L₁ corresponding to one step, and the extrusion position P₃ displaced to a position at distance 2L₁ corresponding to two steps, respectively, from the reference position P₁ in the direction of arrow b. When the tape cartridge 1 pushed back into the cartridge tray 16 from the cartridge port 15 of the drive 14 in the direction of arrow b is moved upward in the direction of arrow c and returned into the cartridge insertion port 5 and the cartridge containment port 7 of the magazine 2, or when the tape cartridge 1 is moved upward from the cartridge ejection port 6 of the magazine 2 to the cartridge insertion port 5 thereof by the cartridge tray 16, it is possible to prevent mutual interference between the rear end 1b of the tape cartridge 1 positioned in the cartridge ejection port 6 and the front end 1a of the tape cartridge 1 moved upward in the direction of arrow c by the cartridge tray 16, thereby permitting the safe operation of rotating the tape cartridges 1.

### [Description of the magazine]

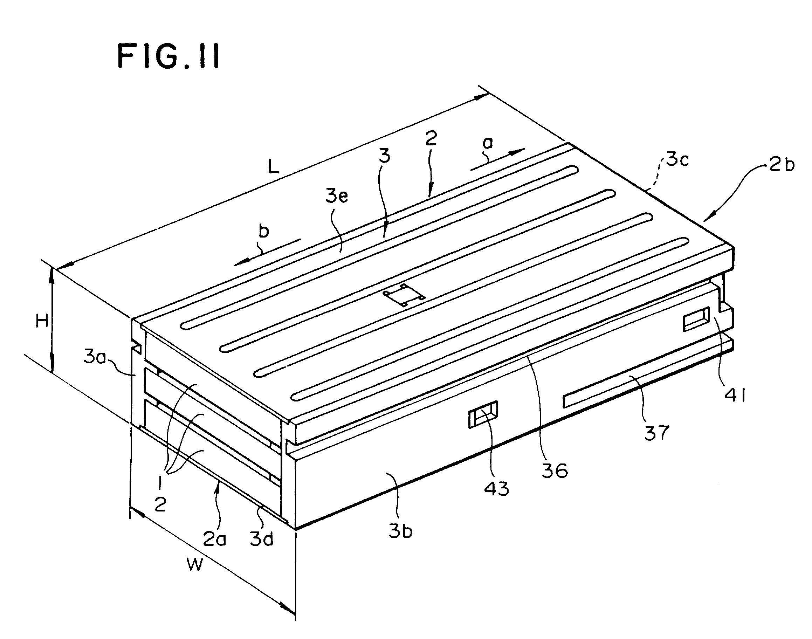

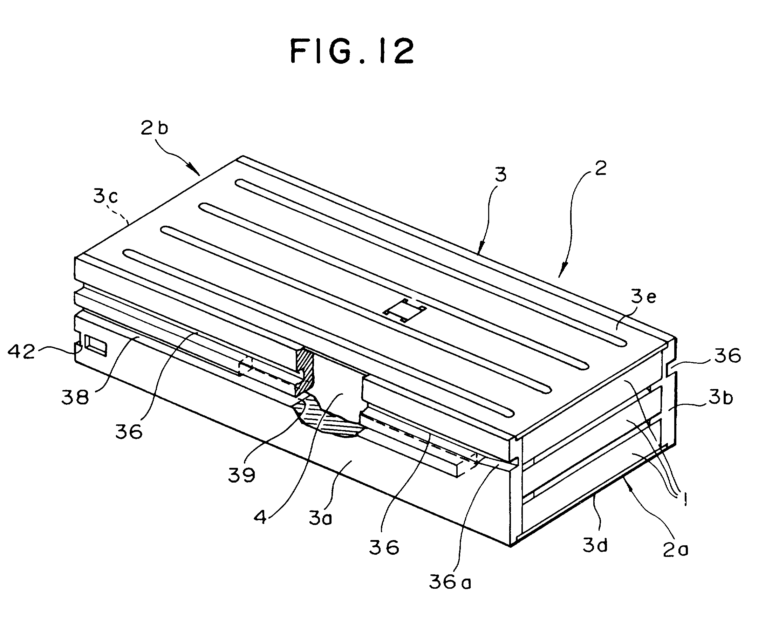

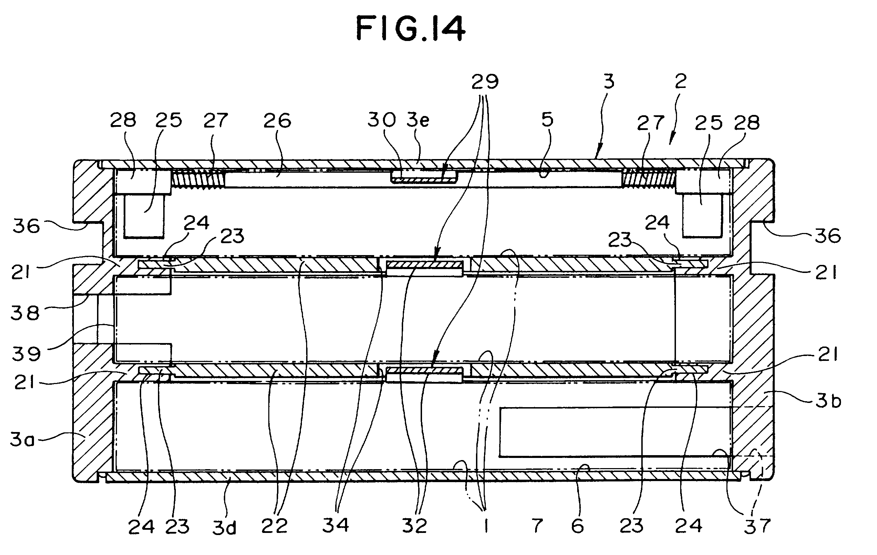

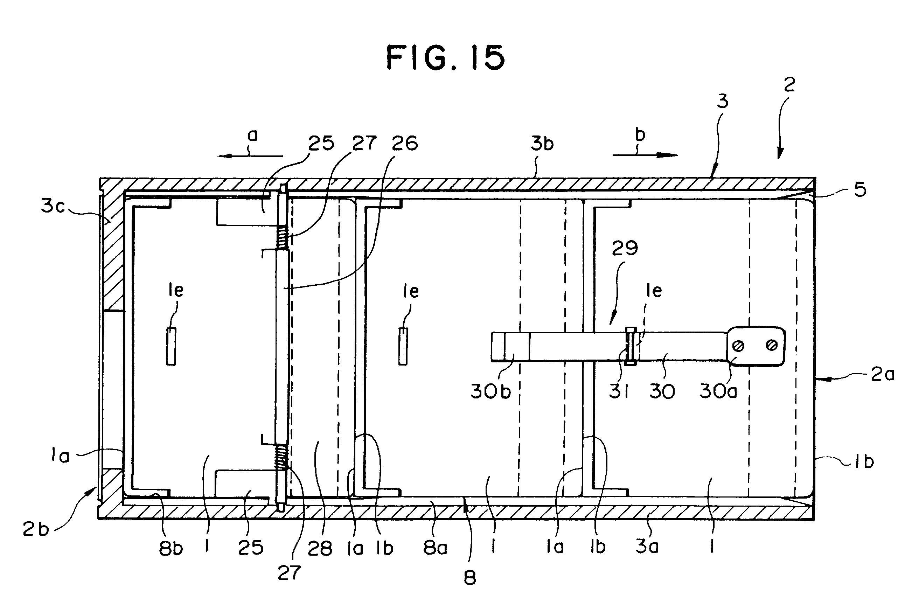

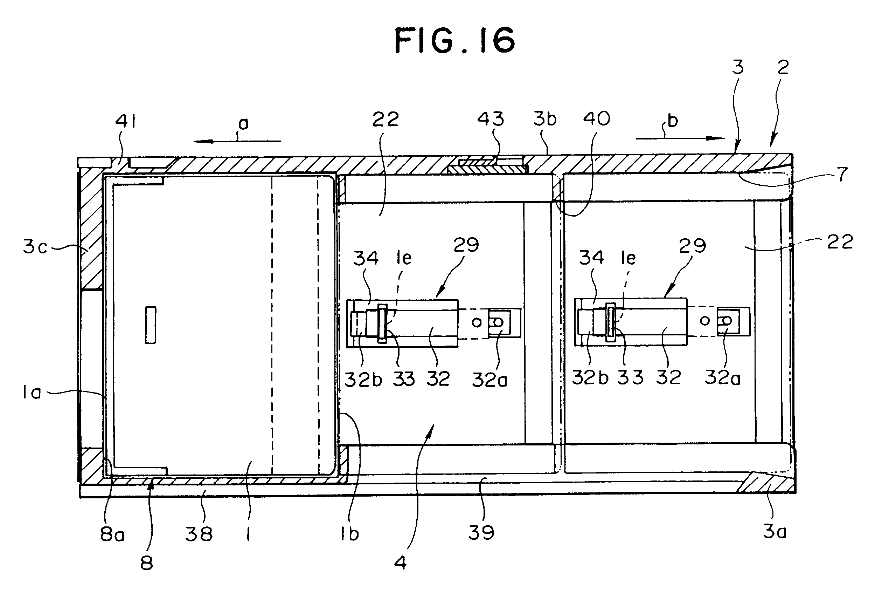

A preferred embodiment of the magazine is described below with reference to Figs. 11 through 17.

The magazine 2 has a magazine body 3 which is formed as a substantially rectangular parallelepipedic box and, in this example, has outside dimensions including a height H of 39 mm, a width W of 83 mm and a length L of 168 mm.

The magazine body 3 comprises left and right side plates 3a and 3b which are made of a synthetic resin plate having an appropriate thickness, and a back plate 3c, a bottom plate 3d and a top plate 3e which are made of a thin metallic plate such as a stainless plate or the like. These left and right side plates 3a and 3b, the back plate 3c, the bottom plate 3d and the top plate 3e are disassemblably assembled by an engagement structure and screwing.

A pair of guide ribs 21 having a flat and substantially prismatic form are integrally respectively formed on the opposite inner surfaces of the left and right side plates 3a and 3b at substantially the center thereof in the lengthwise direction (the directions of arrows a and b) and the vertical direction (the directions of arrows c and d). The hollow portion 4 having a volume corresponding to substantially one tape cartridge is formed between the pair of the right and left guide ribs 21.

The lengthwise side 2a of the magazine body 3 is completely open, and three horizontal partition plates 22 are provided at a total of three positions, i.e., two positions corresponding to the upper and lower sides of the hollow portion 4 between the side 2a and the hollow portion 4, and the position of the lower side of the hollow portion, between the left and right side plates 3a and 3b. Each of the partition plates 22 comprises a thin synthetic resin plate, and is detachably placed between the left and right side plates 3a and 3b by a structure of engagement between the left and right ends thereof and left and right side plates using a plurality of dowels 23 and slits 24.

On the side 2a of the magazine body 3, the cartridge insertion port 5 is formed between the top plate 3e and the upper partition plate 22, the cartridge containment port 7 is formed between the upper and lower partition plates 22, and the cartridge ejection port 6 is formed between the lower partition plate 22 and the bottom plate 3d.

A vertical path 8b is formed in the vertical space between the hollow portion 4 and the back plate 3c in the magazine body 3. The substantially U-shaped cartridge rotation path 8, which is formed around the hollow portion 4 in the directions shown by arrows a, d and b, comprises a upper horizontal path 8a extending from the cartridge insertion port 5 to the upper portion of the vertical path 8b through the portion above the hollow portion 4, the vertical path 8b, and a lower horizontal path 8c extending from the lower portion of the vertical path 8b to the cartridge ejection port 6 through the portion below the hollow portion 4.

Each of the upper surfaces of the pair of the left and right guide ribs 21, which form the upper side of the hollow portion 4, comprises an inclined surface 21a inclined downward in the direction shown by arrow a, and a pair of left and right cartridge depressing levers 25 are provided on the upper portion of the vertical path 8b.

The pair of the left and right cartridge depressing levers 25 are provided, at both ends of a fulcrum shaft 26 horizontally placed between the left and right side plates 3a and 3b, so as to be rotatable in the directions shown by arrows g and h, and are urged by a pair of springs 27 so as to be rotated in the direction shown by arrow g. A pair of left and right cartridge guides 28 which also respectively serve as stoppers for regulating the rotation angles of the pair of the left and right cartridge depressing levers 25 are fixed to the lower side of the top plate 3e.

A total of four cartridge positioning mechanisms 29 for respectively positioning the tape cartridges 1 are provided at four positions including positions in the cartridge insertion port 5, the cartridge ejection port 6 and the cartridge containment port 7, and a lower position in the hollow portion 4.

An end 30a of the cartridge positioning mechanism 29 provided in the cartridge insertion port 5 in the direction of arrow b is fixed to the lower side of the top plate 3e, the other end 30b in the direction of arrow a comprising a long plate spring 30 which is engaged with the top plate 3e so as to be slidable in the directions shown by arrows a and b, and an engaging claw 31 serving as an engaging portion integrally formed substantially at the center of the plate spring 30 in the lengthwise direction thereof. The engaging claw 31 of the plate spring 30 can vertically be moved in the directions shown by arrows c and d within a narrow space between the top plate 3e and the upper side 1c of the cartridge 1. The engaging claw 31 has the directional property which allows the tape cartridge 1 to pass in the direction of arrow a, but inhibits the reverse movement in the direction shown by arrow b.

The ends 32a of the total of the three cartridge positioning mechanisms 29 in the direction shown by arrow b, which are provided in the cartridge ejection port 6 and the cartridge containment port 7 and at the lower position of the hollow portion 4, are respectively fixed to the three partition plates 22, each of the other ends 32b in the direction shown by arrow a comprising a short plate spring 32 which is vertically movable in the directions shown by arrows c and d, and an engaging roller 33 serving as an engaging portion which is rotatably provided at a position near the other end 32a of the plate spring 32. The plate spring 32 and the engaging roller 33 can vertically be moved in the directions shown by arrows c and d within the opening 34 formed in each of the partition plates 22.

Each of the engaging claw 31 and the engaging rollers 33 of the cartridge positioning mechanisms 29 is elastically downwardly engaged in a recessed portion 1e which serves as an engaged portion and which is formed at the central portion of the upper side 1c of each of the tape cartridges 1 near the front end 1a thereof, so as to position each of the tape cartridges 1 at the above-described position.

A pair of left and right horizontal guide grooves 36 are respectively formed along the upper ends of the left and right side plates 3a and 3b, which form the left and right lateral sides of the magazine body 3 in the widthwise direction thereof, so as to extend lengthwise between both sides 2a and 2b. In order to prevent error in insertion of the magazine into the auto-loader 11, the end 36a of one of the guide grooves 36 on the side of the point of arrow a, which is formed in the side plate 3a, is tapered.

A first slit opening 37 is formed at the same height as the cartridge ejection port 6 by cutting the side plate 3b from the lower end of the back plate 3c of the magazine body 3 along the lower end of the side plate 3b in the direction shown by arrow b. A guide groove 38 is formed in the other side plate 3a of the magazine body 3 so as to extend from the other side 2b in the direction shown by arrow b at the same height as the cartridge containment port 7. The guide groove 38 has a second slit opening 39 extending from the hollow portion 4 to the cartridge containment port 7. A slit-like notch 40 is formed at the end of the hollow portion 4 in the direction of arrow b at the same height as the second opening 39.

First and second locked portions 41 and 42 which respectively comprise projections are formed at the ends of the left and right side plates 3a and 3b of the magazine body 3 on the side of the other side 2b. An erasing error detecting means 43 comprising a sliding claw or the like for detecting erasing error of the eight tape cartridges 1 contained in the magazine 2 is provided at substantially the center of the side plate 3b.

### [Operation of setting tape cartridges in the magazine]

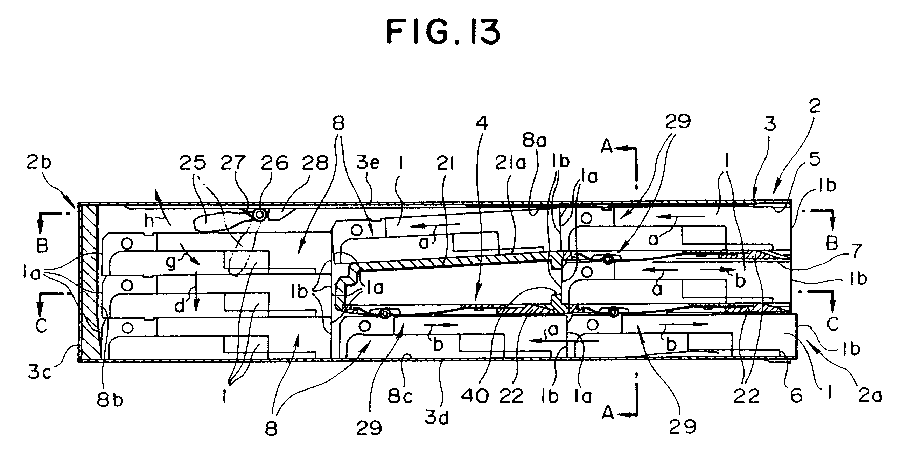

The operation of setting the total of eight tape cartridges 1 in the preferred embodiment of magazine 2 is described below with reference to Figs. 13 through 17.

In a normal state wherein the upper and lower sides 1c and 1d of each of the tape cartridges 1 are vertically correctly positioned, the front ends 1a of the five tape cartridges 1 are successively inserted into the cartridge insertion port 5 of the upper horizontal path 8a of the cartridge rotation path 8 in the direction shown by arrow a. As a result, the tape cartridges 1 are successively pushed into the upper horizontal path 8a in the direction shown by arrow a against the plate spring 30 of the cartridge positioning mechanism 29 in the upper horizontal path 8a.

At this time, since the upper surface of the hollow portion 4 comprises the inclined surface 21a downwardly inclined in the direction shown by arrow a, the tape cartridges 1 can smoothly be moved within the upper horizontal path 8a in the direction shown by arrow a.

The preceding three tape cartridges 1 are successively entered in the upper portion of the vertical path 8b from the upper horizontal path 8a, and vertically successively pushed downward into the vertical path 8b in the direction shown by arrow d by the action of the pair of the left and right cartridge guides 28 to obliquely downwardly guide the tape cartridges 1, and the action of the coil springs 27 of the pair of the left and right cartridge depressing levers 25 to push the tape cartridges 1 in the downward direction shown by arrow g. These three tape cartridges 1 are vertically stacked and contained in the vertical path 8b.

The succeeding two tape cartridges 1 are respectively contained in the portion above the hollow portion 4 and in the cartridge insertion port 5 within the upper horizontal path 8a. At this time, the engaging claw 31 of the plate spring 30 which constitutes the upper cartridge positioning mechanism 29 is elastically downwardly engaged in the recessed portion 1e of the tape cartridge 1 contained in the cartridge insertion port 5 so that the tape cartridge 1 is correctly positioned in the cartridge insertion port 5 and inhibited from falling off from the cartridge insertion port 5 in the direction shown by arrow b. The tape cartridge 1 contained in the portion above the hollow portion 4 is positioned by holding the front and rear ends 1a and 1b thereof between the front end 1a of the tape cartridge 1 contained in the cartridge insertion port 5 and the rear end 1b of the tape cartridge 1 contained in the upper portion of the vertical path 8b.

In the normal state wherein the upper and bottom sides 1c and 1d of each of the tape cartridges 1 are correctly vertically positioned, the front ends 1a of the two tape cartridges 1 are successively inserted into the cartridge ejection port 6 of the lower horizontal path 8c of the cartridge rotation path 8 in the direction shown by arrow a. As a result, the two tape cartridges 1 are successively pushed into the lower horizontal path 8c against the plate springs 32 and the engaging rollers 33 of the two cartridge positioning mechanism 29 within the lower horizontal path 8c, and the engaging rollers 33 are respectively elastically engaged downward in the recessed portions 1e of the two tape cartridges 1, to respectively correctly position the two tape cartridges 1 in the portion below the hollow portion 4 and in the cartridge ejection port 6.

At this time, the three tape cartridges 1 may be first successively inserted into the lower horizontal path 8c and the lower portion of the vertical path 8b in the cartridge rotation path 8 from the cartridge ejection port 6 in the direction shown by arrow a. The four tape cartridges 1 may be then inserted into the upper horizontal path 8a and the vertical path 8b from the cartridge insertion port 5.

In this way, the total of seven tape cartridges 1 can be contained in the upper horizontal path 8a, the vertical path 8b and the lower horizontal path 8c of the cartridge rotation path 8.

The front end 1a of the remaining tape cartridge 1 in the normal state is then inserted into the cartridge containment port 7 in the direction shown by arrow a in the same manner as described above, and the engaging roller 33 of the plate spring 32 of the cartridge positioning mechanism 29 is elastically downwardly engaged in the recessed portion 1e of the tape cartridge 1 to position the tape cartridge 1. Thus, the operation of setting the total of eight tape cartridges in the magazine 2 can be completed.

The magazine 2 is characterized in that the total of eight tape cartridges 1 can rapidly smoothly be set in the magazine 2 only by the simple operation of successively inserting, in the direction shown by arrow a, the total of eight tape cartridges 1 into the vertical three-stage openings formed on the side 2a, i.e., the cartridge insertion port 5, the cartridge ejection port 6 and the cartridge containment port 7.

### [Operation of rotating tape cartridges within the magazine]

The operation of rotating the seven tape cartridges 1 within the cartridge rotation path 8 of the preferred embodiment of magazine 2 is described below with reference to Figs. 2 through 5 and Fig. 13.

When a tape cartridge 1 is pushed into the cartridge tray 16 from the cartridge ejection port 6 of the magazine 2 in the direction shown by arrow b, as described above with reference to Fig. 2(A), the front end 1a of the tape cartridge 1 in the lower stage of the vertical path 8b is horizontally pushed in the direction shown by arrow b by the extrusion operation of the first cartridge extruding mechanism, which will be described below, in the direction of arrow b, to simultaneously push out the total of three tape cartridges 1 contained in the lower stage of the vertical path 8b and the lower horizontal path 8c by a stroke corresponding to one tape cartridge in the direction of arrow b. At this time, the two engaging rollers 33 in the lower horizontal path 8c are upwardly separated from the recessed portions 1e of the two tape cartridges 1 against the plate springs 31 to push out the tape cartridges 1 in the direction of arrow b.

The two tape cartridges 1 in the vertical path 8b are simultaneously and horizontally dropped down by a step corresponding to one tape cartridge in the direction shown by arrow d within the vertical path 8b by the return operation of the first cartridge extruding mechanism, which will be described below, in the direction of arrow a, and the dropping operation accompanied with the force of the coil springs 27 of the pair of the left and right cartridge depressing levers 25 to push the tape cartridges 1 in the downward direction shown by arrow g, as described above with reference to Fig. 2(B), to generate the space S for one tape cartridge 1 in the upper portion of the vertical path 8b.

As described above with reference to Figs. 4(B) and 5(A), the tape cartridge 1 is then pushed into the cartridge insertion port 5 of the magazine 2 from the cartridge tray 16 in the direction shown by arrow a to insert the three tape cartridges 1 in the upper horizontal path 8a and the upper portion of the vertical path 8b against the plate spring 30 of the cartridge positioning mechanism 29 in the upper horizontal path 8a, thereby loading the tape cartridge 1 in the space S.

As a result, the tape cartridges 1 are rotated by an amount corresponding to one tape cartridge in the directions of arrows a, d and b within the cartridge rotation path 8. When this operation is repeated seven times, the total of the seven tape cartridges 1 can be rotated in a cycle within the cartridge rotation path 8. As described above, one tape cartridge 1 is simply moved in and out of the cartridge containment port 7 against the engaging roller 33 and the plate spring 32 of the cartridge positioning mechanism 29 in the directions shown by arrows a and b.

### [Modified embodiment of the magazine]

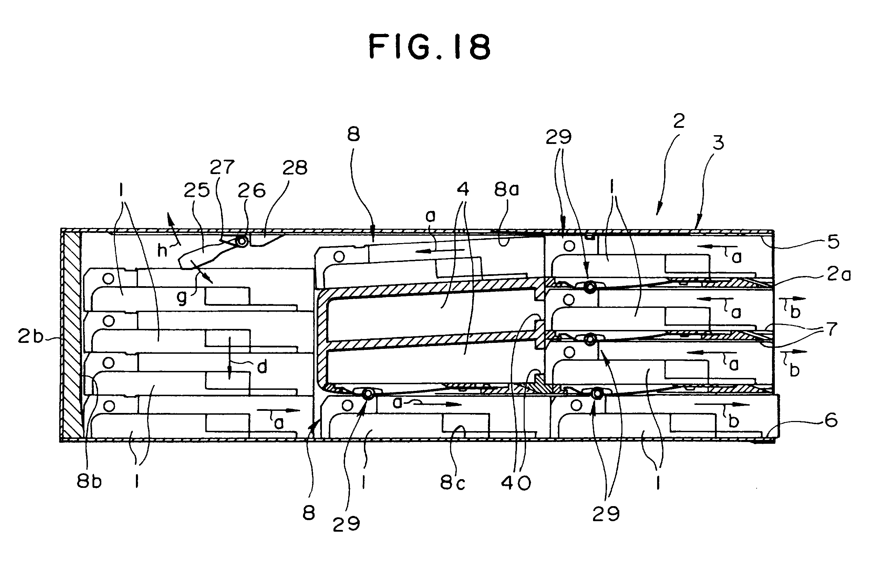

A modified embodiment of the magazine is described below with reference to Fig. 18.

This magazine 2 comprises a cartridge insertion port 5, a cartridge ejection port 6, and cartridge containment ports 7 in upper and lower stages, which are disposed between the cartridge insertion port 5 and the cartridge ejection port 6 so that four tape cartridges 1 can vertically be stacked and contained in the vertical path 8b of the cartridge rotation path 8. This permits the containment of eight tape cartridges 1 in the cartridge rotation path 8, and the containment of a total of ten tape cartridges 1 including the two tape cartridges 1 contained in the cartridge containment ports 7 in the upper and lower stages, thereby significantly increasing the storage capacity of the auto-loader 11.

### [Outline of the auto-loader]

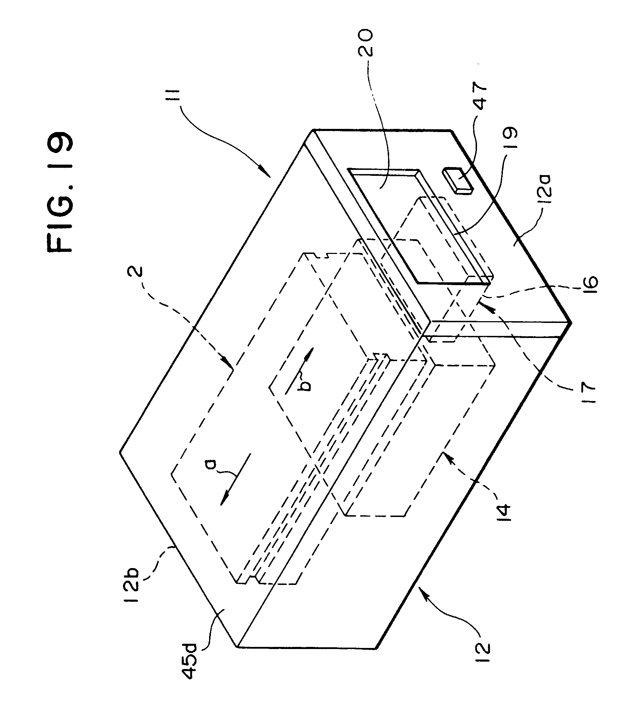

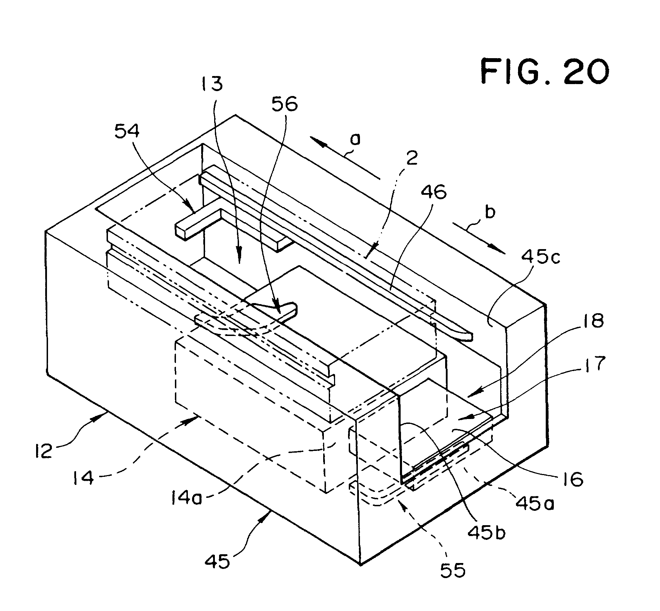

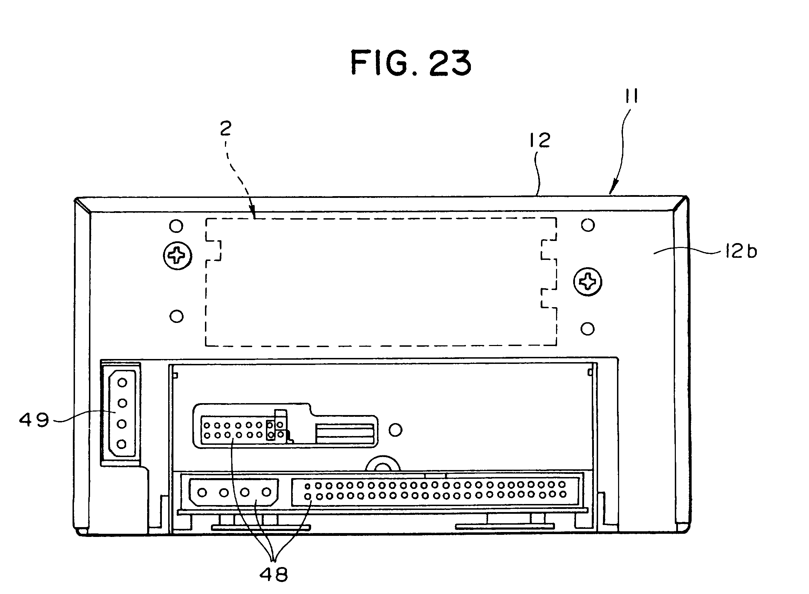

A preferred embodiment of the auto-loader is outlined with reference to Figs. 19 through 23.

An auto-loader 11 comprises an auto-loader body 12 which is formed as a substantially rectangular parallelepipedic box, in this example the auto-loader body 12 has the outside dimensions of a height H₁₀ of 82.5 mm, a width W₁₀ of 146.05 mm and a length L₁₀ of 243.2 mm.

A chassis 45 of the auto-loader body 12 is made of a sheet metal, and has a substantially U-shaped form comprising a horizontal bottom chassis 45a, and left and right side chassis 45b and 45c which are vertically formed at the respective sides of the bottom chassis 45a. The upper side and the left and right sides of the left and right side chassis 45b and 45c are covered with a substantially U-shaped top plate 45d, and the front side is closed by a front panel 12a made of a synthetic resin or the like to form a box.

A horizontal long magazine insertion space 13 is formed in an upper portion between the left and right side chassis 45b and 45c, and a magazine insertion port 19 is formed at the center of the upper portion of the front panel 12a in front of the magazine insertion space 13 (on the side of the point of arrow b) opposite thereto, a movable cover 20 made of a synthetic resin being provided on the inside of the front panel 12a so as to open the magazine insertion port 19 from the inside thereof.

The magazine 2 which is horizontally inserted from the magazine insertion port 19 in the direction shown by arrow a is guided by a pair of left and right guide rails 46 which are respectively horizontally provided on the insides of the left and right side chassis 45b and 45c and which respectively engage with the magazine's pair of left and right guide grooves 36, and the magazine 2 is then drawn into the magazine insertion space 13 to be set therein. A drive 14 is horizontally provided on the bottom chassis 45a below the magazine insertion space 13, and a cartridge tray 16 of an elevator 17 is horizontally disposed in a vertical tray elevating space 18 which is formed between the front side 14a of the drive 14, a side 2a of the magazine 2 set in the magazine insertion space 13, and the front panel 12a.

An eject button 47 is provided on the front panel 12 of the auto-loader 12. An interface 48, a power supply connector 49, etc. for connection with a computer (CPU) are provided on a rear panel 12b of the auto-loader body 12.

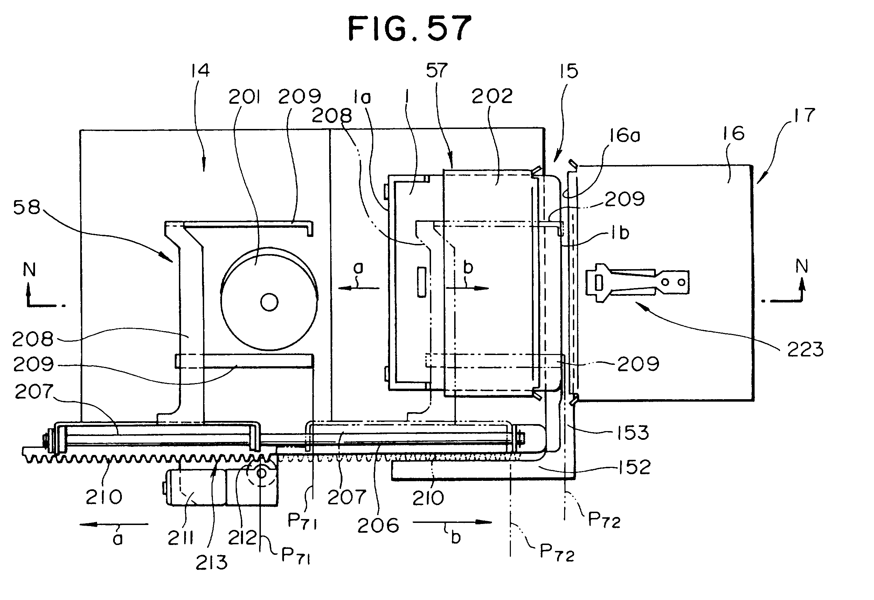

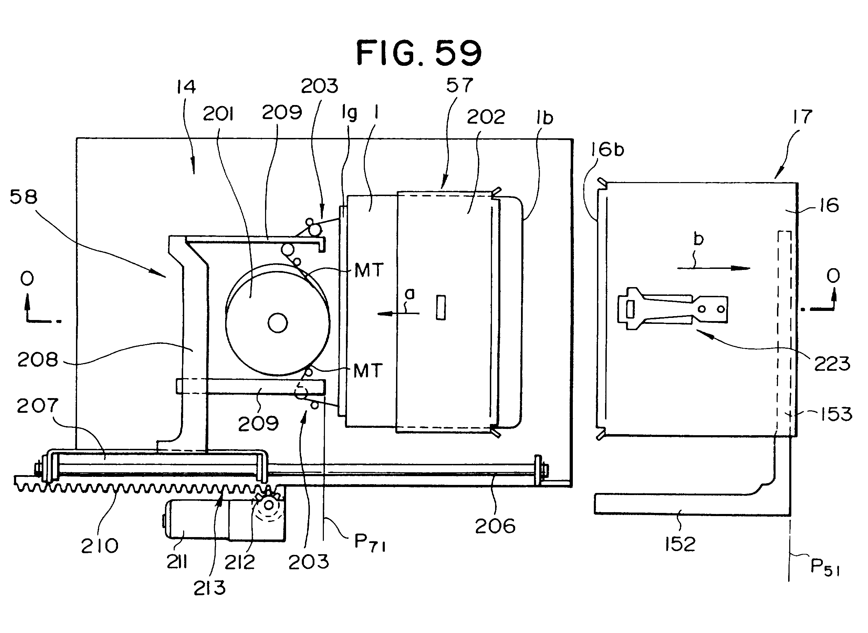

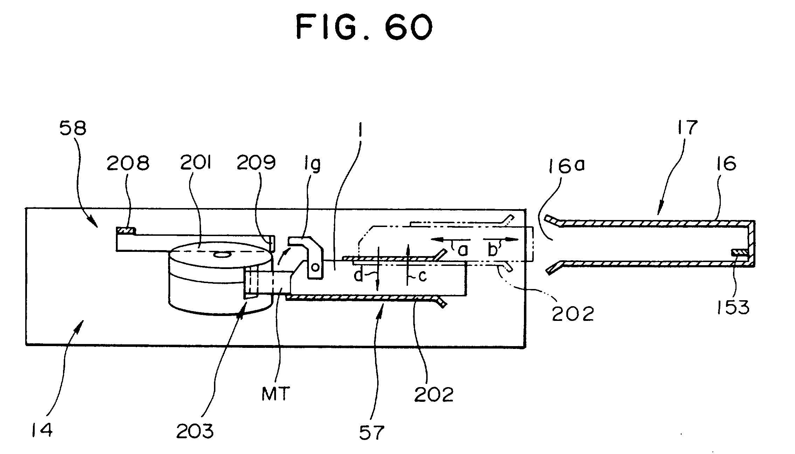

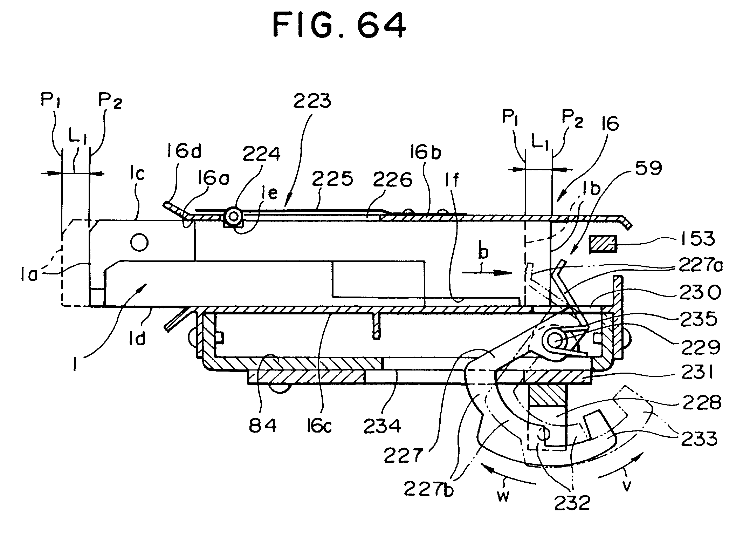

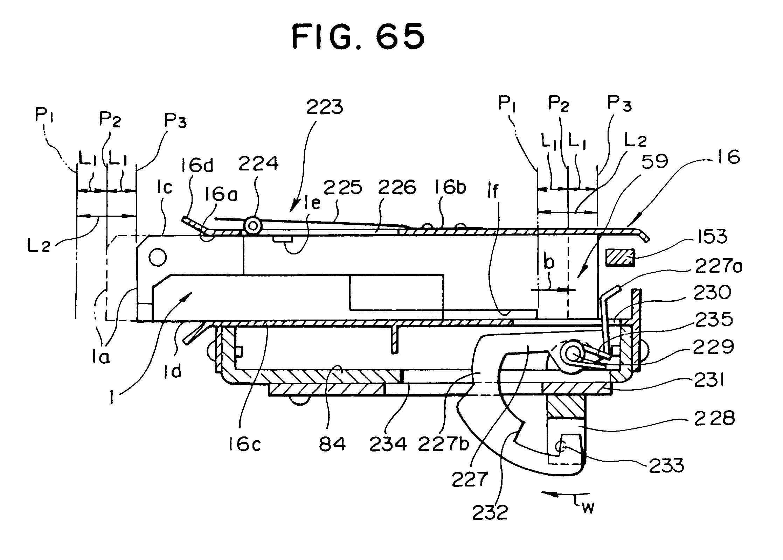

In the auto-loader body 12, are provided a magazine loading mechanism 51 for loading and ejecting the magazine 2 into and from the magazine insertion space 13 in the directions shown by arrows a and b, a tray elevating mechanism 52 for moving upward and downward the cartridge tray 16 of the elevator 17 in the elevator space 18 in the directions shown by arrows c and d, a movable cover opening/closing mechanism 53 for opening and closing the movable cover 19 in the directions shown by arrows e and f, a first cartridge extruding mechanism 54 for extruding the tape cartridge 1 into the cartridge tray 16 from the cartridge ejection port 6 of the magazine 2 in the direction shown by arrow b, a second extruding mechanism 55 for extruding the tape cartridge 1 into the cartridge port 15 of the drive 14 and the cartridge insertion port 5 and the cartridge containment ports 7 of the magazine 2 from the cartridge tray 16 in the direction shown by arrow a, a third cartridge extruding mechanism 56 for extruding the tape cartridge 1 into the cartridge tray 16 from the cartridge containment port of the magazine 2 in the direction shown by arrow b, a cartridge loading mechanism 57 (shown in Figs. 57-60) provided in the drive 14, a cartridge ejecting mechanism 58 for ejecting the tape cartridge 1 into the cartridge tray 16 from the cartridge port 15 of the drive 14 in the direction shown by arrow b, and a cartridge positioning mechanism 59 (shown in Figs. 64 and 65) for positioning the tape cartridge 1 in the cartridge tray 16.

### [Description of the magazine loading mechanism]

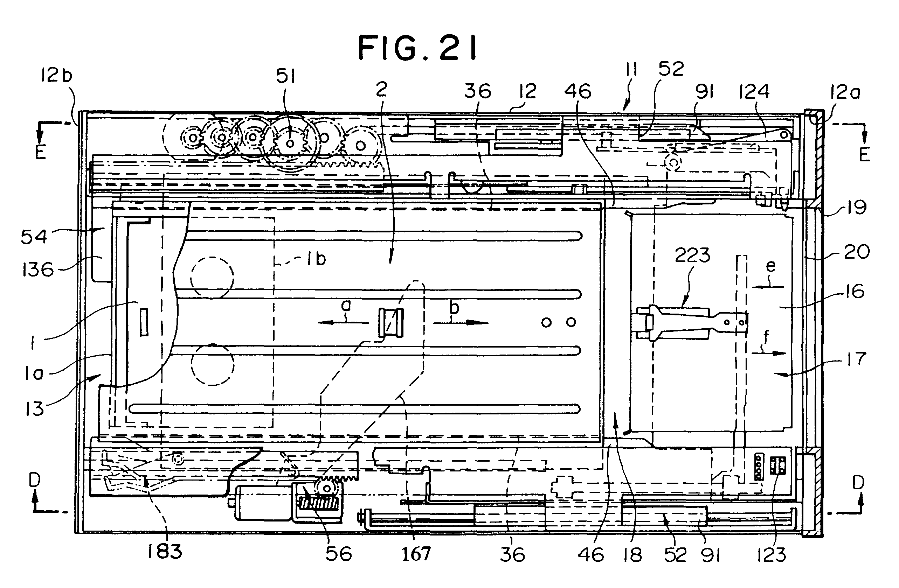

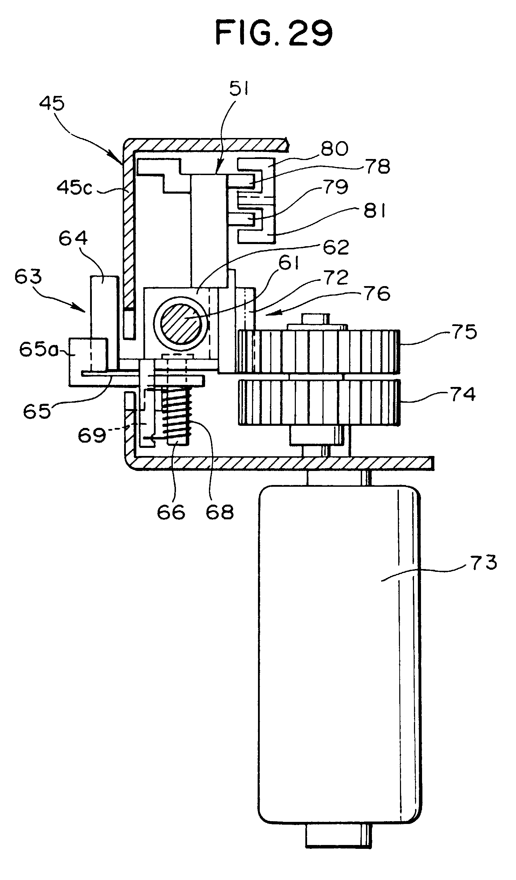

The magazine loading mechanism 51 is described below with reference to Figs. 21, 25 through 30 and 72.

The magazine loading mechanism 51 comprises a horizontal guide shaft 61 provided in parallel with the magazine insertion space 13 on the outside (the outside relative to the magazine insertion space 13) of one of the side chassis 45b and 45c of the chassis 45, and a slider 62 serving as a slide driving member which is slid along the guide shaft 61 in the directions shown by arrows a and b.

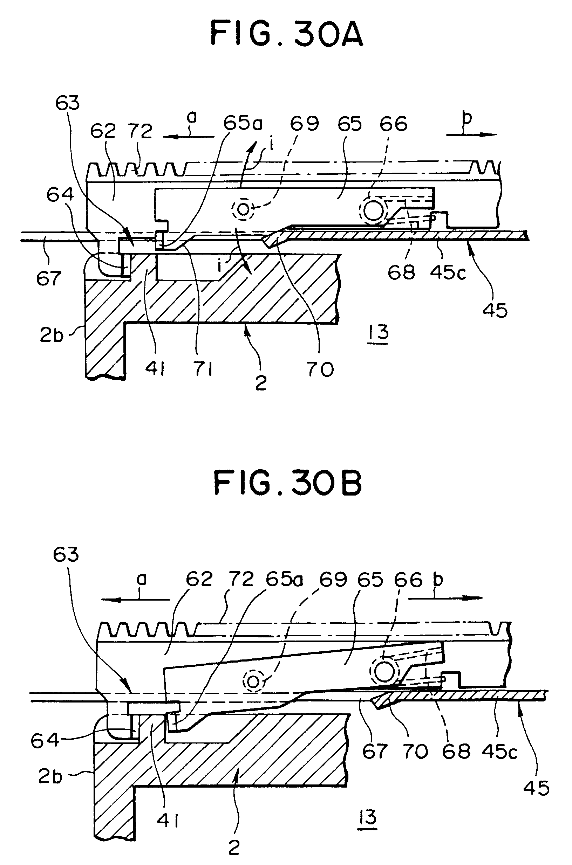

As best shown in Figs. 30A and B, a pair of front and rear engaging claws 64 and 65a, which form a latch mechanism for latching a first locked projecting portion 41 of the magazine 2 in the lengthwise direction thereof, i.e., in the directions shown by arrow a and b, are provided at an end of the slider 62 on the side of the point of arrow a. The front engaging claw 64 on the side of the point of arrow a is fixed to the slider 62, and the rear engaging claw 65a on the side of the point of arrow b is integrally formed at the end of the engaging claw lever 65 on the side of the point of arrow a, which is provided on the slider 62 through a vertical fulcrum shaft 66 so as to be rotatable in the directions shown by arrows i and j. The front and rear engaging claws 64 and 65a are set at the same height as the first locked portion 41 of the magazine 2 loaded in the auto-loader 11.

The engaging claw 64 is projected into the magazine insertion space 13 from an elongated hole 67 horizontally formed in the side chassis 45c, and the other engaging claw 65a can be moved in and out of the magazine insertion space 13 in the directions shown by arrows i and j through the elongated hole 67 by the engaging claw lever 65. The engaging claw lever 65 is rotationally urged by a coil spring 68 in the direction shown by arrow i so that the amount of projection of the engaging claw 65a into the magazine insertion space 13 is regulated by contact between a roller 69 serving as a stopper and provided on the engaging claw lever 65 and the side chassis 45c in the direction shown by arrow i.

A projection cam 70 for retracting the engaging claw lever 65 from the inside of the magazine insertion space 13 by rotating it around the fulcrum shaft 66 in the direction shown by arrow j against the coil spring 68 when the slider 62 is slid to standby position P₁₂ in the direction shown by arrow b is formed at the end of the elongated hole 67 of the side chassis 45c on the side of the point of arrow a, a driven cam 71 which is brought into contact with the projection cam 70 being formed in the engaging claw lever 65.

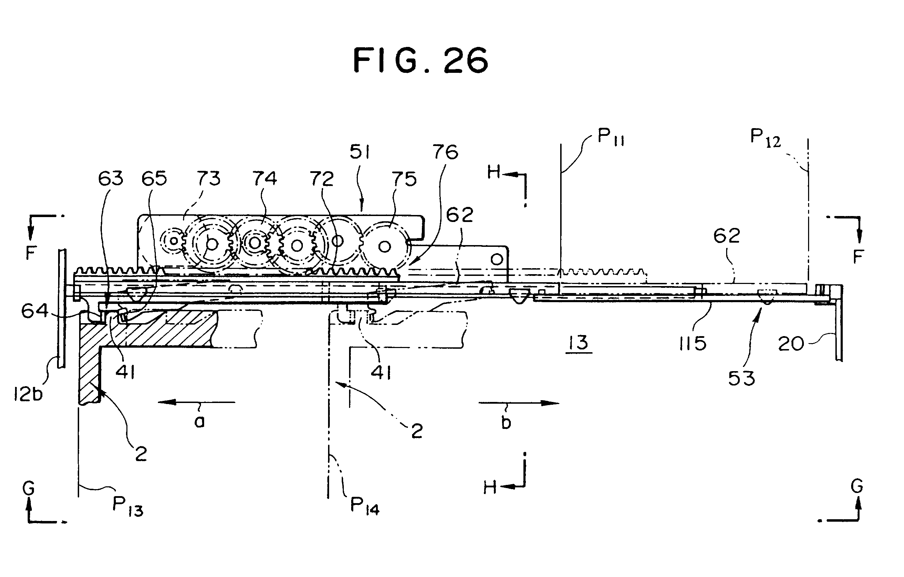

As seen in Fig. 26, a driving mechanism for sliding the slider 62 in the directions shown by arrows a and b comprises a rack and pinion mechanism 76 comprising a rack 72 formed on the side of the slider 62, and a pinion 75 rotated by a motor 73 through a gear train 74 to drive the rack 72. The motor 73, the gear train 74 and the pinion 75 are provided on the side chassis 45c. In the rack and pinion mechanism 76, the motor 73 and the pinion 75 are connected by the gear train 74 comprising flat gears so that optical sensors which will be described below can be operated by moving, in the direction shown by arrow a, the slider 62 by the magazine 2 manually inserted in the direction shown by arrow a, as described below.

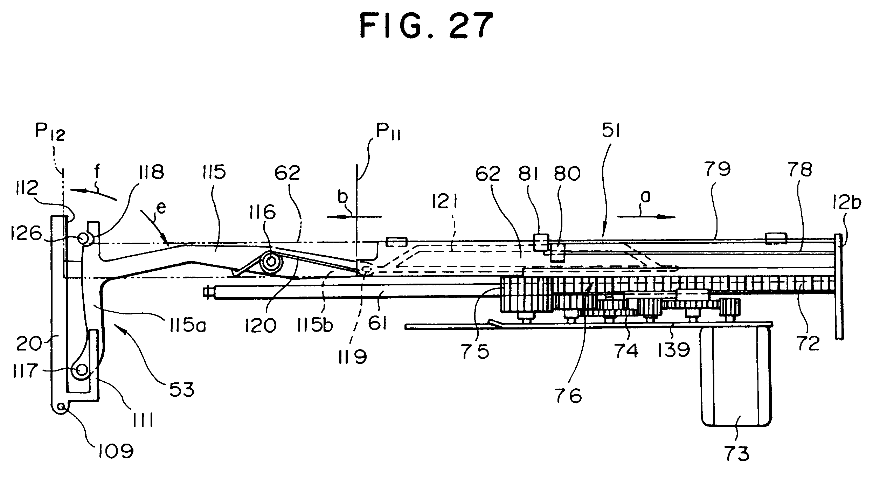

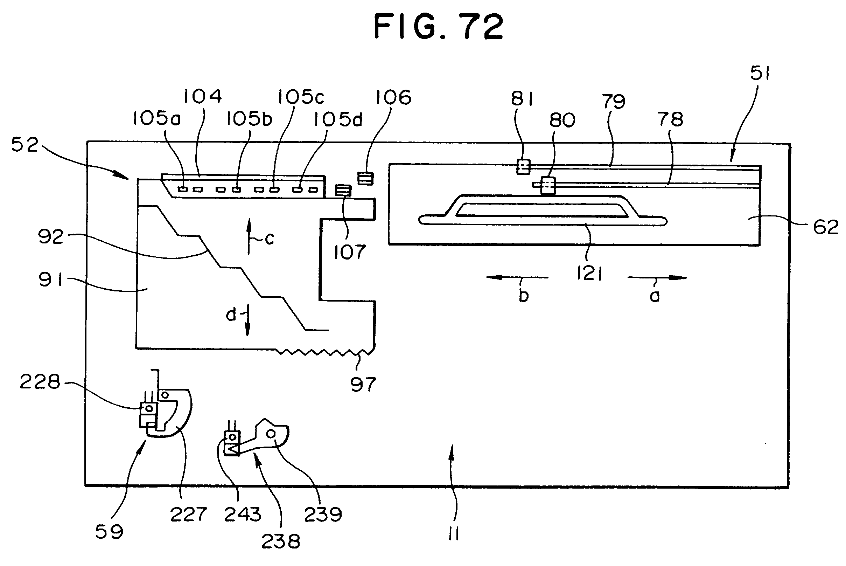

As shown in Figs. 27 and 72, horizontal optical shutter plates 78 and 79 in upper and lower stages are integrally formed at the upper edge of the slider 62, and a pair of upper and lower optical sensors 80 and 81 which serve as photointerrupters turned on and off by the optical shutter plates 78 and 79, respectively, are provided on the side chassis 45c. The optical sensor 80 serves as a magazine-in sensor for detecting insertion of the magazine 2, and the other optical sensor 81 serves as a magazine loading/eject sensor for detecting the completion of loading and ejection of the magazine 2.

### [State of the magazine ejected]

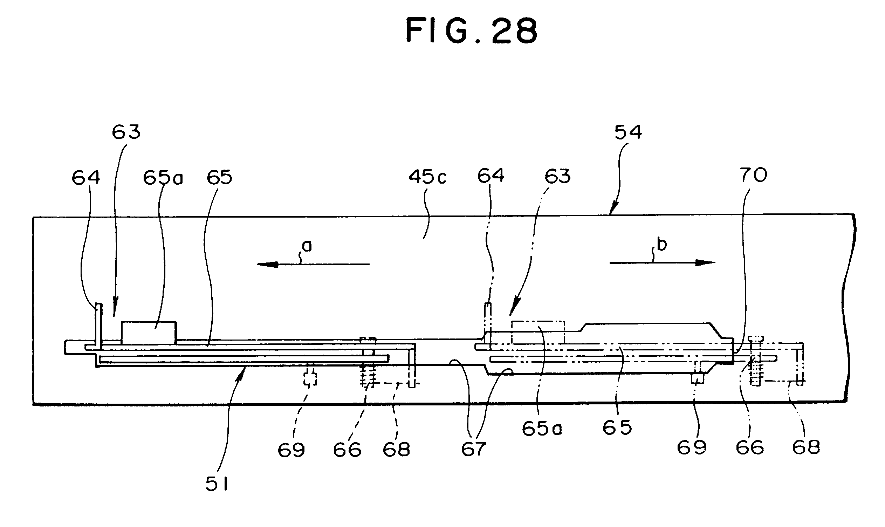

When the power supply for the auto-loader 11 is turned on, the rack 72 is driven in the direction shown by arrow b by the pinion 75 rotated in the reverse direction by the motor 73 of the rack and pinion mechanism 76, and the slider 62 is slid to the standby position P₁₂ shown by a one-dot-chain line in Figs. 26 and 28 in the direction shown by arrow b to be on standby. At this time, as shown in Fig. 30(A), the drive cam 71 of the engaging claw lever 65 of the latch mechanism 63 contacts the cam 70 in the direction shown by arrow b, and the engaging claw lever 65 is rotated around the fulcrum shaft 66 in the direction shown by arrow j against the coil spring 68 to escape the engaging claw 65a from the magazine insertion space 13.

### [Operation of auto-loading the magazine]

As described above with reference to Fig. 1(A), the magazine 2 is manually horizontally inserted in the direction shown by arrow a from the magazine insertion port 19 of the auto-loader 11, and the pair of the left and right guide grooves 36 of the magazine 2 are engaged with the pair of the left and right guide rails 46. When the magazine 2 is pushed to the predetermined position P₁₄ in the direction shown by arrow a, as shown in Fig. 30(A), the first locked portion 41 of the magazine 2 contacts the engaging claw 64 in the direction shown by arrow a, to slightly push the slider 62 in the direction shown by arrow a.

As a result, as shown in Fig. 30(B), the engaging claw lever 65 is also moved together with the slider 62 in the direction shown by arrow a, and the driven cam 71 is separated from the cam 70 in the direction shown by arrow a, thereby rotating the engaging claw lever 65 around the fulcrum shaft 66 in the direction shown by arrow i by the coil spring 68.

The engaging claw 65a at the end of the engaging claw lever 65 is projected into the magazine insertion space 13 from the elongated hole 67 of the side chassis 45C in the direction shown by arrow i, and engaged with the first locked portion 41 of the magazine 2 in the direction shown by arrow b to latch (hold the front and rear sides) the first locked portion 41 of the magazine 2 between the pair of the engaging claws 64 and 65a. At the same time, the roller 69 of the engaging claw lever 65 contacts the side chassis 45c in the direction shown by arrow i, and is then rolled in the directions shown by arrows a and b while contacting the side chassis 45c.

The moment the slider 62 is slightly pushed in the direction shown by arrow a, the optical sensor 80 at the end of the optical shutter plate 78 on the side of the point of arrow a shown in Figs. 27 and 72 is operated (ON → OFF) to detect the insertion of the magazine 2 into the auto-loader 11. When the pinion 75 is normally rotated by the motor 73 of the rack and pinion mechanism 76 through the gear train 74, the rack 72 is driven in the direction shown by arrow a, and the slider 62 is slid to the loading completion position P₁₁ shown by a solid line in Fig. 26 along the guide shaft 61 in the direction shown by arrow a.

The first locked portion 41 is pushed in the direction shown by arrow a by the engaging claw 65a of the latch mechanism 63 which is moved in the direction shown by arrow a together with the slider 62, to perform the auto-loading operation of automatically pulling the magazine 2 in the direction shown by arrow a to the loading completion position P₁₁ in the magazine insertion space 13 of the auto-loader 11.

At the time of the completion of loading when the magazine 2 is drawn to the set position shown in Fig. 21 in the magazine insertion space 13 of the auto-loader 11 in the direction shown by arrow a, the optical sensor 81 is operated (OFF → ON) by the end of the other optical shutter plate 79 of the slider 62 shown in Figs. 27 and 72 on the side of the point of arrow b, to detect the completion of loading of the magazine 2, and the motor 73 is then stopped.

### [Operation of auto-ejecting the magazine]

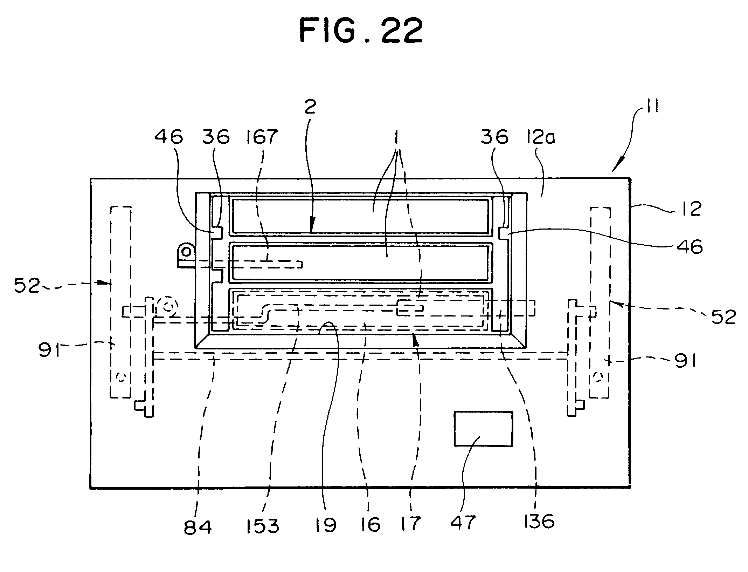

When the eject button 47 shown in Figs. 19 and 22 is then pushed, the motor 73 of the rack and pinion mechanism 76 is operated to rotate, in the reverse direction, the pinion 75 through the gear train 74. The rack 72 is driven in the direction shown by arrow b to slide the slider 62 from the loading completion position P₁₁ shown by the solid line in Fig. 26 to the standby position P₁₂ shown by the one-dot-chain line along the guide shaft 61 in the direction shown by arrow b.

As shown in Fig. 30(B), the engaging claw 64 of the latch mechanism 63 moved together with the slider 62 in the direction shown by arrow b pushes the first locked portion 41 of the magazine 2 in the direction shown by arrow b, to perform the auto-ejection operation of automatically pushing the magazine 2 from the loading completion position P₁₃ in the magazine insertion space 13 of the auto-loader 11 to the predetermined position P₁₄ outward of the magazine insertion port 19 in the direction shown by arrow b.

When the slider 26 is slid to the standby position P₁₂ shown by the one-dot-chain line in Fig. 26 in the direction shown by arrow b, as shown in Fig. 30(A), the driven cam 71 of the engaging claw lever 65 of the latch mechanism 63 contacts the cam 70 in the direction shown by arrow b, and the engaging claw lever 65 is rotated around the fulcrum shaft 66 against the coil spring 68 in the direction shown by arrow j to separate the engaging claw 65a from the first locked portion 41.

At this time, the optical sensor 81 is operated (ON → OFF) by the end of the optical shutter 79 of the slider 62 shown in Figs. 27 and 72 on the side of the point of arrow a, to detect the completion of ejection of the magazine 2, and the motor 73 is then stopped. The magazine 2 can then manually be drawn in the direction shown by arrow b from the magazine insertion port 19 of the auto-loader 11.

### [Description of the tray elevating mechanism]

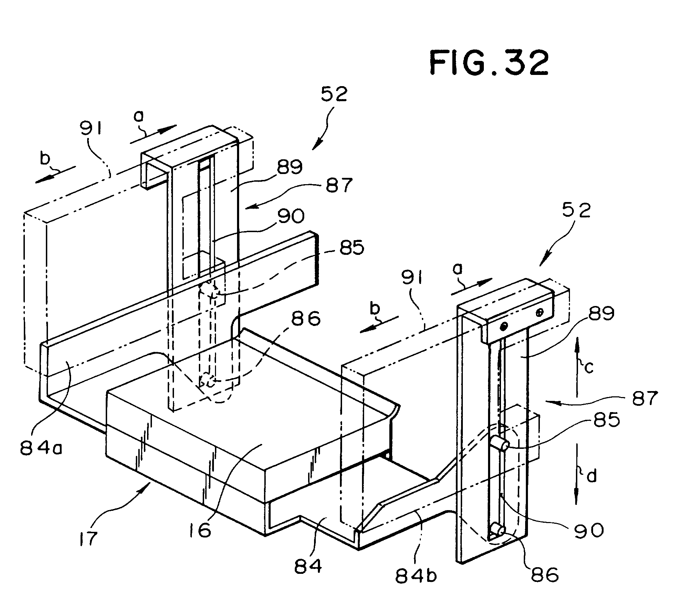

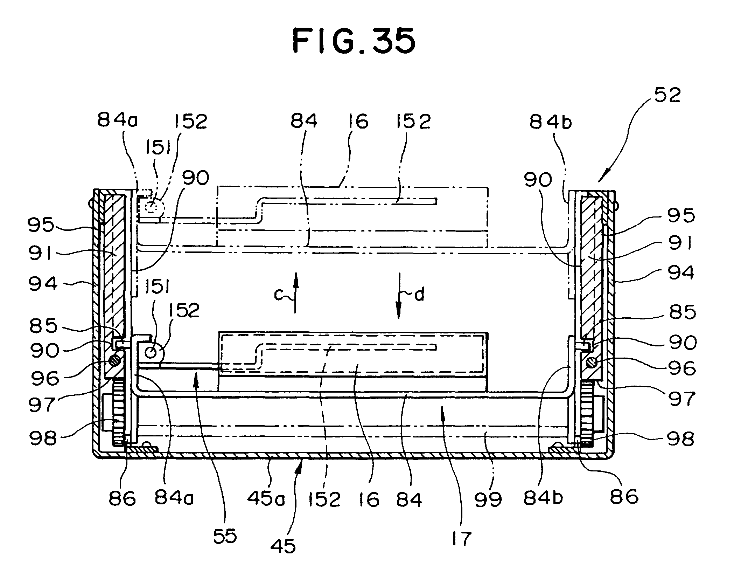

The tray elevating mechanism 52 of the elevator 17 is described below with reference to Figs. 21, 24, 25, 31 through 38, and 72.

The elevator 17 comprises the horizontal cartridge tray 16 which has an opening 16a open toward the side 2a of the magazine 2 and the front side 14a of the drive 14, so that only one tape cartridge 1 can freely horizontally be moved in the directions shown by arrows a and b through the opening 16a.

The cartridge tray 16 is horizontally mounted on a tray elevator 84, a pair of upper and lower guide pins 85 and 86 being horizontally provided in symmetry on each of the left and right vertical side plates 84a and 84b, which are integrally formed at both sides of the tray elevator 84, i.e., a total of four guide pins being provided, so as to be vertically arranged in a line. The upper pair of the left and right guide pins 85 are long guide pins, and the lower pair of the left and right guide pins 86 are short guide pins.

The tray elevating mechanism 52 comprises a pair of left and right vertical guides 87 and a pair of left and right inclined guides 88 for driving the total of the four guide pins 85 and 86 of the tray elevator 84 so that the cartridge tray 16 in a horizontal state is moved upward and downward in the vertical directions shown by arrows c and d within the tray elevating space 18.

The pair of the left and right vertical guides 87 respectively comprise a pair of left and right guide plates 89 which are respectively vertically disposed at the left and right sides of both side plates 84a and 84b of the tray elevator 84 and which are fixed on the bottom chassis 45a of the chassis 45, and vertical guide slots 90 which are vertically formed along the centers of the vertical guide plates 89. The total of the four guide pins 85 and 86 of the tray elevator 84 are loosely fitted in the pair of the left and right guide slots 90 so as to be guided upward and downward in the directions shown by arrows c and d.

The pair of the left and right inclined guides 88 respectively comprise a pair of left and right slide guide plates 91 which are vertically disposed at the sides of the pair of the left and right guide plates 89 so as to be horizontally slid in the directions shown by arrows a and b, and a pair of left and right inclined guide grooves 92 which are obliquely formed on the opposite inner sides of the pair of the left and right slide guide plates 91. The upper pair of the left and right long guide pins 85 of the tray elevator 84 are respectively passed through the pair of the left and right vertical guide slots 90 and loosely fitted in the pair of the left and right inclined guide grooves 92. When the pair of the left and right slide guide plates 91 are slid in the directions shown by arrows a and b, the pair of the left and right guide pins 85 are driven upward and downward in the directions shown by arrows c and d by the cam action of the pair of the left and right guide grooves 92.

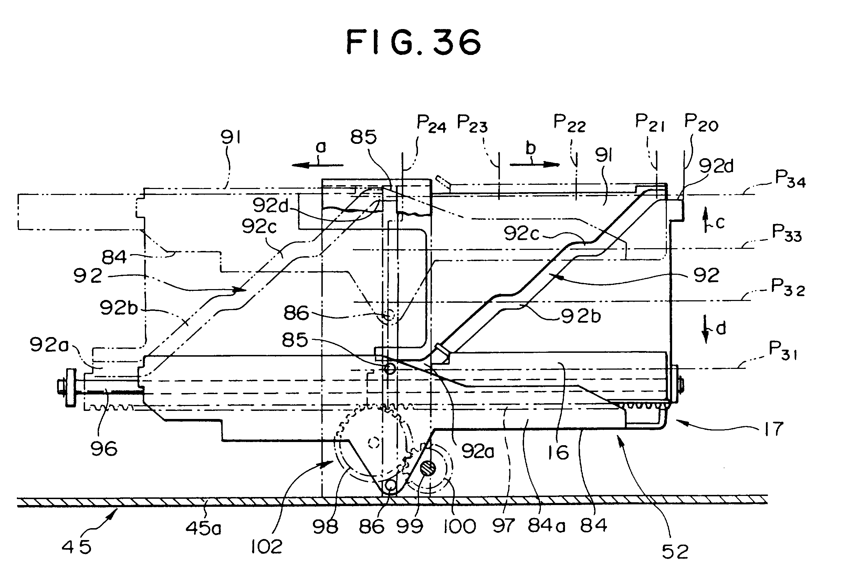

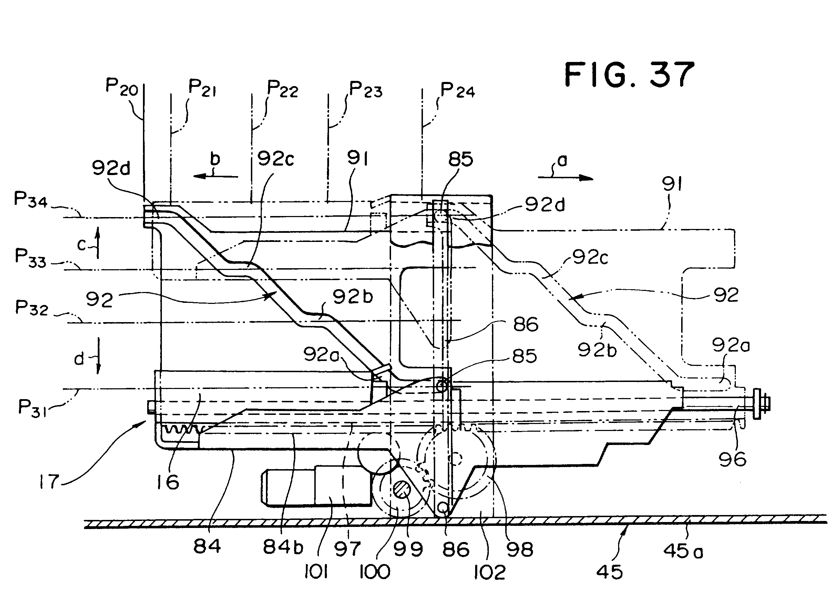

The pair of the left and right inclined guide grooves 92 are respectively inclined at about 45° with respect to the direction of sliding of the pair of the left and right slide guide plates 91, i.e., the directions shown by arrows a and b. Each of the pair of the left and right inclined grooves 92 has four steps 92a, 92b, 92c and 92d which are formed for correctly stopping the cartridge tray 16 at a drive position P₃₁ (see Figs. 36 and 37) opposite to the cartridge port 15 of the drive 14, a magazine lower stage position P₃₂ opposite to the cartridge ejection port 6 of the magazine, a magazine middle stage position P₃₃ opposite to the cartridge containment port 7 and a magazine upper stage position P₃₄ opposite to the cartridge insertion port 5, respectively.

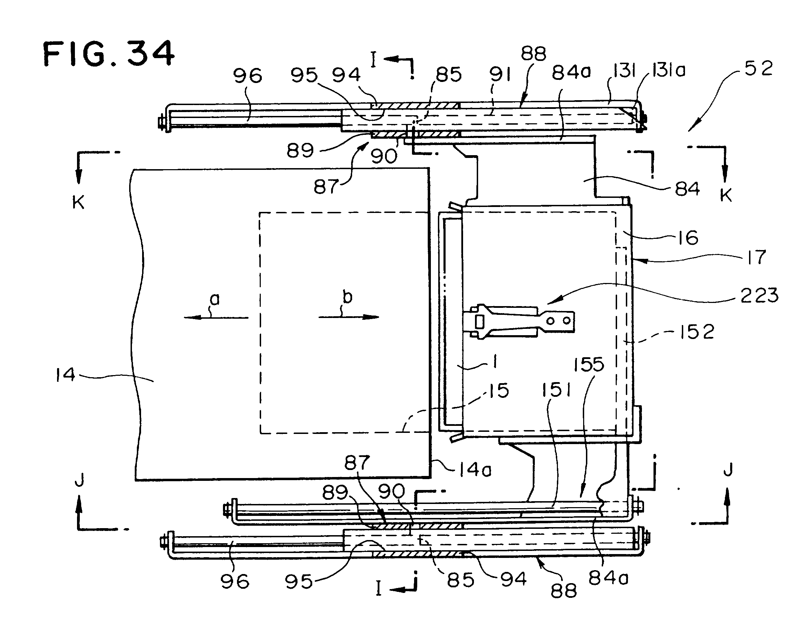

As shown in Fig. 34, a pair of left and right gaps 95 are respectively vertically formed between the pair of the left and right vertical guide plates 89 and a pair of left and right vertical outer guide plates 94 which are vertically provided on the bottom chassis 45a at a distance from the left and right sides of the left and right vertical guide plates 89. The pair of the left and right slide guide plates 91 are respectively inserted into the pair of the left and right gaps 95 so that the slide guide plates 91 are slid synchronously in the directions shown by arrows a and b along a pair of left and right guide shafts 96 which are horizontally provided in parallel with the magazine 2 inside the pair of the left and right vertical guide plates 94.

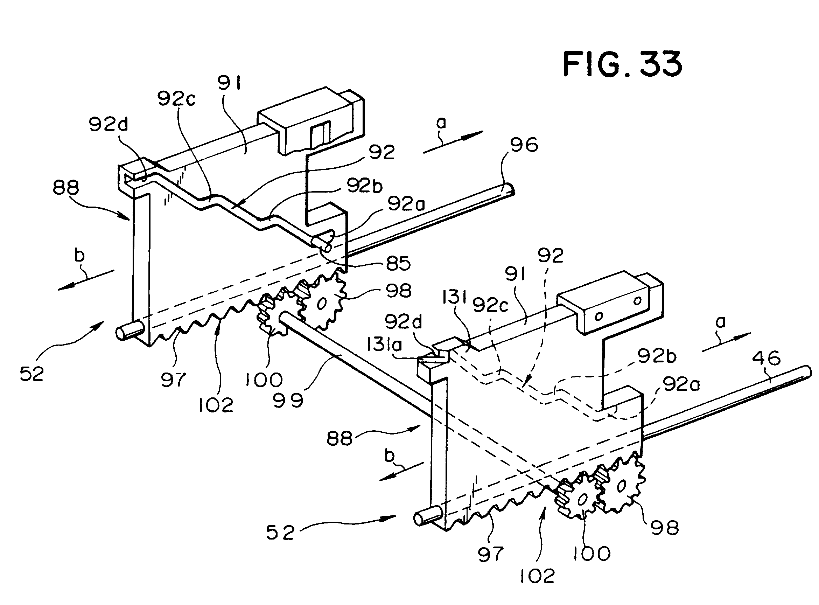

As shown in Fig. 33 and Figs. 36 to 38, a driving mechanism for synchronously sliding the pair of the left and right slide guide plates 91 in the directions shown by arrows a and b comprise a rack and pinion mechanism 102 comprising a pair of left and right racks 97 which are respectively horizontally formed along the lower sides of the slide guide plates 91, a pair of left and right pinions 98 for respectively driving the racks 97, a pair of left and right interlocking gears 100 fixed to both ends of a driving shaft 99 so as to synchronously rotate the pair of the left and right pinions 98, and a geared motor 101 for rotating one of the interlocking gears 100. The pinions 98, the driving shaft 99 and the geared motor 101 are mounted on the side of the chassis 45.

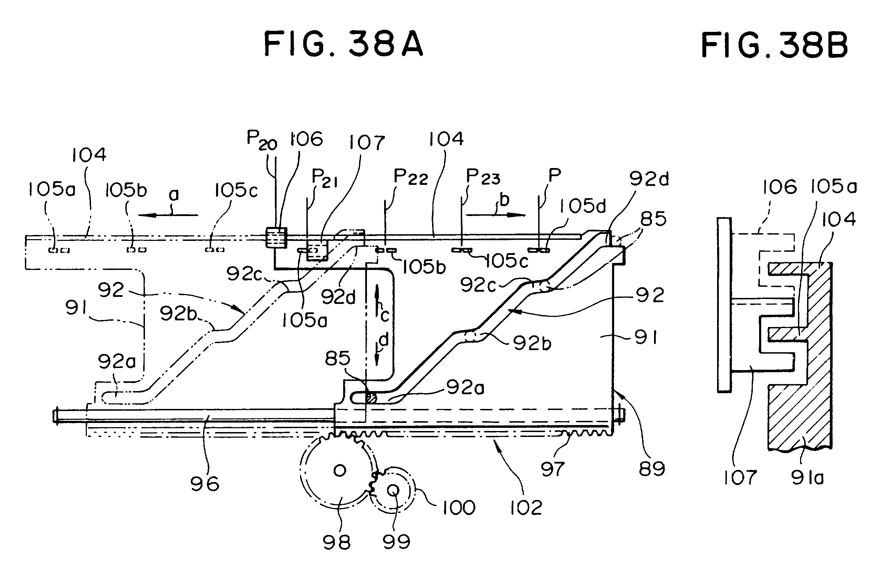

As shown in Figs. 38 and 72, a long optical shutter plate 104 and a total of four short optical shutter plates 105a, 105b, 105c and 105d, which are disposed at predetermined intervals in the directions shown by arrows a and b, are horizontally integrally formed in two vertical stages at the upper edge of one of the slide guide plates 91, and a pair of upper and lower optical sensors 106 and 107, which serve as photointerrupters turned on and off by the optical shutter plates 104 and 105a to 105d, are mounted on one of the vertical guide plates 94. The optical sensor 106 serves as a sensor for detecting the initial position of the slide guide plate 91, and the other optical sensor 107 serves as a sensor for detecting the positions of the four stages in upward and downward movement of the cartridge tray 16.

### [Initial position of the slide guide plate]

When the power supply for the auto-loader 11 is turned on, the pair of the left and right pinions 98 are rotated in the reverse direction by the geared motor 101 of the rack and pinion mechanism 102 through the pair of the interlocking gears 100 and the driving shaft 99, and the pair of the left and right racks 97 are driven in the direction shown by arrow b, as shown by solid lines in Figs. 36 to 38, to move the pair of the left and right slide guide plates 91 to the initial position P₂₀ in the direction shown by arrow b. The optical sensor 106 is operated (ON → OFF) by the end of the optical shutter plate 104 on the side of the point of arrow a shown in Figs. 38 and 72, and the geared motor 101 is then stopped. The pair of the left and right slide guide plates 91 are thus set at the initial position P₂₀.

At this time, the pair of the left and right upper guide pins 85 are respectively positioned in the first horizontal steps 92a which are lowermost steps of the pair of the left and right inclined guide grooves 92, as shown in Figs. 36 to 38, so that the cartridge tray 16 is moved downward, in the direction shown by arrow d, to the drive position P₃₁ opposite to the cartridge port 15 of the drive 14.

### [Standby position of the cartridge tray]

When the pair of the left and right pinions 98 are then normally rotated by the geared motor 101 on the basis of a command signal output from the computer to set the cartridge tray 16 at the standby position, the pair of the left and right racks 97 are driven in the direction shown by arrow a to move the pair of the left and right slide guide plates 91 from the initial position P₂₀ to the standby position P₂₁ in the direction shown by arrow a. When the pair of the left and right slide guide plates 91 reach the standby position P₂₁, the optical sensor 107 shown in Figs. 38 and 72 is operated (ON → OFF → ON) by the optical shutter plate 105a in the first step, and the geared motor 101 is stopped to set the pair of the left and right slide guide plates 91 at the standby position P₂₁. At this time, only the pair of the upper guide pins 85 are relatively moved in the direction shown by arrow b along the first horizontal steps 92a of the pair of the left and right inclined guide grooves 92, while the cartridge tray 16 remains set at the drive position P₃₁. The operation of automatically loading the magazine 22 in the auto-loader 11 in the direction shown by arrow a is performed in the state wherein the cartridge tray 16 is set at the drive position P₃₁, as described above.

### [Upward drive of the cartridge tray]

When the pair of the left and right pinions 98 are normally rotated by the geared motor 101 of the rack and pinion mechanism 102 through the pair of the left and right interlocking gears 100 and the driving shaft 99 on the basis of a command signal from the computer to upwardly drive the cartridge tray 16, the pair of the left and right racks 97 are driven in the direction shown by arrow a to successively slide the pair of the slide guide plates 91 to the magazine lower stage position P₂₂, the magazine middle stage position P₂₃ and the magazine upper stage position P₂₄ from the standby position P₂₁ shown in Figs. 36 to 38 in the direction shown by arrow a.

In the state wherein the movement of the total of the four guide pins 85 and 86 of the tray elevator 84 in the directions shown by arrows a and b is restricted by the pair of the left and right vertical guide slots 90, when the pair of the left and right upper guide pins 85 are driven upward in the upward direction shown by arrow c by the inclined guide grooves 92 of the pair of the left and right inclined guides 88, the total of the four guide pins 85 and 86 are driven upward in the pair of the left and right vertical guide slots 90 in the direction shown by arrow c. As a result, the cartridge tray 16 in a horizontal state is driven upward (parallel motion) together with the tray elevator 84 in the direction shown by arrow c.

The pair of the left and right upper guide pins 85 are successively moved upward to the second, third and fourth horizontal steps 92b, 92c and 92d from the first horizontal step 92a of the pair of the inclined guide grooves 92, as shown by the one-dot-chain lines in Figs. 36 to 38, to successively drive the cartridge tray 16 upward to the magazine lower stage position P₃₂, the magazine middle stage position P₃₃ and the magazine upper stage position P₃₄ from the drive position P₃₁ in the direction shown by arrow c.

At this time, when the slide guide plates 91 are slid from the standby position P₂₁ in the direction shown by arrow a, as shown in Figs. 38 and 72, the optical sensor 107 is successively operated (ON → OFF → ON) by the second, third and fourth optical shutter plates 105b, 105c and 105d, to successively detect the magazine lower stage position P₃₂, the magazine middle stage position P₃₃ and the magazine upper stage position P₃₄ of the cartridge tray 16 (position detecting operation).

When the cartridge tray 16 reaches the stop position among the magazine lower stage position P₃₂, the magazine middle stage position P₃₃ and the magazine upper stage position P₃₄, which is specified by the computer, the cartridge tray 16 can be stopped at the desired specified stop position by stopping the geared motor 101 on the basis of the position detection output from the optical sensor 107.

### [Downward drive of the cartridge tray]

When the pair of the left and right pinions 98 are then rotated in the reverse direction by the geared motor 101 of the rack and pinion mechanism 102 on the basis of the command signal from the computer to drive the cartridge tray 16 downward, the pair of the left and right racks 97 are driven in the direction shown by arrow b to slide the pair of the left and right slide guide plates 91 to the standby position P₂₁ from the magazine upper stage position P₂₄ shown by the one-dot-chain lines in Figs. 36 to 38 in the direction shown by arrow b.

The cartridge tray 16 is thus successively driven downward to the magazine middle stage position P₃₃, the magazine lower stage position P₃₂ and the drive position P₃₁ from the magazine upper stage position P₃₄ in the direction shown by arrow d opposite to the direction of the operation of driving the cartridge tray 16 upward. When the cartridge tray 16 reaches the stop position among the magazine middle stage position P₃₃, the magazine lower stage position P₃₂ and the drive position P₃₁, which is specified by the computer, the cartridge tray 16 can be stopped at the desired specified stop position by stopping the geared motor 101 on the basis of the position detection output from the optical sensor 107.

When the operation of rotating the tape cartridges 1 between the magazine 2 and the drive 14 as described above with reference to Figs. 1 through 9, the pair of the left and right slide guide plates 91 are slid to the standby position P₂₁ shown by the solid line in Figs. 36 through 38 in the direction shown by arrow b on the basis of the operation end signal from the computer, and the geared motor 101 is stopped on the basis of the position detection output from the optical sensor 107 to finish a series of operations of driving the cartridge tray 16 upward.

### [Description of the movable cover opening/closing mechanism]

The movable cover opening/closing mechanism 53 is described below with reference to Figs. 21, 25, 27, 33, 39 through 46 and 73.

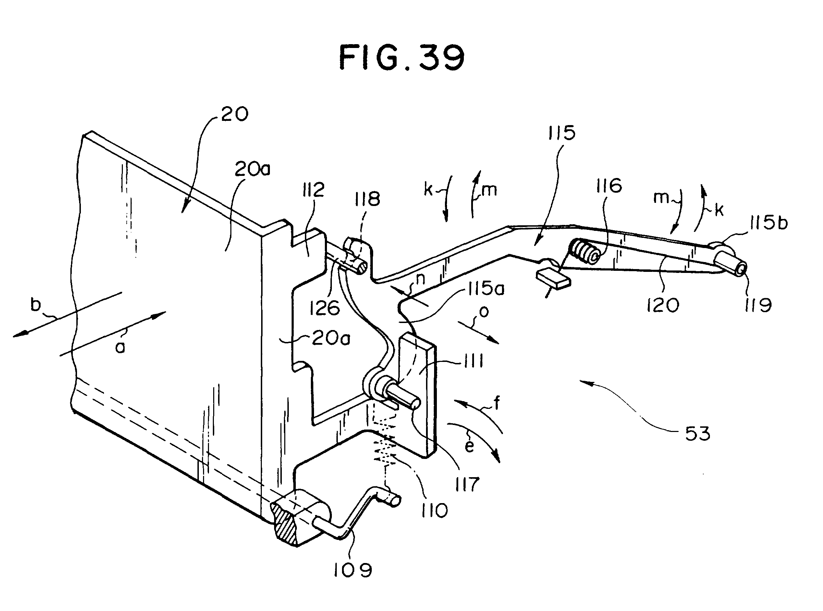

The movable cover 20 is made of a synthetic resin, and has a substantially U-shaped form comprising a back 20a and left and right side plates 20b which are vertically integrally formed at both ends of the back 20a. The movable cover 20 is mounted on the inside of the front panel 12a through a horizontal fulcrum shaft 109 which is laterally passed through the lower end of the movable cover 20 so that the movable cover 20 can be rotated in the vertical directions shown by arrows e and f, as shown in Figs. 27 and 39. The movable cover 20 permits the magazine insertion port 19 to be opened and closed from the inside thereof. The movable cover 20 is urged in the direction shown by arrow f by a coil spring 110 so as to contact the back side of the front panel 12a. A driven arm 111 is integrally formed at a position of one of the side plates 20b of the movable cover 20 near the lower end thereof, the driven arm 111 having a substantially L-shaped portion comprising a portion extending rearward in the direction shown by arrow a and a portion extending outward in the lateral direction of the magazine insertion space 13, i.e., in the direction shown by arrow o, and a vertical portion extending upward in the direction shown by arrow c. An engaged member 112 which projects rearward in the direction shown by arrow a is integrally formed at a position of the side plate 20b of the movable cover 20 near the upper end thereof.

A movable cover driving lever 115 for opening and closing the movable cover 20 in the directions shown by arrows e and f is disposed in parallel with the magazine 2 along the outside of the side chassis 45c behind the movable cover 20, i.e., on the side of the point of arrow a. The movable cover driving lever 115 is attached to the side chassis 45c through a horizontal fulcrum shaft 116 at an intermediate position in the lengthwise direction of the movable cover driving lever 115, i.e., in the directions shown by arrows a and b, so as to be rotatable in the vertical directions shown by arrows k and m. A movable cover driving pin 117 is horizontally mounted at the lower end of a substantially T-shaped arm 115a on the outside thereof which is formed at the front end of the movable cover driving lever 115, the movable cover driving pin 117 being inserted into a frontside position of the driven arm 111 of the movable cover 20 on the side of the point of arrow b. A recessed portion 118 which engages with a movable cover locking pin 126 described below is formed at the upper end of the T-shaped arm 115a on the front side thereof. A driven cam pin 119 is horizontally provided on the outside of the movable cover driving lever 115 at the rear end 115b thereof, and the movable cover driving lever 115 is urged to rotate in the direction shown by arrow k by a coil spring 120.

A driving mechanism for the movable cover driving lever 115 also serves as the slider 62 of the magazine loading mechanism 51, and a cam groove 121 for driving the driven cam pin 119 is integrally formed on the inside of the slider 62 at the upper end thereof. The cam groove 121 comprises a lower horizontal path 121a, and an upper horizontal path 121c connected to the upper portion of the lower horizontal path 121a through a pair of front and rear inclined paths 121b and 121d to form a substantially trapezoidal endless path. The driven cam pin 119 is loosely fitted in the cam groove 121.

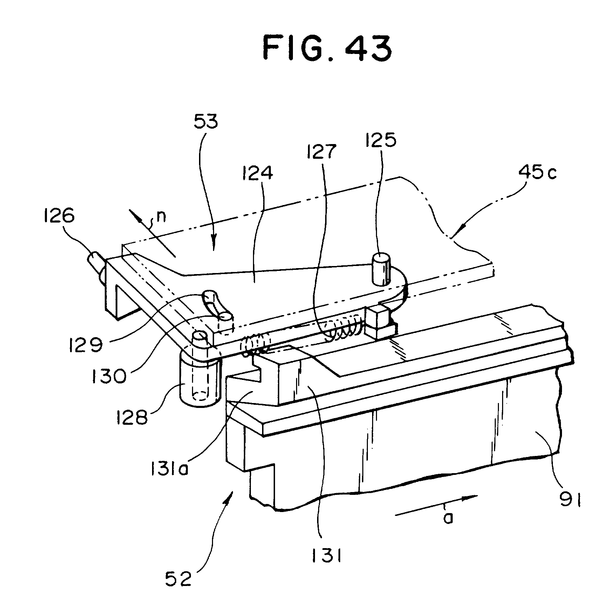

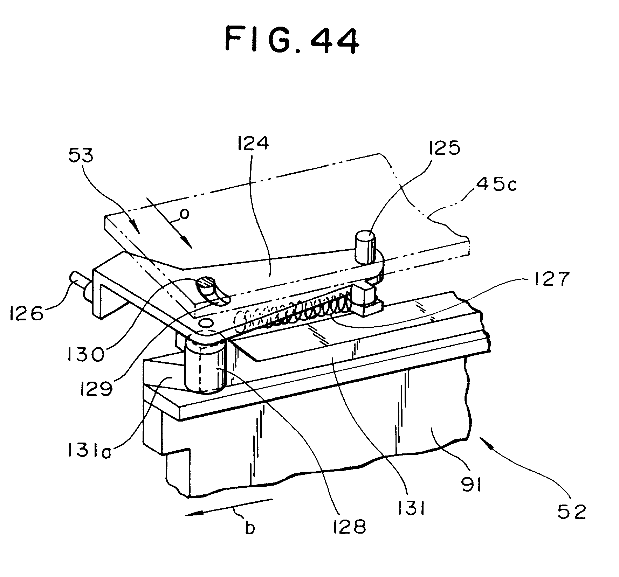

A movable cover locking lever 124 for locking the movable cover 20 in a closed state is horizontally disposed above one of the sides behind the movable cover 20 on the side of the point of arrow a, the rear end of the movable cover locking lever 124 being provided on the side chassis 45c through a vertical fulcrum shaft 125 so as to be rotatable in the directions shown by arrows n and o (see Figs. 43 and 44). A movable cover locking pin 126 is horizontally provided on the inside of the movable cover locking lever 124 at the front end thereof so that it can be moved in and out of a portion behind the engaged member 112 of the movable cover 20 on the side of the point of arrow a, in the directions shown by arrows n and o substantially at right angles with the directions shown by arrows e and f in which the movable cover 20 is opened and closed. The movable cover locking lever 124 is urged to rotate in the direction shown by arrow n by a coil spring 127. A driven vertical cam roller 128 is rotatably provided on the lower side of the movable cover locking lever 124 at the front end thereof on the outside opposite to the movable cover locking pin 126. A vertical guide pin 130 provided on the upper side of the side chassis 45c is loosely fitted in a circular-arc guide hole 129 formed on the front-end side of the movable cover locking lever 124.

One of the slide guide plates 91 of the tray elevating mechanism 52 also serves as a driving mechanism for the movable cover locking lever 124, and a rail-formed cam 131 is horizontally formed on the outside of the slide guide plate 91 along the upper edge thereof. A cam slope 131a inclined inward in the direction shown by arrow n is formed at the end of the rail-formed cam 131 on the side of the point of arrow b.

### [Released state of the movable cover at the close position]

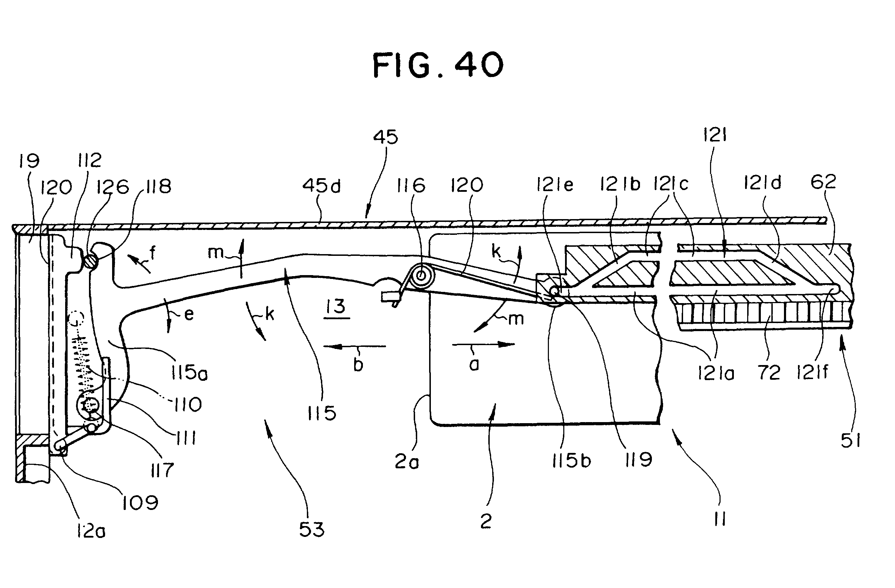

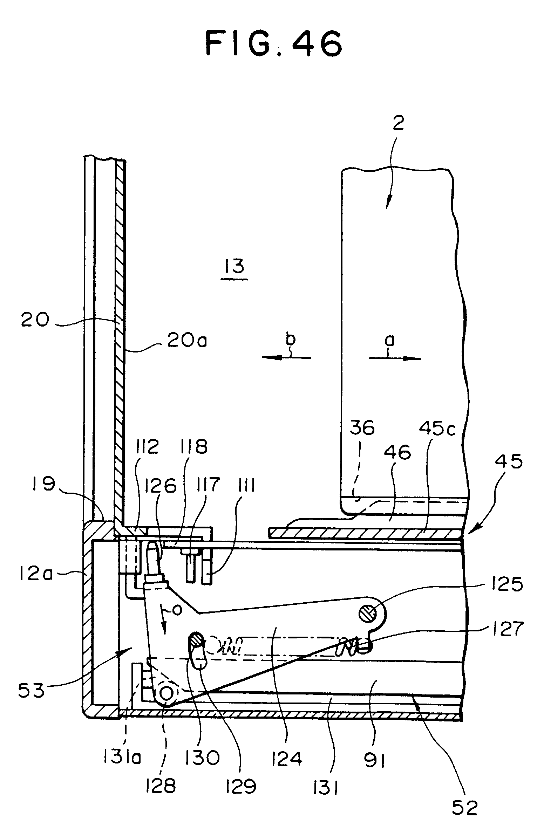

In the initial state, the movable cover 20 is rotated to the closed position around the fulcrum shaft 109 by the coil spring 110 in the direction shown by arrow f to close the magazine insertion port 19, as shown in Fig. 40. In this state, when the power supply for the auto-loader 11 is turned on, the slide guide plates 91 are moved, in the direction shown by arrow b, to the standby position P₂₀ shown by the solid lines in Figs. 36 through 38. The driven cam roller 128 of the movable cover locking lever 124 is placed on the cam rail 131 by the cam slope 131a, as shown in Figs. 44 and 46, and the movable cover locking lever 124 is rotated in the direction shown by arrow o around the fulcrum shaft 125 against the coil spring 127. As a result, the movable cover locking pin 126 is separated from the engaged piece 112 of the movable cover 20 in the direction shown by arrow o to release the lock of the movable cover 20 at the closed position.

Thus, in this initial state, the movable cover 20 can thus freely be opened and closed in the directions shown by arrows e and f around the fulcrum shaft 109 against the coil spring 110. When the magazine 2 is inserted into the auto-loader 11 through the magazine insertion port 19 in the direction shown by arrow a, the movable cover 20 can be pushed open in the direction shown by arrow e by the magazine 2. After the magazine 2 is automatically loaded in the auto-loader 11 in the direction shown by arrow a, the movable cover 20 is automatically closed by the coil spring 110 in the direction shown by arrow f.

### [Operation of opening and closing the movable cover by the movable cover driving lever]

The movable cover driving lever 115 is usually urged to rotate around the fulcrum shaft 116 in the direction shown by arrow k by a coil spring 120, and the driven cam pin 119 is usually urged upward in the direction shown by arrow k.

On the other hand, in the state wherein the slider 62 of the magazine loading mechanism 51 is slid to the loading completion position P₁₁ shown by the solid line in Figs. 26 in the direction shown by arrow a, as described above, the driven cam pin 119 is relatively moved to the end 121e of the lower horizontal path 121a of the cam groove 121 on the side of the point of arrow b, as shown in Fig. 40.

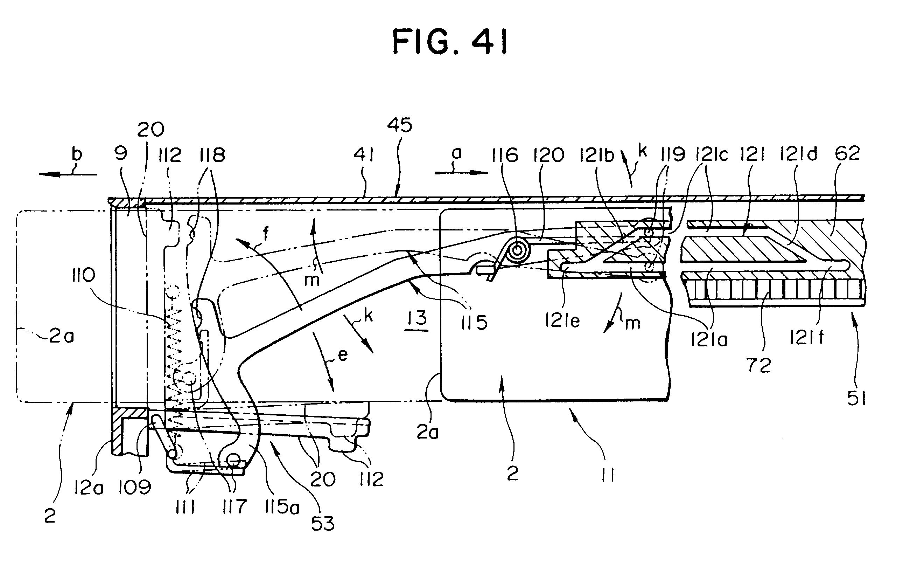

As described above, therefore, the driven cam pin 119 is moved upward in the direction shown by arrow k from the end 121e of the lower horizontal path 121a of the cam groove 121 on the side of the point of arrow b to the upper horizontal path 121c along the inclined path 121b by the upward urging force of the coil spring 116, as shown in Fig. 41, immediately after the slider 62 is started to slide in the direction shown by arrow b from the loading completion position P₁₁ shown by the solid line in Fig. 26 to the standby position P₁₂ shown by the one-dot-chain line so that the magazine 2 is automatically ejected from the magazine insertion port 19 in the direction shown by arrow b.

The movable cover driving lever 115 is thus rotated around the fulcrum shaft 116 in the direction shown by arrow k from the open position shown by the one-dot-chain line in Fig. 41 to the closed position shown by the solid line. The movable cover driving pin 117 rotates the driven arm 111 of the movable cover 20 in the direction shown by arrow k to automatically open the movable cover 20 around the fulcrum shaft 109 in the direction shown by arrow e against the coil spring 110.

When the slider 62 is continuously slid in the direction shown by arrow b to the standby position P₁₂ shown by the one-dot-chain line in Fig. 26, the magazine 2 is pushed out by a predetermined length from the magazine insertion port 19 in the direction shown by arrow b, as shown by the one-dot-chain line in Fig. 41. At this time, the driven cam pin 119 is moved downward, against the coil spring 120, from the upper horizontal path 121c of the cam groove 120 to the end 121f of the lower horizontal path 121a on the side of the point of arrow a along the other inclined path 121d.

As a result, the movable cover driving lever 115 is rotated around the fulcrum shaft 116 in the direction shown by arrow m against the coil spring 120 to return to the closed position, as shown by one-dot-chain line in Fig. 41. Although the movable cover 20 is also rotated around the fulcrum shaft 109 by the coil spring 110 in the direction shown by arrow f, it is stopped in contact with the lower side 2c of the magazine 2, with only the movable cover driving pin 117 of the movable cover driving lever 115 separated from the driven arm 111 of the movable cover 20 in the direction shown by arrow f.

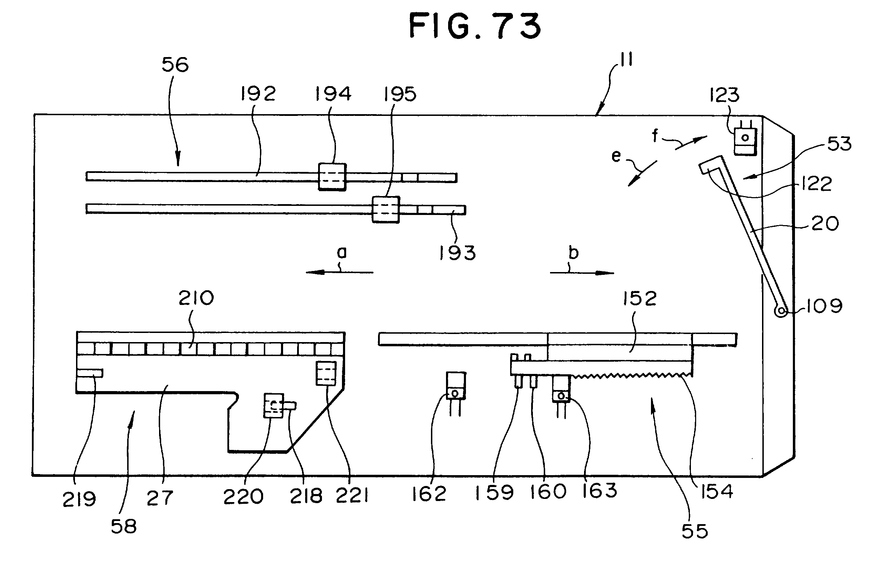

After auto-ejection of the magazine 2 is completed, when the magazine 2 is manually drawn from the magazine insertion port 19 in the direction shown by arrow b, the movable cover 20 is rotated, by the coil spring 110, to the initial closed position shown by two-dot-chain line in Fig. 41 in the direction shown by arrow f, to close the magazine insertion port 19. As shown in Fig. 73, the opening and closing of the movable cover 20 are detected by the optical shutter plate 122 formed on the movable cover 20. The optical sensor 123 serves as a photointerrupter which is turned on and off by the optical shutter plate 122.

### [Locked state of the movable cover at the close position]

As described above, after the magazine 2 is automatically loaded in the auto-loader 11, when the slide guide plate 91 is slid to the standby position P₂₁ from the initial position P₂₀ shown in Figs. 36 through 38 in the direction shown by arrow a to create the standby state, the cam slope 131a of the rail-formed cam 131 is separated from the driven cam roller 128 of the movable cover locking lever 124 in the direction shown by arrow a, as shown in Figs. 39, 40, 43 and 45.

The movable cover locking lever 124 is thus rotated around the fulcrum shaft 125 by the coil spring 127 in the direction shown by arrow n, and the movable cover locking pin 126 is inserted, at substantially right angles, between the engaged piece 112 of the movable cover 20 and the engaging recessed portion 118 of the movable cover driving lever 115 in the direction shown by arrow n. The rotation of the movable cover 20 in the direction shown by arrow e is restricted by the movable cover locking pin 126 to lock the movable cover 20 at the closed position.

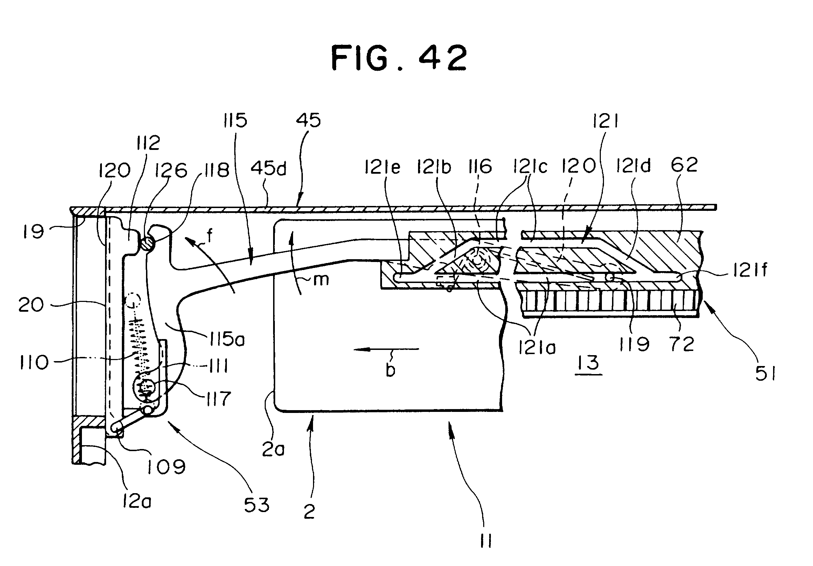

In the locked state of the movable cover 20 at the closed position, the movable cover driving lever 115 is also locked at the closed position shown in Figs. 40 and 42 by the movable cover locking pin 126 which is engaged with the engaging recessed portion 118.

### [Description of the first cartridge extruding mechanism]

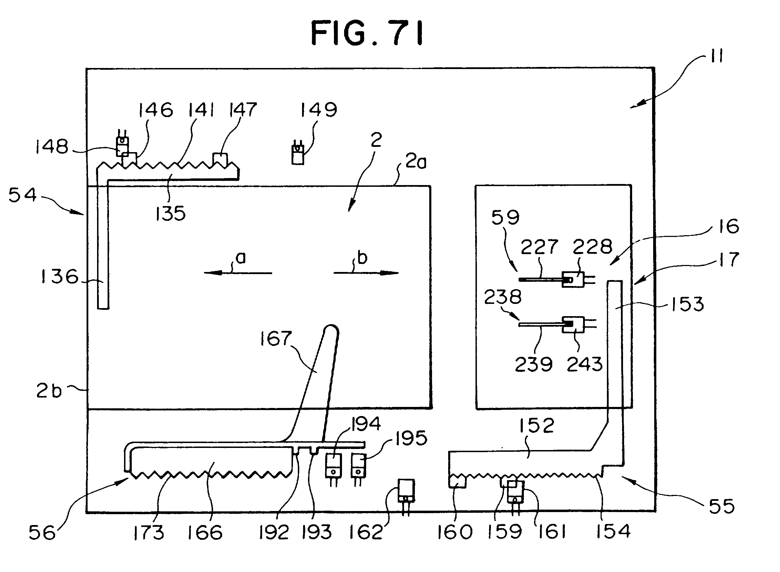

The first cartridge extruding mechanism 54 is described with reference to Figs. 21, 24, 47, 48 and 71.

The first cartridge extruding mechanism 54 is disposed on the side chassis 45c, a guide shaft 134 horizontally being attached to the side chassis 45c in parallel with the magazine 2, and a slider 135 serving as a slide driving member which is slid in the directions shown by arrows a and b being provided along the guide shaft 134. A first extrusion arm 136 is horizontally integrally formed at right angles at the rear end of the slider 135, i.e., at the end on the side of the point of arrow a, on the side thereof near the magazine insertion space 13. The first extrusion arm 136 is horizontally projected into the magazine insertion space 13 at right angles with the lengthwise direction of the magazine 2, i.e, the directions shown by arrows a and b, through the elongated hole 137 horizontally formed in the side chassis 45c.

A plate-formed guided piece 138 for stopping the rotation of the slider 135 is integrally horizontally formed on the side of the slider 135 on the front-end side, i.e., on the side of the point of arrow b, opposite to the magazine insertion space 13. The guided piece 138 is inserted between a horizontal upper guide plate 139 formed on the side chassis 45c, and a lower guide plate 140 horizontally provided at a distance from the lower portion of the upper guide plate 139 to be guided in the directions shown by arrows a and b so that the first extrusion arm 136 kept in a horizontal state can be horizontally moved in the directions shown by arrows a and b.

A driving mechanism for driving the slider 135 in the directions shown by arrows a and b comprises a rack and pinion mechanism 144 comprising a rack 141 which is horizontally integrally formed along the side of the slider 135 opposite to the magazine insertion space 13, and a pinion 143 which is rotated by a geared motor 142 provided on the lower portion of the lower guide plate 140 to drive the rack 141 in the directions shown by arrows a and b. A motor 73 for the magazine loading mechanism 51 is provided on the upper portion of the upper guide plate 139.

A pair of horizontal front and rear optical shutter plates 146 and 147 are integrally formed at the front and rear ends of the slider 135 on the side thereof opposite to the magazine insertion space 13, and a pair of front and rear optical sensors 148 and 149 serving as photointerrupters which are turned on and off by the optical shutter plates 146 and 147, respectively, are provided on the side chassis 45c. The optical sensor 148 serves as a sensor for setting the first extrusion arm 136 at the extrusion start position, the other optical sensor 149 serves as a sensor for preventing overrunning of the first extrusion arm 136 in the direction shown by arrow b.

### [Setting of the first extrusion arm at the extrusion start position]

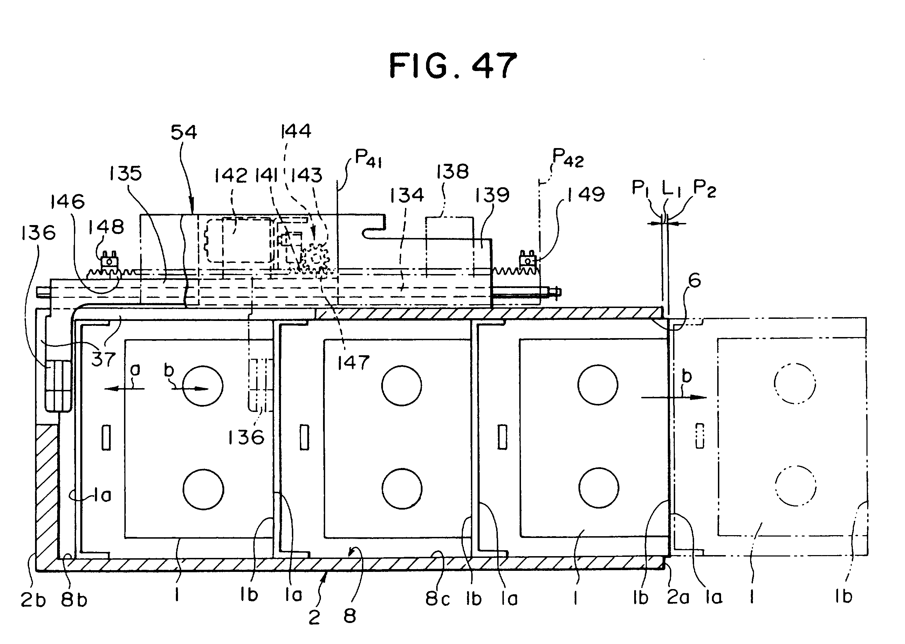

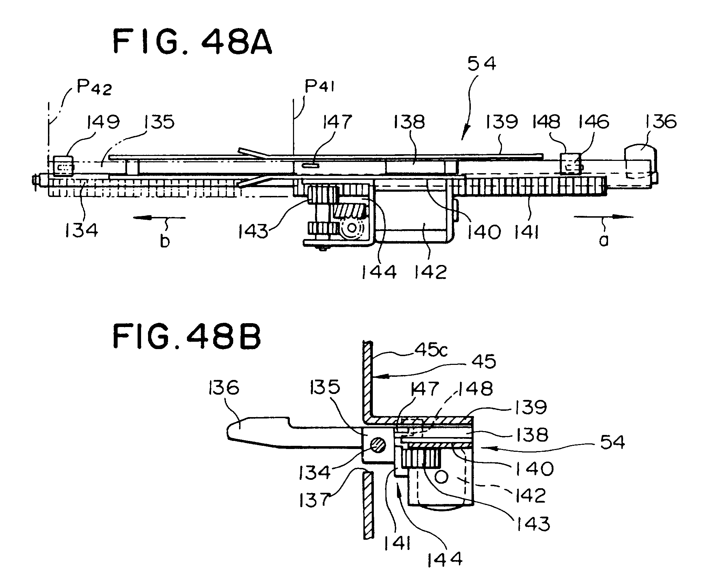

When the power supply for the auto-loader 11 is turned on, the pinion 143 is driven in the reverse direction by the geared motor 142 of the rack and pinion mechanism 144 to drive the rack 141 in the direction shown by arrow a. The slider 135 is thus slid along the guide shaft 134 in the direction shown by arrow a, and the first extrusion arm 136 is moved to the standby position P₄₁ shown by the solid line in Figs. 47 and 48(A) in the direction shown by arrow a. The optical sensor 148 is operated (ON → OFF) by the optical shutter plate 146 to stop the geared motor 142 and set the first extrusion arm 136 at the standby position P₄₁.

### [Operation of automatically setting the first extrusion arm in the magazine]

When the magazine 2 is then automatically horizontally loaded in the auto-loader 11 from the magazine insertion port 19 in the direction shown by arrow a and set at the position shown in Fig. 47, as described above, the first extrusion arm 136 is relatively horizontally inserted, from the direction shown by arrow b, to the end of the first opening 37 of the magazine 2 on the side of the point of arrow a, and automatically set.

### [Operation of extruding the tape cartridge by the first extrusion arm]

When the pinion 143 is normally rotated by the geared motor 142 of the rack and pinion mechanism 144 on the basis of a command signal from the computer to extrude the tape cartridge 1, the rack 141 is driven in the direction shown by arrow b. The slider 135 is then slid along the guide shaft 134 in the direction shown by arrow b to horizontally move the first extrusion arm 136 along the first opening 37 of the magazine 2 from the standby position P₄₁ shown by the solid line in Figs. 47 and 48 to the position P₄₂ shown by one-dot-chain line in the direction shown by arrow b.

As a result, the front end 1a of the tape cartridge 1 in the lower stage of the vertical path 8b of the cartridge rotation path 8 in the magazine 2 is horizontally pushed out, in the direction shown by arrow b, by the first extrusion arm 136 horizontally moved in the direction shown by arrow b, as described above with reference to Fig. 13. This operation of extruding the cartridge causes the total of three tape cartridges 1 in the lower stage of the vertical path and the lower horizontal path 8c to be simultaneously be pushed out by a stroke corresponding to one tape cartridge in the direction shown by arrow b, to push one of the tape cartridge 1, in the direction shown by arrow b, into the cartridge tray 16 of the elevator 17 from the cartridge ejection port 6 of the magazine 2, as described above with reference to Figs. 2(A) and 10.

At this time, when the front end 1a of the tape cartridge 1 pushed into the cartridge tray 16 is pushed to a position at distance L₁ from the reference position P₁ in the direction shown by arrow b and reaches the first extrusion position P₂, as described above with reference to Fig. 10, the geared motor 142 of the rack and pinion mechanism 144 is stopped on the basis of the detection output from a cartridge extrusion position detecting sensor in the cartridge tray 16, which will be described below, to stop the slider 135 and the first extrusion arm 136 at the position P₄₂ shown by the one-dot-chain line.

When no detection output is obtained from the cartridge extrusion position detecting sensor for some reason, the other optical sensor 149 is operated (OFF → ON) by the other optical shutter plate 147 to stop the geared motor 142, thereby preventing overrunning of the first extrusion arm 136 in the direction shown by arrow b.

When the pinion 143 is then driven in the reverse direction by the geared motor 142 of the rack and pinion mechanism 144 to drive the rack 141 in the direction shown by arrow a, the first extrusion arm 136 is returned integrally with the slider 135 to the initial standby position P₄₁ shown by the solid line in Figs. 47 and 48 in the direction shown by arrow a.

When the first extrusion arm 136 is returned in the direction shown by arrow a from the position P₄₂ shown by the one-dot-chain line in Fig. 47 to the standby position P₄₁ shown by the solid line, and the first extrusion arm 136 is retracted rearward in the direction shown by arrow a, from the lower stage position in the vertical path 8b of the magazine 2, the two tape cartridges 1 in the vertical path 8b are horizontally dropped drown by a step corresponding to one tape cartridge in the direction shown by arrow d to generate the space S for one tape cartridge 1 in the upper portion of the vertical path 8b, as described above with reference to Figs. 2(B) and 13.

### [Description of the second cartridge extruding mechanism]

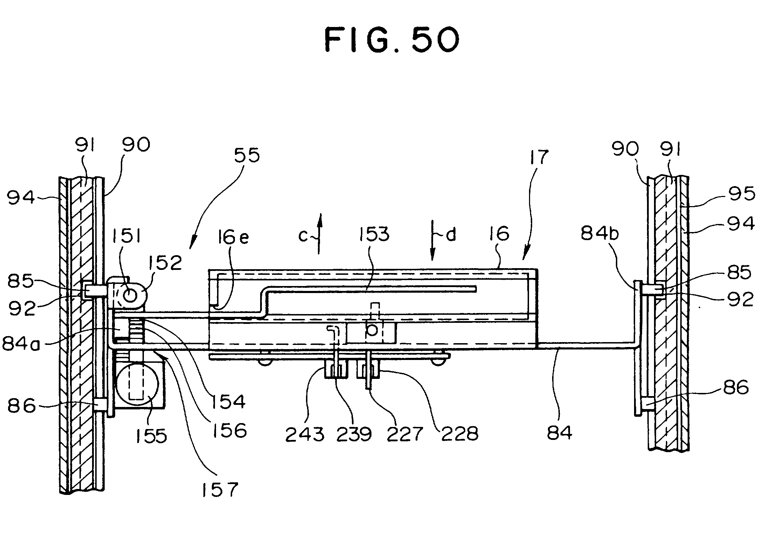

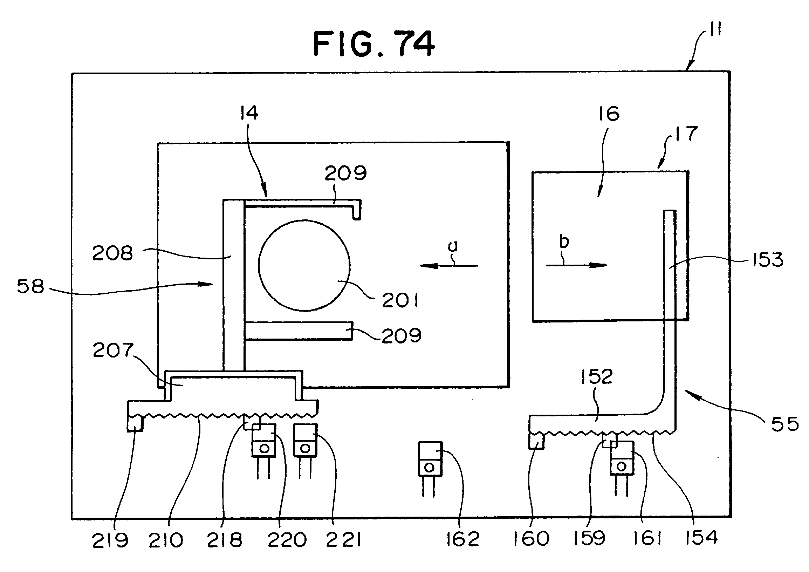

The second cartridge extruding mechanism 55 is described below with reference to Figs. 21, 22, 24, 31, 49 to 51, 71, 73 and 74.

The second cartridge extruding mechanism 55 is provided on the tray elevator 84 so as to be moved upward and downward together with the cartridge tray 16 in the directions shown by arrows c and d. A guide shaft 151 is horizontally provided on the inside of the side plate 84a of the tray elevator 84 in parallel with the magazine 2, and a second extrusion arm 153 is horizontally provided, on the side of the point of arrow b, at right angles at the end of a slider 152 serving as a slide driving member, which is slid along the guide shaft 151 in the directions shown by arrow a and b. The second extrusion arm 153 is inserted into the cartridge tray 16 through the elongated hole 16e horizontally formed in one of the sides of the cartridge tray 16, to be set at right angles with the direction shown by arrow a which is the direction of extrusion of the tape cartridges 1.

The slider 152 is molded with a synthetic resin, and a rack 154 is horizontally integrally formed along the lower side of the slider 152. A drive mechanism for driving the slider 152 in the directions shown by arrows a and b comprises a rack and pinion mechanism 157 comprising the rack 154 and a pinion 156 rotated by a geared motor 155 provided on the tray elevator 84 to drive the rack 154.

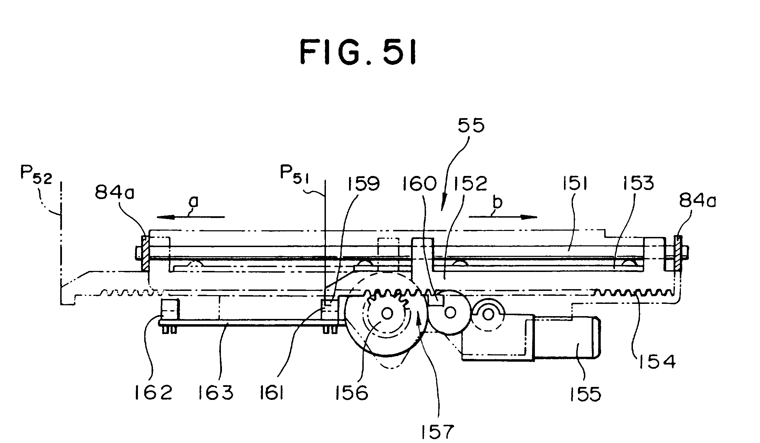

As shown in Fig. 51, a pair of horizontal front and rear optical shutter plates 159 and 160 are integrally formed on the slider 152 at a distance therebetween in the lengthwise direction, i.e., in the directions shown by arrows a and b, and a pair of front and rear optical sensors 161 and 162 serving as photointerrupters, which turned on and off by the optical shutter plates 159 and 160, are provided on the side of the tray elevator 84. The optical sensor 161 serves as a sensor for detecting the standby position of the second extrusion arm 153, and the other optical sensor 162 serves as a sensor for detecting the extrusion end position of the second extrusion lever 153.

### [Setting of the second extrusion arm at the standby position]

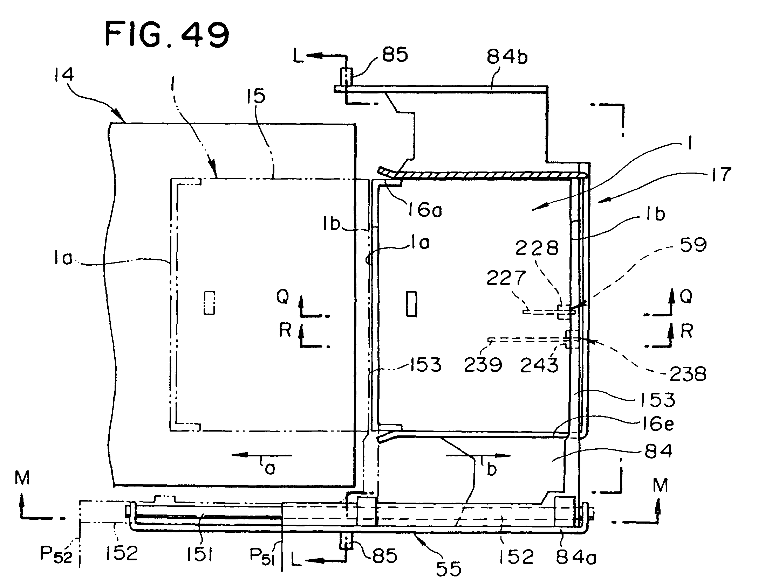

When the power supply for the auto-loader 11 is turned on, the pinion 156 is rotated in the reverse direction by the geared motor 155 of the rack and pinion mechanism 157 to drive the rack 154 in the direction shown by arrow b. Thus, the slider 152 is slid to the standby position P₅₁ shown by solid line in Figs. 49 and 51 along the guide shaft 151 in the direction shown by arrow b, and the second extrusion arm 153 is moved to the standby position shown by the solid line in Fig. 49 in the direction shown by arrow b within the cartridge tray 16. The optical sensor 161 is operated (ON → OFF) by the optical shutter plate 159 to stop the geared motor 155 and set the second extrusion arm 153 at the standby position.

### [Operation of extruding tape cartridge from the cartridge tray by the second extrusion arm]

When a command signal to extrude the tape cartridge 1 is output from the computer after the tape cartridge 1 is inserted into the cartridge tray 16 in the direction shown by arrow b, as described above, the pinion 156 is normally rotated by the geared motor 155 of the rack and pinion mechanism 157 to drive the rack 154 in the direction shown by arrow a. As a result, the slider 152 is slid along the guide shaft 151 in the direction shown by arrow a to the extrusion end position P₅₂ shown by a one-dot chain line in Figs. 49 and 51.

Thus, the second extrusion arm 153 is moved in the direction shown by arrow a from the standby position shown by a solid line in Fig. 49 to the extrusion end position shown by a one-dot-chain line within the cartridge tray 16. The second extrusion arm 153 pushes the rear end 1b of the tape cartridge 1 in the cartridge tray 16 to push out the tape cartridge 1 from the opening 16a of the cartridge tray 16 in the direction shown by arrow a, as described above, thereby pushing the tape cartridge 1 into the drive 14 or the magazine 2 in the direction shown by arrow a.

When the second extrusion arm 153 reaches the extrusion end position shown by the one-dot-chain line in Fig. 49, the other optical sensor 162 is operated (ON → OFF) by the other optical shutter plate 160 to stop the geared motor 155 of the rack and pinion mechanism 157. When the pinion 156 is then rotated in the reverse direction by the geared motor 155, the rack 154 is driven in the direction shown by arrow b to return the second extrusion arm 153 to the extrusion start position shown by the solid line in Fig. 49 together with the slider 152 in the direction shown by arrow b.

### [Description of the third cartridge extruding mechanism]

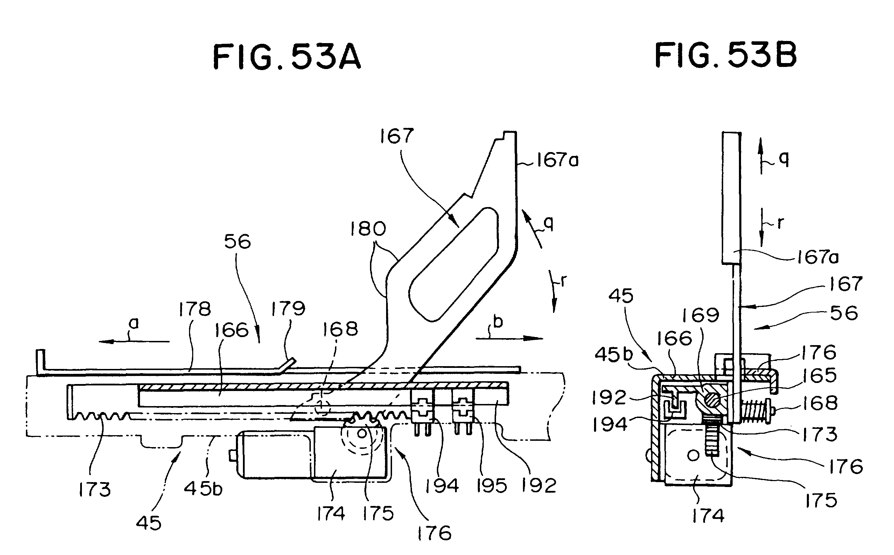

The third cartridge extruding mechanism 56 is described below with reference to Figs. 21, 24, 52 through 56, 71 and 72.

The third cartridge extruding mechanism 56 is disposed along the outer side of the other side chassis 45b of the chassis 45 relative to the magazine insertion space 13. A guide shaft 165 is horizontally provided on the side chassis 45b in parallel with the magazine 2, and a slider 166 serving as a slide driving member is provided along the guide shaft 165 so as to be slidable in the directions shown by arrows a and b. A horizontal third extrusion arm 167 is provided below the slider 166 through a fulcrum vertical shaft 168 so as to be horizontally rotatable in the directions shown by arrows q and r.

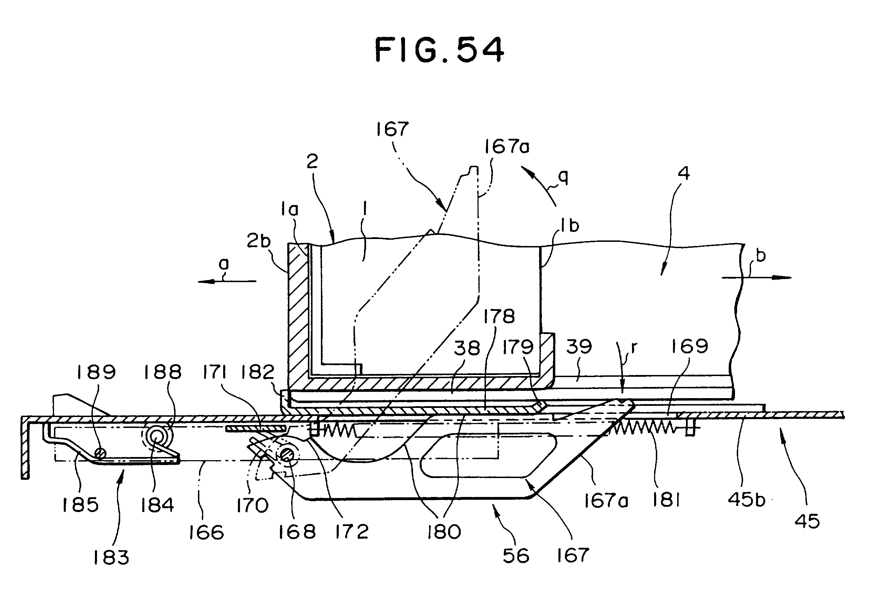

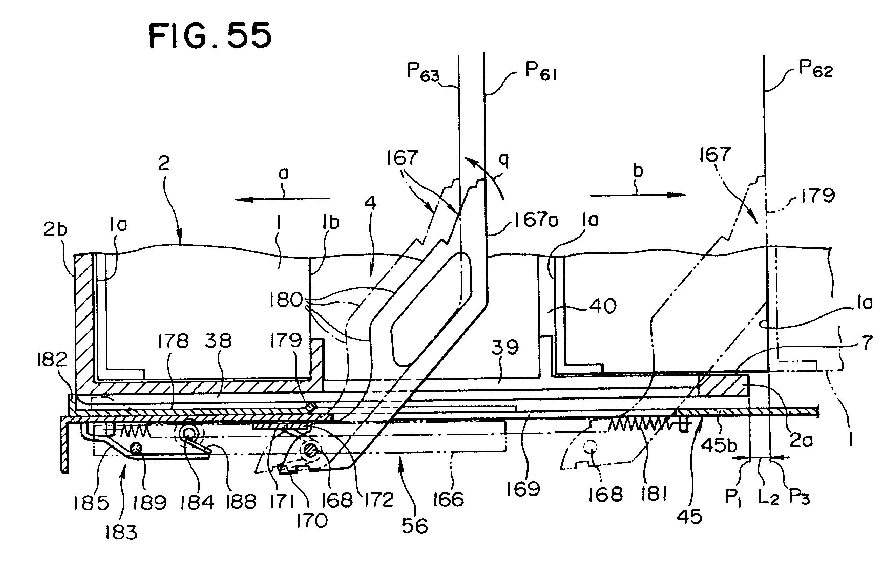

The third extrusion arm 167 is set at the same height as the guide groove 38 and the second opening 39 of the magazine 2 which is loaded in the magazine insertion space and horizontally set therein. The third extrusion arm 167 can be rotated in the directions shown by arrows q and r within a range of 45° between a position shown by a solid line and a position shown by a one-dot-chain line in Fig. 54 so that it can be moved in and out of the magazine insertion space 13 through the elongated hole 169 which is horizontally formed in the side chassis 45b. In the state wherein the third extrusion arm 167 is inserted into the magazine insertion space 13, the third extrusion arm 167 can also be moved along the elongated hole 169 in the directions shown by arrows a and b within the range between the position shown by a one-dot-chain line and the position shown by a two-dot-chain line in Fig. 55.

The third extrusion arm 167 is urged to be rotated in the direction shown by arrow q by a coil spring 170, a stopper 171 being provided on the slider 166 so as to stop the rotation of the third extrusion arm 167 at the extrusion start position shown by the solid line in Fig. 55. A stepped portion 172 formed on the side of the third extrusion arm 167 near the fulcrum shaft 168 is engaged with the stopper 171.

A driving mechanism for sliding the slider 166 in the directions shown by arrow a and b comprises a rack and pinion mechanism comprising a horizontal rack 173 integrally formed on the side of the slider 166, and a pinion 175 rotated by a geared motor 174 provided on the side chassis 45b so as to drive the rack 173.

A plate-formed slide cam 178 is provided on the side of the side chassis 45b near the magazine insertion space 13 opposite to the elongated hole 169 so as to be slidable in the directions shown by arrows a and b. A cam projection 179 for controlling rotation of the third extrusion arm 167 in the directions shown by arrows q and r is formed on the slide cam 178, and a driven cam surface 180, which is formed in a substantially crank shape having a gentle curved surface along the side of the third extrusion arm 167 on the side of the point of arrow q, is brought into contact with the cam projection 179 in the direction shown by arrow q. The slide cam 178 is urged by a coil spring 181 to be slid in the direction shown by arrow b from the position shown in Fig. 55 to the position shown in Fig. 54. A magazine contact portion 182 which is projected at substantially right angles into the magazine insertion space 13 is formed at the end of the slide cam 178 on the side of the point of arrow a.

A magazine locking mechanism 183 controlled by the slider is provided on the outside of the side chassis 45b opposite to the magazine insertion space 13 in the lower portion of the third extrusion mechanism 56 on the side of the point of arrow b. As seen in Fig. 5b, the magazine locking mechanism 183 has a horizontal magazine locking lever 185 provided on the side chassis 45b through a vertical fulcrum shaft 184 so as to be rotatable in the directions shown by arrows t and u, a locking claw 186 horizontally integrally formed on the side of the magazine locking lever 185 on the side of the point of arrow t being set at the same height as a second locked portion 42 of the magazine 2 which is horizontally loaded in the magazine insertion space 13 and set therein. The locking claw 186 can be moved in and out of the magazine insertion space 13 through an elongated hole 187 which is horizontally formed in the side chassis 45b, and the magazine locking lever 185 is urged to be rotated in the directions shown by arrow t by a coil spring 188 to be brought into contact with the side chassis 45b.

A rib-formed cam 190 controlled by a vertical cam driving pin 189 which is provided on the lower side of the slider 166 on the side of the point of arrow a is vertically integrally formed along the upper outer edge of the magazine locking lever 185, and a substantially crank-formed cam surface 190a is formed on the inside of the rib-formed cam 190.

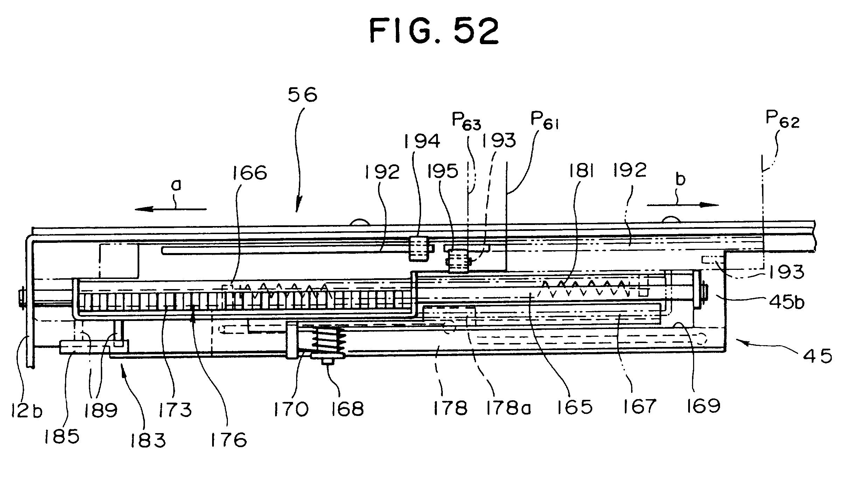

As seen in Fig. 52, horizontal optical shutter plates 192 and 193 are integrally formed in parallel two steps along the upper portion of the slider 166, and a pair of upper and lower optical sensors 194 and 195 serving as photointerrupters which are turned on and off by the pair of upper and lower optical shutter plates 192 and 193, respectively, are provided on the side chassis 45b. The optical sensor 195 serves as a sensor for detecting the standby position P₆₁ of the slider 166, and the other optical sensor 194 serves as a sensor for detecting the extrusion end position P₆₂ of the slider 166 and the overstroke position P₆₃, where a lock of the magazine 2 is completely released, in the direction shown by arrow a.

### [Standby state of the third extrusion arm]

When the power supply for the auto-loader 11 is turned on, the pinion 175 is normally or reversely rotated by the geared motor 174 of the rack and pinion mechanism 176, to slide the slider 166 in the direction shown by arrow a or b through the rack 173 to locate the slider 166. When the slider 166 is located at the standby position P₆₁ shown by the solid line in Figs. 52 and 54, the optical sensor 195 is turned on, and the other optical sensor 194 turned off. When the extrusion start position is detected, the geared motor 174 is stopped.

At this time, the slide cam 178 is slid by the coil spring 181 to the position shown by the solid line in Fig. 54 in the direction shown by arrow b. When the driven cam surface 180 of the third extrusion arm 167 is pushed by the cam projection 179 in the direction shown by arrow r, the third extrusion arm 167 is rotated around the fulcrum shaft 168 in the direction shown by arrow r against the coil spring 170, and the third extrusion arm 167 is ejected from the elongated hole 169 in the direction shown by arrow r which is the outward direction of the magazine insertion space 13, and is set in parallel with the magazine 2.

### [Operation of automatically setting the third extrusion arm in the magazine]

As described above, a portion of the side 2b of the magazine 2 contacts the magazine contact portion 182 of the slide cam 178 from the direction shown by arrow a, as shown in Fig. 54, in the course of auto-loading of the magazine 2 in the magazine insertion space 13 of the auto-loader 11 in the direction shown by arrow a. The slide cam 178 is pushed by the magazine 2 to be slide together with the magazine 2 in the direction shown by arrow a against the coil spring 181.

The third extrusion arm 167 is rotated around the fulcrum shaft 168 in the direction shown by arrow q by the coil spring 170 as the slide cam is slid in the direction shown by arrow a, and is moved into the magazine insertion space 13 in the direction shown by arrow q through the elongated hole 169 to enter the guide groove 38 of the magazine 2 which is being pulled in the direction shown by arrow a.

Immediately before the slide cam 178 is then slid together with the magazine 2 to the loading completion position shown in Fig. 55 in the direction shown by arrow a, the cam projection 179 of the slide cam 178 is separated from the driven cam surface 180 of the third extrusion arm 167 in the direction shown by arrow a.

Therefore, substantially at the same time that the slide cam 178 reaches the loading completion position shown in Fig. 55 integrally with the magazine 2, the third extrusion arm 167 is rotated about 45° by the coil spring 170 around the fulcrum shaft 168 in the direction shown by arrow q, as shown by the solid line in Fig. 55, automatically inserted into the hollow portion 4 of the magazine 2 from the second opening 39 of the magazine 2 in the direction shown by arrow q, and set therein. When the stepped portion 172 of the third extrusion arm 167 is brought into contact with the stopper 171 of the slider 166 in the direction shown by arrow q to stop the third extrusion arm 167, the cartridge extrusion surface 167a formed on the side of the third extrusion arm 167 at the end thereof on the side of the point of arrow r is set at right angles with the direction of extrusion of the magazine 2 and the cartridge, i.e., the direction shown by arrow b, to cause the state wherein the tape cartridge 1 can be extruded by the third extrusion arm 167 in the direction shown by arrow b.

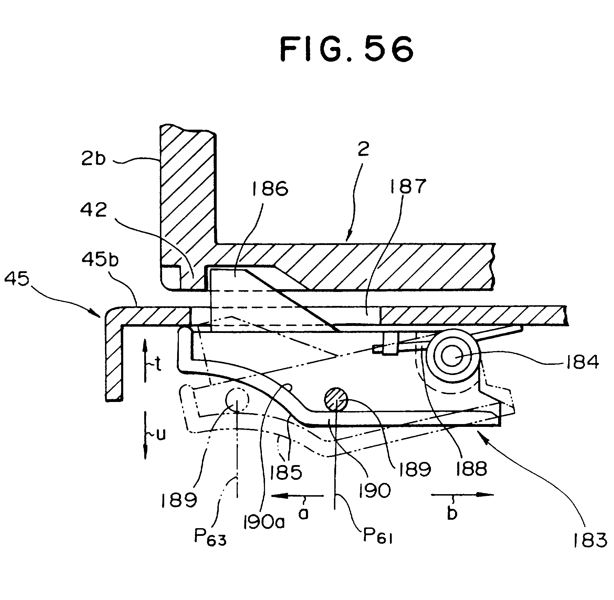

On the other hand, when the magazine 2 is drawn to the loading completion position in the direction shown by arrow a, as shown by the solid line in Fig. 56, the locking claw 186 of the magazine locking lever 185 passes by the second locked portion 42 of the magazine 2 against the coil spring 188 in the direction shown by arrow b, to be automatically engaged with the side of the second locked portion 42 on the side of the point of arrow b. Thus, the moment the magazine 2 is drawn to the loading completion position in the direction shown by arrow a, the magazine 2 is automatically locked at the loading completion position by the magazine locking lever 185 of the magazine locking mechanism 183.

### [Operation of extruding the tape cartridge by the third extrusion arm]

On the basis of a command signal from the computer to extrude the tape cartridge 1, the pinion 175 is normally rotated by the geared motor 174 of the rack and pinion mechanism 176 to drive the rack 173 in the direction shown by arrow b, and the slider 166 is slid from the standby position P₆₁ shown by the solid line in Fig. 52 to the extrusion end position P₆₂ shown by the two-dot-chain line along the guide shaft 165 in the direction shown by arrow b. As a result, the third extrusion arm 167 is horizontally moved by parallel motion from the standby position P₆₁ shown by the solid line in Fig. 55 to the extrusion end position P₆₂ shown by the two-dot-chain line in the direction shown by arrow b, while maintaining the state where the rotation of the third extrusion arm 167 is inhibited by engagement between the stepped portion 172 thereof and the stopper 171 of the slider 166.

The third extrusion arm 167 is thus moved into the cartridge containment port 7 from the hollow portion of the magazine 2 through the notch 40 in the direction shown by arrow b to push the front end 1a of the tape cartridge 1 contained in the cartridge containment port 7 by the cartridge extrusion surface 167a in the direction shown by arrow b. The tape cartridge 1 is consequently horizontally pushed into the cartridge tray 16 of the elevator 17 in the direction shown by arrow b, as described above with reference to Figs 6(B) and 10.

At this time, when the front end 1a of the tape cartridge 1 pushed into the cartridge tray 16 is pushed out to a position at distance L₂ from the reference position P₁ in the direction shown by arrow b and reaches the second extrusion position P₃, the geared motor 174 of the rack and pinion mechanism 176 is stopped on the basis of the detection output from the cartridge extrusion position detecting sensor in the cartridge tray 16, which will be described below.

At this time, when no detection signal is obtained from the cartridge extrusion position detection for some reason, the other optical sensor 194 is operated (OFF → ON) by the end of the optical shutter plate 192 on the side of the point of arrow a to stop the geared motor 174 and prevent overrunning of the third extrusion arm 167 in the direction shown by arrow b.

After the tape cartridge 1 is pushed into the cartridge tray 16 from the cartridge containment port 7 in the direction shown by arrow b, the pinion 175 is reversely rotated by the geared motor 174 of the rack and pinion mechanism 176 to drive the rack 173 in the direction shown by arrow b, thereby returning the third extrusion arm 167 integrally with the slider 166 to the initial standby position P₆₁ shown by the solid line in Fig. 55 in the direction shown by arrow a.

### [Operation of releasing the locked state when ejecting the magazine]

When the magazine 2 in the auto-loader 11 is automatically ejected from the magazine insertion port 19 in the direction shown by arrow b by the magazine loading mechanism 51, as described above, the pinion 175 is first reversely rotated by the geared motor 174 of the rack and pinion mechanism 176 to slide the slider 166 through the rack 173 from the standby position P₆₁ shown by the solid line in Figs. 52 and 55 to the over-stroke position P₆₃ shown by the one-dot-chain line in the direction shown by arrow a. The other optical sensor 195 is operated (ON → OFF) by the other optical shutter plate 194 to stop the geared motor 174.

As a result, the cam drive pin 189 of the slider 166 is pressed by the cam surface 190a of the rib-shaped cam 190 of the magazine locking lever 185 in the direction shown by arrow a, as shown by the one-dot-chain line in Figs. 52 and 56. The cam action of the cam surface 190 rotates the magazine locking lever 185 around the fulcrum shaft 184 in the direction shown by arrow u against the coil spring 188. The locking claw 186 is thus separated from the second locked portion 42 of the magazine 2 in the direction shown by arrow u to release the lock of the magazine at the loading completion position.

### [Operation of retracting the third extrusion arm to the outside of the magazine]

As described above, the magazine 2 contained in the magazine insertion space 13 is pushed out in the direction shown by arrow b by the operation of automatically ejecting the magazine to the outside of the magazine insertion port 19 by the magazine loading mechanism 51. At this time, the slide cam 178 is slid together with the magazine 2 from the loading completion position shown by the solid line in Fig. 55 to the position shown by the solid line in Fig. 54 by the coil spring 181 in the direction shown by arrow b.

When the driven cam surface 180 of the third extrusion arm 167 is thus pushed by the cam projection 179 of the slide cam 178 in the direction shown by arrow b, the third extrusion arm 167 is rotated around the fulcrum shaft 168 against the coil spring 170 in the direction shown by arrow r by the cam action of the driven cam surface 180. The third extrusion arm 167 is separated from the magazine 2 in the direction shown by arrow L and retracted to the retract position, which is shown by the solid line in Fig. 54, outside the magazine insertion space 13.

The pinion 175 is then normally rotated again by the geared motor 174 of the rack and pinion mechanism 176 to return the slider 166 to the standby position P₆₁ shown in Fig. 52 through the rack 173 in the direction shown by arrow b. The other optical sensor 195 is operated (ON → OFF) by the end of the other optical shutter plate 192 on the side of the point of arrow b to stop the geared motor 174. At the same time, the cam drive pin 189 is separated from the cam surface 190 of the magazine locking lever 185 in the direction shown by arrow b, and the locking claw 186 of the magazine locking lever 185 is again projected into the magazine insertion space 13 in the direction shown by arrow t by the coil spring 188.

### [Description of the cartridge loading mechanism of the drive]

The cartridge loading mechanism 57 provided in the drive 14 is described below with reference to Figs. 57 through 60.

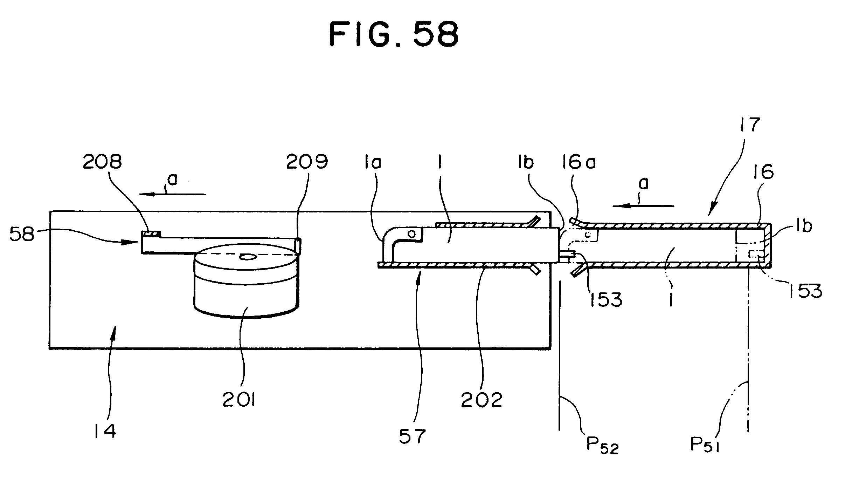

The drive 14 comprises a magnetic recording/reproducing device in a helical scanning system, and is provided with a rotating drum head 201 for magnetically recording and reproducing data on and from magnetic tapes MT in the tape cartridges 1. As shown in Figs. 57 and 58, the tape cartridge 1 which is horizontally extruded, by the second cartridge extruding mechanism 55, from the cartridge tray 16 into the cartridge port 15 in the direction shown by arrow a, is horizontally inserted into a cartridge holder 202 of the cartridge loading mechanism 57 in the direction shown by arrow a.

The tape cartridge 1 is then horizontally drawn, by the cartridge holder 202, to a position in the drive 14 near the rotating head drum 201 in the direction shown by arrow a, and vertically moved downward in the direction shown by arrow d to be loaded.

When the tape cartridge 1 is loaded, a movable cover 1g of the tape cartridge 1 is opened, and the magnetic tape MT in the tape cartridge 1 is then pulled out by a tape loading mechanism 203, and helically wound on the outer periphery of the rotating head drum 201 to be loaded. The data is recorded or reproduced on or from the magnetic tape MT by the rotating head drum 201.

After recording or reproduction, the magnetic tape MT is unloaded into the tape cartridge 1 by the tape loading mechanism 203, and the tape cartridge 1 is then moved, by the cartridge holder 202 of the cartridge loading mechanism 57, to the cartridge port 15 shown in Figs. 57 and 58 in the directions shown by arrows c and b. At the same time, the movable cover 1g of the tape cartridge 1 is closed. The tape cartridge 1 is then ejected into the cartridge tray 16 by a cartridge ejecting mechanism, which will be described below, in the direction shown by arrow b.

### [Description of the cartridge ejecting mechanism in the drive]

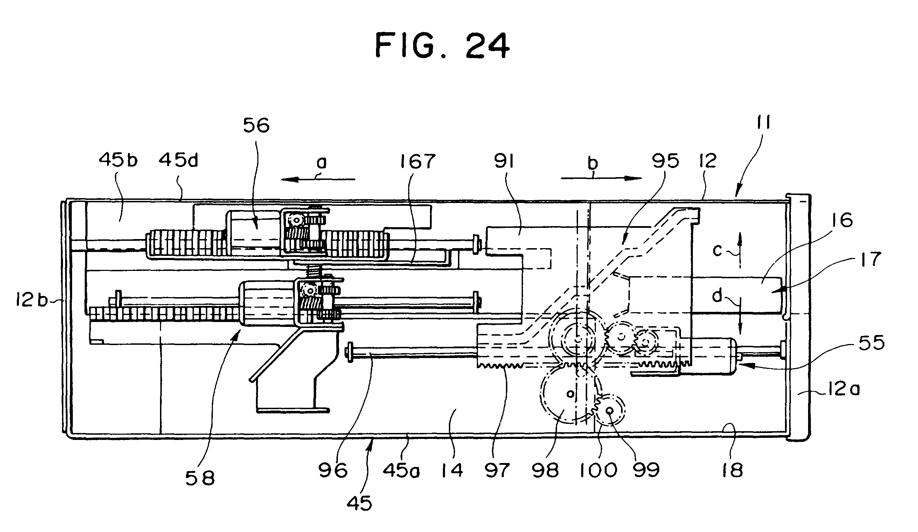

The cartridge ejecting mechanism 58 provided in the drive 14 is described below with reference to Figs. 24, 57 through 63, 73 and 74.

The upper side of the drive 14 is open. The cartridge ejecting mechanism 58 is horizontally disposed along the upper portion of the drive 14 on the side of the other side chassis 45b of the chassis 45, and a guide shaft 206 is horizontally provided on the side chassis 45b in parallel with the magazine 2. A slider 207 serving as a slide driving member is provided along the guide shaft 206 so as to be slidable in the directions shown by arrows a and b.

A driving arm 208 which is set at right angles with the direction of sliding of the slider 207b, i.e., the directions shown by arrows a and b, is horizontally disposed at a height larger than the rotating head drum 201, an end of the driving arm 208 being fixed to the slider 207. A pair of left and right ejection arms 209, which are integrally formed on the lower portion of the driving arm 208 at a distance therebetween, are horizontally extended from the driving arm 208 in parallel with the slider 207 in the direction shown by arrows b. The pair of the left and right ejection arms 209 are set at the same height as the cartridge port 15 on both sides of the rotating head drum 201.

A driving mechanism for sliding the slider 207 in the directions shown by arrows a and b comprises a rack and pinion mechanism comprising a rack 210 which is horizontally formed along the side of the slider 207, and a pinion 212 which is rotated by a geared motor 211 to drive the rack 210. The geared motor 211 is provided on the side chassis 45b by a mounting plate 214 . A guided plate 215 which is extended downward from the slider 207 is guided by a guide plate 216 provided on the side chassis 45b in the directions shown by arrows a and b.

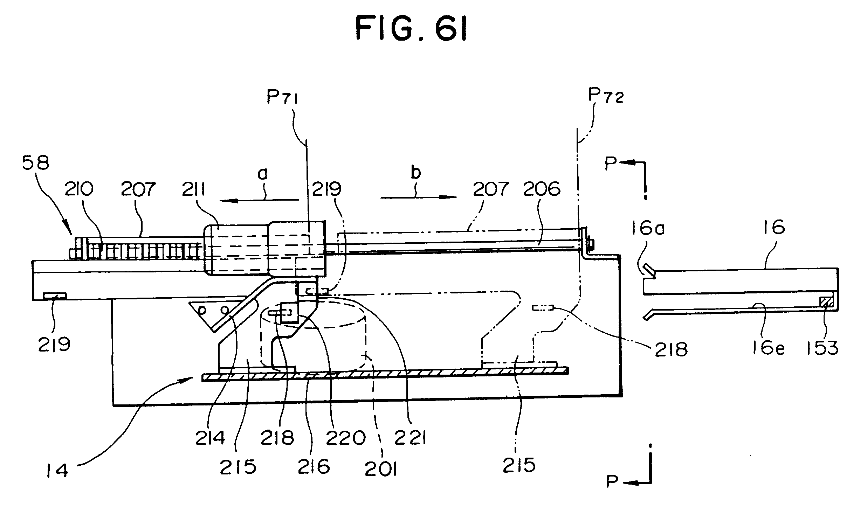

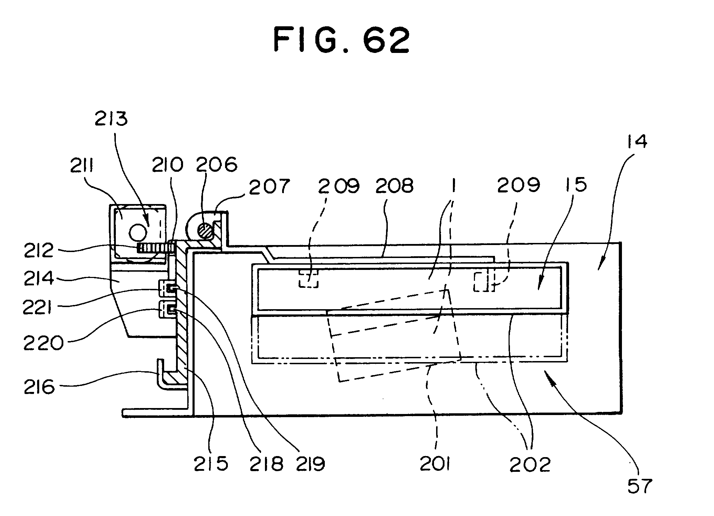

As shown in Figs. 61 and 62, a pair of upper and lower optical sensors 220 and 221 serving as photointerrupters which are turned on and off by upper and lower horizontal optical shutter plates 218 and 219, respectively, which are integrally formed on the side of the slider 207, are provided on the side chassis 45b. The optical sensor 220 serves as a sensor for setting the pair of the left and right ejection arms 209 at the standby position, and the other optical sensor 221 serves as a sensor for preventing overrunning of the pair of the left and right ejection arms 209 in the direction shown by arrows b.

### [Setting the ejection arms at the standby position]

When the power supply for the auto-loader 11 is turned on, the pinion 212 is reversely rotated by the geared motor 211 of the rack and pinion mechanism 213 to drive the rack 210 in the direction shown by arrows a, and move, together with the slider 207, the driving arm 208 and the pair of the left and right ejection arms 209 to the standby position P₇₁ shown in Figs. 57 through 61. The optical sensor 220 is operated (OFF → ON) by the optical shutter plate 218 to stop the geared motor 211.

In this standby state, since the pair of the left and right ejection arms 209 are sufficiently separated from the cartridge loading mechanism 57 and the tape loading mechanism 203 in the directions shown by arrows a and c, respectively, the pair of the left and right ejection arms 209 do not interfere with the operations of loading and ejecting the tape cartridge 1 and the operations of loading and unloading the magnetic tape MT.

### [Operation of ejecting the tape cartridge into the cartridge tray from the drive]

After recording or reproducing, the tape cartridge 1 is the ejected into the cartridge port 15 by the tape cartridge loading mechanism 57, and the pinion 212 is then normally rotated by the geared motor 211 of the rack and pinion mechanism 213 to drive the rack 210 on the basis of the command signal from the computer to eject the cartridge. The slider 207 is thus slid from the standby position P₇₁ shown by a solid line in Figs. 57 and 61 to the eject position P₇₂ shown by a one-dot-chain line along the guide shaft 206 in the direction shown by arrows b.

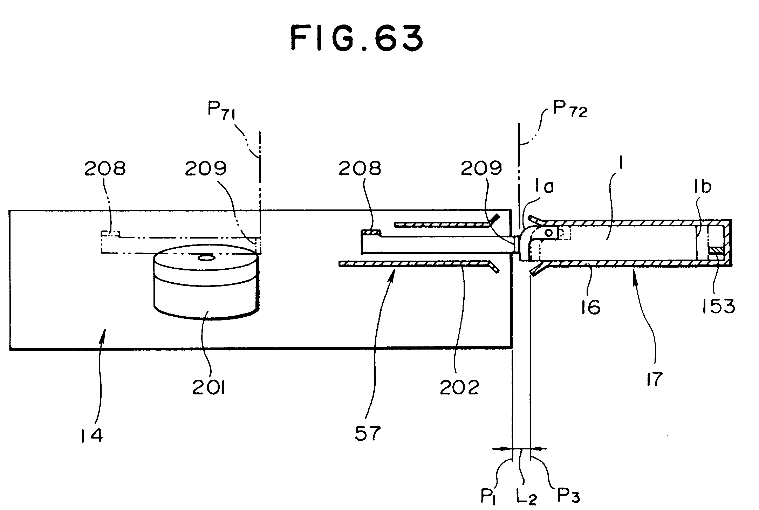

As a result, the pair of the left and right ejection arms 209 are horizontally moved together with the slider 207, by the driving arm 208, to the eject position in the direction shown by arrows b as shown by a two-dot-chain line in Fig. 57 and Fig. 61 and by a solid line in Fig. 63. At this time, the driving arm 208 passes through the upper portion of the rotating head drum 201, and the pair of the left and right ejection arms 209 pass by the both sides of the rotating head drum 201.

The pair of the left and right ejection arms 209 are moved into the cartridge holder 202 in the direction shown by arrows b so that the ends of the ejection arms 209 horizontally push the front end 1a of the tape cartridge 1 in the cartridge holder 202 in the direction shown by arrows b. The tape cartridge 1 is thus horizontally pushed out from the cartridge port 15 into the cartridge tray 16 in the direction shown by arrows b.

At this time, when the front end 1a of the tape cartridge 1 which is pushed into the cartridge tray 16 is extruded to the position at distance L₂ from the reference position P₁ in the direction shown by arrows b and reaches the second extrusion position P₃, as described above with reference to Fig. 10, the geared motor 211 of the rack and pinion mechanism 213 is stopped on the basis of detection output from the cartridge extrusion position detecting sensor in the cartridge tray 16, which will be described below. The driving arm 208 and the pair of the left and right ejection arms 209 are stopped at the eject position.

When no detection output is obtained from the cartridge extrusion position detecting sensor for some reason, the other optical sensor 221 is operated (ON → OFF) by the other optical shutter plate 219 to stop the geared motor 211, thereby preventing overrunning of the driving arm 208 and the pair of the left and right ejection arms 209 in the direction shown by arrows b.

The pinion 212 is then reversely rotated by the geared motor 211 of the rack and pinion mechanism 213 to drive the rack 210 in the direction shown by arrows a, and return the driving arm 208 and the pair of the left and right ejection arms 209 together with the slider 207 to the standby position P₇₁ shown in Figs. 57 through 60 in the direction shown by arrows b.

### [Cartridge positioning mechanism in the cartridge tray]

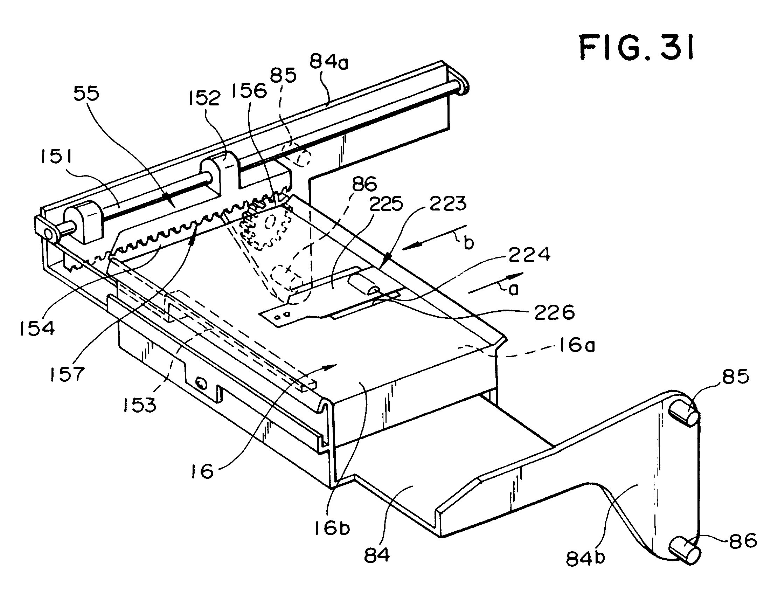

The cartridge positioning mechanism 59 for positioning the tape cartridge 1, which is extruded into the cartridge tray 16 from the magazine 2 and the drive 14, in two steps in the cartridge tray 16 is described below with reference to Figs. 31, 34, 64 and 65.

A horizontal positioning roller 224 serving as part of a mechanism 223 for positioning the tape cartridge 1 is disposed at the substantially central portion of the top plate 16b of the cartridge tray 16 near the opening 16a. The positioning roller 224 is rotatably provided at the front end of a plate spring 225 on the side of the point of arrows a, which has the rear end fixed to the top plate 16b on the side of the point of arrows b, so that the positioning roller 224 can vertically be moved in and out of the upper portion of the cartridge tray 16 through an opening 226 formed in the top plate 16b.

The cartridge extrusion position detecting lever 227 and the cartridge extrusion position detecting sensor 228, which comprise a mechanism for detecting the position of extrusion of the tape cartridge 1 into the cartridge tray 16 in the direction shown by arrows b, are provided below the rear end side of the bottom plate 16c of the cartridge tray 16, i.e., on the side of the point of arrow b, at the substantially central portion thereof. The cartridge extrusion position detecting lever 227 is mounted on the tray elevator 84 through a horizontal fulcrum shaft 229 so as to be vertically rotatable in the directions shown by arrows v and w. A detection portion 227a which is integrally formed at the upper end of the cartridge extrusion position detecting lever 227 is inserted into the cartridge holder 16 through an opening 230 formed in the bottom plate 16c.

The cartridge extrusion position detecting sensor 228 is provided on the lower side of a sensor base 231 which is horizontally mounted to the lower side of the tray elevator 84, and comprises an optical sensor serving as a photointerrupter. A pair of optical shutter plates 232 and 233 are integrally formed, at an end of a circular arm 227b which is integrally formed in the lower portion of the cartridge extrusion position detecting lever 227, at a distance therebetween in the direction of rotation of the circular arm 227, i.e., in the directions shown by arrows v and w. The circular arm 227 is inserted into a portion below the sensor base 231 through an opening 234 formed in the tray elevator 84 and the sensor base 231. The cartridge extrusion position detecting lever 227 is urged to rotate in the direction shown by arrows v by a coil spring 235 so as to be stopped at the position shown by a two-dot-chain line in Fig. 64.

### [Operation of positioning the tape cartridge at the first extrusion position in the cartridge tray]

In extrusion of the tape cartridge 1 into the cartridge tray 16 from the cartridge ejection port 6 of the magazine 2 in the direction shown by arrows b by the first extrusion arm 136 of the first cartridge extruding mechanism 54, as described above with reference to Figs. 10 and 47, when the front end 1a of the tape cartridge 1 is displaced in one step to the position at distance L₁ from the reference position P₁ and reaches the first extrusion position P₂, the first extrusion position of the tape cartridge 1 is detected by the cartridge extrusion position detecting sensor 228.

At this time, the rear end 1b of the tape cartridge 1 contacts the detection portion 227a of the cartridge extrusion position detecting lever 227, and pushes the detection portion 227a to the position shown by a solid line in Fig. 64 in the direction shown by arrows b. As a result, the cartridge extrusion position detecting lever 227 is rotated around the fulcrum shaft 229 to the position shown by a solid line in Fig. 64 in the direction shown by arrow w and the cartridge extrusion position detecting sensor 228 is operated (OFF → ON) by the optical shutter plate 232 to detect the first extrusion position P₂ of the tape cartridge 1.

The geared motor 142 of the first cartridge extruding mechanism 54 is thus stopped on the basis of the detection output from the cartridge extrusion position detecting sensor 228, as described above, to stop the first extrusion arm 136 at the extrusion end position. The extrusion stroke of the tape cartridge 1 by the first extrusion arm 136 is automatically controlled.

### [Operation of positioning the tape cartridge at the second extrusion position in the cartridge tray]

In the extrusion of the tape cartridge 1 into the cartridge tray 16 from the cartridge containment port 7 of the magazine 2 by the third extrusion arm 167 of the third cartridge extruding mechanism 56 in the direction shown by arrow b, as described above with reference to Figs. 10, 55 and 63, and in the extrusion of the tape cartridge 1 into the cartridge tray 16 from the cartridge port 15 of the drive 14 by the pair of the left and right ejection arms 209 of the cartridge ejection mechanism 58 in the direction shown by arrow b, when the front end 1a of the tape cartridge 1 is displaced in two steps by the position at distance L₂ from the reference position P₁ in the direction shown by arrow b, the second extrusion position P₃ of the tape cartridge 1 is detected by the cartridge extrusion position detecting sensor 228.

Namely, at this time, the rear end 1b of the tape cartridge 1 contacts the detection portion 227a of the cartridge ejecting lever 227, as shown in Fig. 65, and pushes the detection portion 227a to the position shown in Fig. 65 in the direction shown by arrow b. The cartridge extrusion position detecting lever 227 is rotated around the fulcrum shaft 229 to the position shown in Fig. 65 in the direction shown by arrow w so that the cartridge extrusion position detecting sensor 228 is operated (OFF → ON OFF) by the two optical shutter plates 232 and 233 to detect the second extrusion position of the tape cartridge 1.

The geared motors 174 and 211 of the third cartridge extruding mechanism 56 and the cartridge ejecting mechanism 58 are stopped on the basis of the detection output from the cartridge extrusion position detecting sensor 228 to stop the third extrusion arm 167 and the pair of the left and right cartridge ejection arms 209, respectively, at the extrusion end positions. The extrusion stroke of the tape cartridge 1 by the third extrusion arm 167 and the cartridge ejection arms 209 is automatically controlled.

At this time, when the tape cartridge 1 is pushed out to the first extrusion position P₂ in the cartridge tray 16 in the direction shown by arrow b, as shown in Fig. 64, the positioning roller 224 is elastically engaged with the recessed portion 1e on the upper surface 1c of the tape cartridge 1 by the plate spring 225 to mechanically position the tape cartridge 1 at the first extrusion position P₂ in the cartridge tray 16.

Alternatively, at this time, when the tape cartridge 1 is pushed to the second extrusion position P₃ in the cartridge tray 16 in the direction shown by arrow b, as shown in Fig. 65, the positioning roller 224 may elastically be engaged with the recessed portion 1e of the tape cartridge 1 to mechanically position the tape cartridge 1 at the second extrusion position P₃ in the cartridge tray 16.

### [Description of the mechanism for detecting error in the insertion of the tape cartridge]

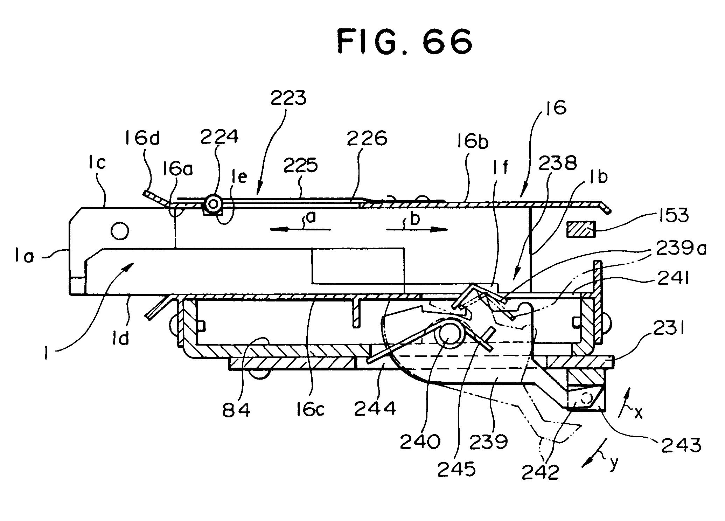

An insertion error detecting mechanism 238 for the tape cartridge 1, which is provided on the cartridge tray 16, is described below with reference to Fig. 66.

The insertion error detecting lever 239 comprising a mechanism for detecting insertion error of the tape cartridge 1 is mounted below the rear end side of the bottom plate 16c of the cartridge tray 16 on the side of the point of arrow b at the central portion thereof. The insertion error detecting lever 239 is mounted on the upper side of the tray elevator 84 through a horizontal fulcrum shaft 240 so as to be rotatable in the directions shown by arrows x and y, a detection portion 239a integrally formed at the upper end thereof being inserted into the cartridge tray 16 through an opening 241 formed in the bottom 16c.

An optical sensor 243 serving as a photointerrupter which is turned on and off by an optical shutter plate 242 extended rearward downward from the lower end of the insertion error detecting lever 239 and which comprises means for detecting error in the insertion of the tape cartridge 1 is provided on the lower side of the sensor base 231. A lower half of the insertion error detecting lever 239 is inserted into an opening 244 formed in the tray elevator 84 and the sensor base 231, and the insertion error detecting lever 239 is urged to rotate, by a coil spring 245, to a position shown by a solid line in Fig. 66 in the direction shown by arrow x.

### [Operation of detecting error in the insertion of the tape cartridge]

When the tape cartridge 1 is inserted into the cartridge insertion port 5, the cartridge ejection port 6 and the cartridge containment port 7 of the magazine 2 in the direction shown by arrow a and set therein, as described above with reference to Fig. 13, the tape cartridge 1 must be correctly inserted and set in both the longitudinal and lateral directions thereof.

At this time, when the tape cartridge 1 is inserted and set in the magazine 2 in error in one of the longitudinal and vertical directions, as described above, an error in the insertion of the tape cartridge 1 can be detected by the insertion error detecting mechanism 238 when the magazine 2 is set in the auto-loader 11, and when the tape cartridge 1 is pushed into the cartridge tray 16 from the cartridge ejection port 6 or the cartridge containment port 7 of the magazine 2 in the direction shown by arrow b.

Namely, Fig. 66 shows the case where the tape cartridge 1 inserted into the magazine 2 in the correct direction is pushed into the cartridge tray 16 in the direction shown by arrow b. At this time, the detection portion 239a of the insertion error detecting lever 239 enters the recessed portion 1f formed in the bottom side 1d of the tape cartridge 1 in the direction shown by arrow x.

Therefore, at this time, the insertion error detecting lever 239 is rotated to the position shown by the solid line in Fig. 66 by the coil spring 245 in the direction shown by arrow x, and the optical sensor 243 is operated (OFF → ON → OFF) by the optical shutter plate 242 to detect that the tape cartridge 1 is correctly set in both the longitudinal and vertical directions.

On the other hand, when the tape cartridge 1 is reversed in the longitudinal direction, the front and rear ends 1a and 1b of the tape cartridge 1 which is inserted into the cartridge tray 16 in the direction shown by arrow b are reversed, and the recessed portion 1f of the bottom side 1d is thus deviated from the detection portion 239a in the forward direction, i.e., in the direction shown by arrow a. When the tape cartridge 1 is reversed in the vertical direction, the upper and lower sides 1c and 1d of the tape cartridge 1 which is inserted into the cartridge tray 16 in the direction shown by arrow b are reversed, and the recessed portions 1f and 1c of the bottom side 1d and the upper side 1c are thus reversed, thereby deviating the recessed portion 1f upward in the direction shown by arrow c from the detection portion 239a.

In any state in which the tape cartridge 1 inserted is in error in the longitudinal or vertical direction, the detection portion 239a cannot be inserted into the recessed portion 1f, and the detection portion 239a is pushed down in the direction shown by arrow d by the bottom side 1d or the upper side 1c of the tape cartridge 1, as shown by a two-dot-chain line in Fig. 66.

At this time, the insertion error detecting lever 239 is thus rotated to the position shown by a two-dot-chain line in Fig. 66 against the coil spring 245 in the direction shown by arrow y so that the optical sensor 243 is operated OFF → ON by the optical shutter plate 242. The insertion error of the tape cartridge 1 can thus be detected.

A sequence is included so that when the insertion error of the tape cartridge 1 is detected by the optical sensor 243, the tape cartridge 1 is immediately returned into the magazine 2 from the cartridge tray 16, and the magazine 2 is immediately ejected from the magazine insertion port 19.

### [Description of a mechanism for automatically pushing the tape cartridge in the magazine]

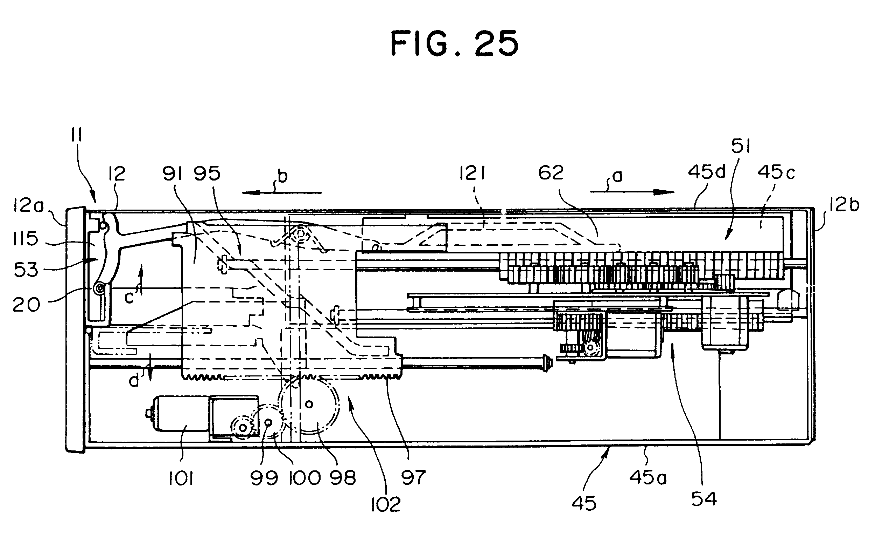

The cartridge auto-pushing mechanism for automatically pushing the tape cartridge 1, which projects in error from the magazine 2 in the direction shown by arrow b, into the magazine 2 in the direction shown by arrow a is described below with reference to Figs. 25 through 30, 36 through 45 and 67 through 70.

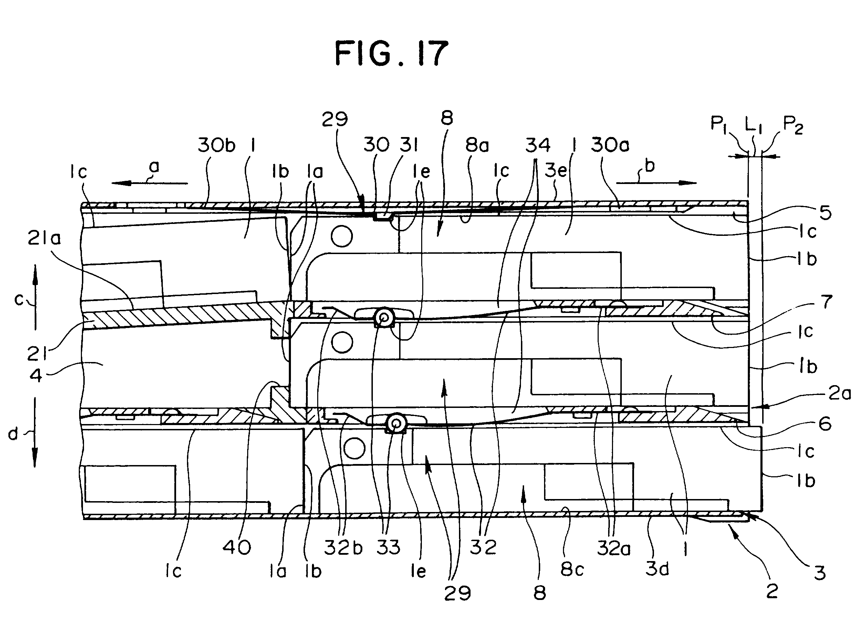

Namely, when the total of eight tape cartridges 1 are inserted into the magazine 2 in the normal direction and correctly set therein, as described above with reference to Figs. 13 and 17, the tape cartridges 1 are positioned by the cartridge positioning mechanism 29 at the total of four positions including the positions in the cartridge insertion port 5, the cartridge ejection port 6, and the cartridge containment port 7 and the lower position of the hollow portion 4.

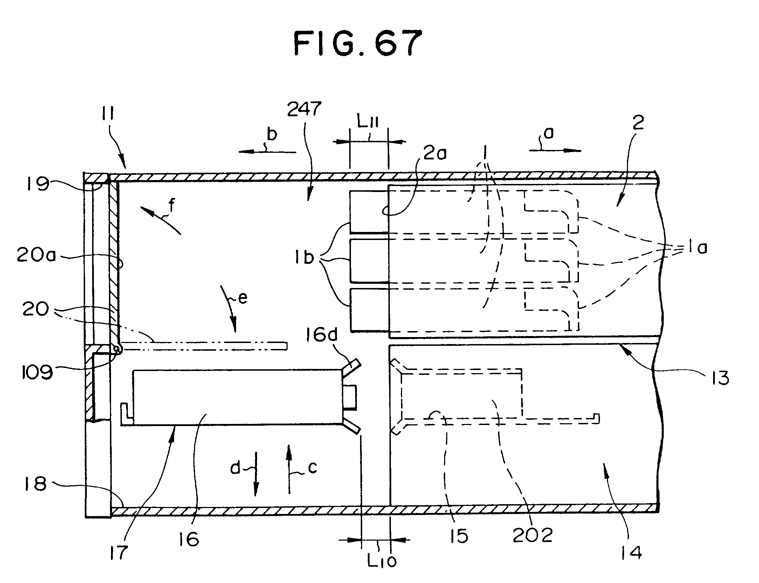

However, when the tape cartridges 1 are inserted not sufficiently or in error into the cartridge insertion port, the cartridge ejection port 6 and the cartridge containment port 7 of the magazine 2, and the lower position of the hollow portion 4, the tape cartridge 1 sometimes projects in error from the side 2a of the magazine 2 in the direction shown by arrow b opposite to the loading direction, as shown in Fig. 67, as a reaction of auto-loading of the magazine 2 into the auto-loader 11 from the magazine insertion port 15 in the direction shown by arrow a, as described above with reference to Fig. 1.

At this time, if the tape cartridge 1 projects from the side 2a of the magazine 2 in the direction shown by arrow a to a position at distance L₁₁ larger than the distance L₁₀ between the side 2a of the magazine 2 and the front edge 16d of the cartridge tray 16, when the cartridge tray 16 is moved upward from the drive position in the direction shown by arrow c, the lower side of the tape cartridge 1 projecting contacts the front edge 16d of the cartridge tray 16 and thus interferes with the upward movement of the cartridge tray 16, thereby causing an inoperable state.

The cartridge auto-pushing mechanism 247 is capable of automatically pushing the tape cartridge 1, which projects in error from the side 2a of the magazine 2, into the magazine 2.

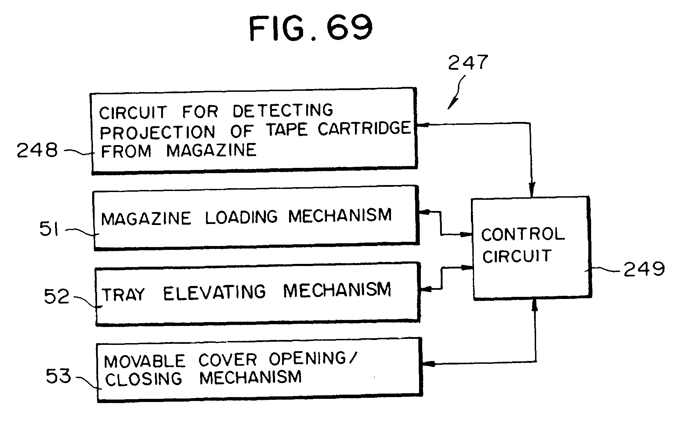

The cartridge auto-pushing mechanism 247 comprises a cartridge projection detecting circuit 248 for detecting projection of the tape cartridge 1 from the magazine 2, and a control circuit 249, as shown in Fig. 69, so that the magazine loading mechanism 51, the tray elevating mechanism 52 and the movable cover driving mechanism 53 are controlled on the basis of the detection output from the projection detecting circuit 248.

Examples of various methods which can be employed as the cartridge projection detecting circuit 248 include a method of detecting the tape cartridge 1 projecting from the side 2a of the magazine 2 by using an optical sensor or the like, as shown in Fig. 67, and a method of electrically detecting a load which is applied to the geared motor 101 when the cartridge tray 16 moved upward in the direction shown by arrow c by driving the geared motor 101 of the tray elevating mechanism 52 contacts the lower side of the tape cartridge 1 projecting from the side 2a of the magazine 2 and is stopped thereby.

### [Operation of automatically pushing the tape cartridge into the magazine]

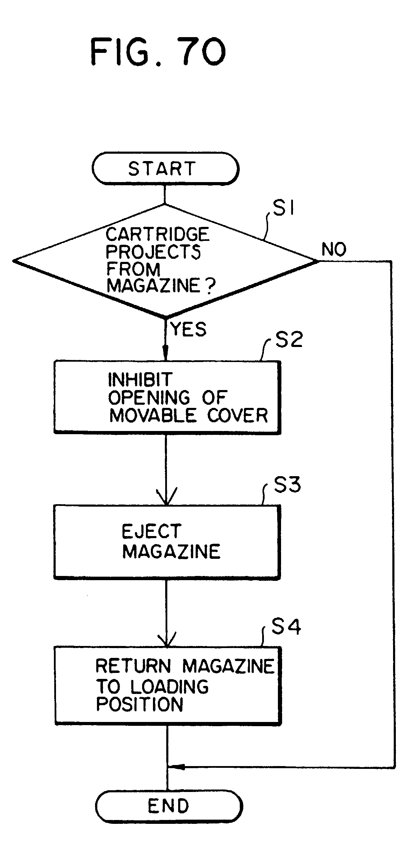

The operation of automatically pushing the tape cartridge 1 into the magazine 2 is described below with reference to a flowchart of Fig. 70.

When the cartridge projection detecting circuit 248 detects in Step S1 that the tape cartridge 1 projects from the side 2a of the magazine 2 which is automatically loaded in the auto-loader 11, as shown in Fig. 67, the control circuit 249 moves the slide guide plate 91 of the tray elevating mechanism 52 shown in Figs. 36 through 38 from the initial position P₂₀ to the standby position P₂₁. The movable cover opening/closing mechanism 53 shown in Figs. 39 through 45 is inhibited from opening the movable cover 20 in Step S2. The magazine 2 is ejected in the direction shown by arrow b by the magazine loading mechanism 51 shown in Figs. 25 to 30 in Step S3. After the magazine 2 is brought into contact with the back side 20a of the movable cover 20 in Step S4, the magazine 20 is loaded at the loading completion position in the direction shown by arrow a.

During the operation of inhibiting opening of the movable cover 20, when the slide guide plate 91 is moved from the initial position P₂₀ to the standby position P₂₁ in the direction shown by arrow a, as described above with reference to Figs. 36 through 38, with the movable cover driving lever 115 returned to the close position in the direction shown by arrow m, as shown in Fig. 42, the driven cam roller 128 is separated from the cam inclined surface 131a of the roll-formed cam 131, and the movable cover locking lever is rotated in the direction shown by arrow n, as shown in Fig. 43. As a result, the movable cover locking pin 126 is inserted between the engaged piece 112 of the movable cover 20 and the engaging recessed portion 118 of the movable cover driving lever 115 in the direction shown by arrow n, as shown in Figs. 39 and 42. The movable cover locking pin 126 thus inhibits the opening of the movable cover 20 in the direction shown by arrow e.

At this time, when the movable cover locking pin 126 is engaged with the engaging recessed portion 118, the movable cover driving lever 115 is locked at the open position shown in Fig. 42 by the movable cover locking pin 126, and the driven cam pin 119 of the movable cover driving lever 115 is held in the lower horizontal path 121a of the cam groove 121 of the slider 62 of the magazine loading mechanism 51.

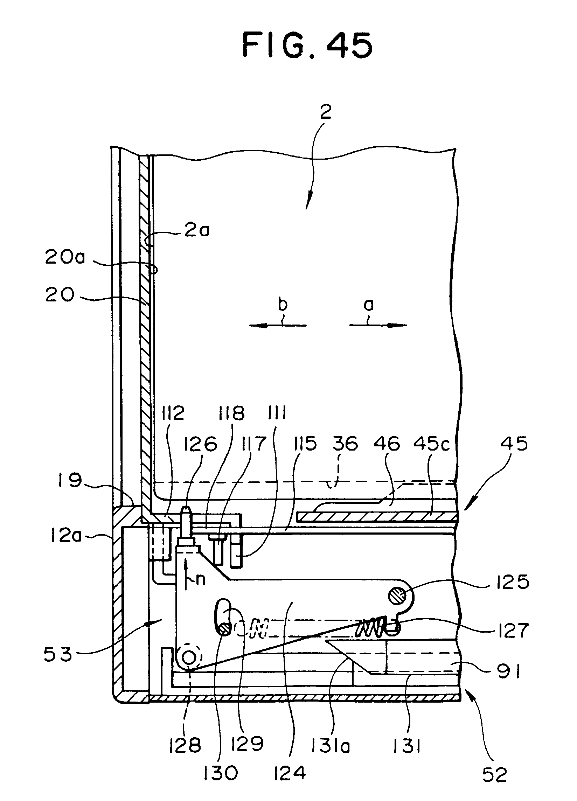

The magazine 2 is then ejected in the direction shown by arrow b by the magazine loading mechanism 51, as shown in Figs. 42 and 45. At this time, unlike normal ejection of the magazine, the driven cam pin 119 is relatively linearly moved in the lower horizontal path 121a from the end 121e of the lower horizontal path 121a to the other end 121f thereof in the direction shown by arrow b, without entering the upper horizontal path 121c through the inclined path 121b of the cam groove 121.

At this time, therefore, the movable cover driving lever 115 is not driven to open the cover in the direction shown by arrow k, and the magazine is ejected in the direction shown by arrow b with the movable cover 20 locked at the closed position in the state wherein opening is inhibited.

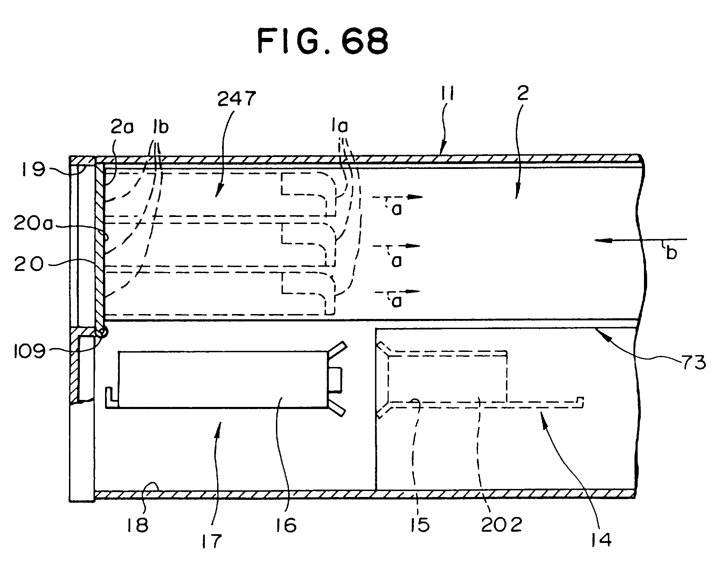

As a result, the side 2a of the magazine 2 is brought into contact with the back side 20a of the movable cover 20 in the direction shown by arrow b, as shown in Fig. 68 so that the tape cartridge 1 projecting from the side 2a of the magazine 2 in the direction shown by arrow b is automatically pushed to the normal position in the magazine 2 in the direction shown by arrow a by the back side 20a of the movable cover 20.

At the same time, the position of contact of the magazine 2 with the movable cover 20 in the direction shown by arrow b is detected by an optical sensor or the like, or the contact is detected by the method of electrically detecting the load which is applied to the motor 73 of the magazine loading mechanism 51 when the magazine 2 contacts the movable cover 20 in the direction shown by arrow b and is stopped thereby.

The magazine loading mechanism 51 is then reversely rotated to return the magazine 2 to the normal loading completion position in the auto-loader 11 in the direction shown by arrow a and load the magazine 2 therein. In this way, a series of operations is completed.

Although the preferred embodiment of the present invention is described above, the present invention is not limited to the embodiment, and various modifications can be made on the basis of the technical idea of the present invention.

In the above-described embodiment, the rotation mechanism for rotating the tape cartridges 1 while transferring the tape cartridges 1 one by one between the cartridge insertion port 5, the cartridge ejection port 6 and the cartridge containment port 7 of the magazine 2 and the cartridge port 15 of the drive 14 comprises the cartridge tray 16 of the elevator 17, the first to third cartridge extruding mechanisms 54 to 56, and the cartridge ejecting mechanism 58. The cartridge transfer mechanism for transferring the tape cartridges 1 between the cartridge insertion port 5, the cartridge ejection port 6, the cartridge containment port 7 and the cartridge port 15 and the cartridge tray 16 in the directions shown by arrows a and b comprises the first to third cartridge extruding mechanisms 54 to 56, and the cartridge ejecting mechanism 58.

The auto-loader for the tape cartridges of the present invention constructed as described above exhibits the following advantages.

At least the cartridge insertion port and the cartridge ejection port are formed in the upper and lower portions of a side of the magazine in the lengthwise direction thereof so that a plurality of tape cartridges are successively inserted into the cartridge insertion port, successively contained in the magazine along the lengthwise direction thereof, and successively extruded to the cartridge ejection port. When the magazine is inserted from the magazine insertion port formed in the front panel of the auto-loader body along the lengthwise direction thereof, the magazine is automatically drawn into the body of the auto-loader, and automatically loaded so that the cartridge insertion port and the cartridge ejection port are set on substantially the same plane as the cartridge port of the drive in the body of the auto-loader. The elevator is moved in the body of the auto-loader in the direction perpendicular to the direction of insertion of the magazine between the cartridge port of the drive and the cartridge insertion port and the cartridge ejection port of the magazine. At the same time, the plurality of tape cartridges are rotated between the magazine and the drive by the operation of extruding the tape cartridge into the elevator from the cartridge ejection port of the magazine by the first cartridge extruding mechanism, and the operation of extruding the tape cartridge to the cartridge port of the drive or the cartridge insertion port of the magazine from the elevator by the second cartridge extruding mechanism. The magazine can thus automatically be loaded in the body of the auto-loader by the magazine loading mechanism, and can be set in the body of the auto-loader by a simple operation. In addition, the plurality of tape cartridges can simply and securely be rotated within the magazine, thereby simplifying the inside structure of the magazine and decreasing the cost thereof.

When the plurality of tape cartridges are successively rotated between the magazine and the drive within the body of the auto-loader, the tape cartridges can securely and stably be transferred between the magazine and the elevator and between the elevator and the drive by the simple and reliable operation of simply extruding the tape cartridges by the first and second cartridge extruding mechanisms, thereby increasing reliability.

The first and second cartridge extruding mechanisms have a simple structure and high reliability of operation, and can easily be produced because the tape cartridges are simply extruded.

At least one cartridge containment port for containing only one tape cartridge which can freely be moved in and out of the cartridge containment port is provided between the cartridge insertion port and the cartridge ejection port on the lengthwise side of the magazine, and the third cartridge extruding mechanism for extruding the tape cartridge contained in the cartridge containment port into the elevator is provided in the body of the auto-loader. Therefore, if a special tape cartridge for index or cleaning is contained in the cartridge containment port, if required, the special tape cartridge can rapidly be ejected without being rotated within the magazine, thereby enabling high-speed processing. Further, since an additional tape cartridge 1 can further be contained in the cartridge containment port, the number of the tape cartridges 1 contained in the magazine can be increased, and the storage capacity of the auto-loader can thus be increased.

Each of the first, second and third cartridge extruding mechanisms comprises an extrusion arm, and a rack and pinion mechanism for linearly moving the extrusion arm, and has a simple structure and reliability of operation.

The magazine loading mechanism comprises a magazine latch mechanism and a slide driving member for linearly moving the latch mechanism in the directions of insertion and extrusion of the magazine, and has a simple structure and reliability of operation.

The second cartridge extruding mechanism is provided on the tray elevator for moving upward and downward the cartridge tray of the elevator, and can thus be moved upward and downward together with the cartridge tray, and has a simple structure and reliability of operation.

During rotation of the tape cartridges between the cartridge insertion port, the cartridge ejection port and the cartridge containment port of the magazine and the cartridge port of the drive, the position of extrusion of the tape cartridge into the elevator from the cartridge ejection port is displaced by one step in the direction of extrusion of the tape cartridge, and the position of extrusion of the tape cartridge into the elevator from the cartridge containment port and the cartridge port is displaced by two steps in the direction of extrusion of the tape cartridge, on the basis of the position of insertion of the tape cartridge into the cartridge insertion port and the cartridge containment port of the magazine. Therefore, when the tape cartridge, which is pushed into the elevator from the cartridge port of the drive or the cartridge ejection port of the magazine, is passed over the cartridge containment port of the magazine and carried to the cartridge insertion port, it is possible to prevent mutual interference between the tape cartridge carried by the elevator and the tape cartridge contained in the cartridge containment port and the cartridge insertion port of the magazine, thereby permitting the smooth rotation of the tape cartridges. The auto-loader is capable of performing the operation of rotating the tape cartridges with high safety and reliability.

Since the three cartridge extruding mechanisms for respectively extruding the tape cartridges into the elevator from the cartridge ejection port, the cartridge containment port and the cartridge port, and the cartridge extrusion position detecting mechanism for detecting the position of extrusion of the tape cartridge into the elevator and controlling the extrusion stroke of each of the three cartridge extruding mechanisms are provided, the operation of setting the two-step positions of extrusion of the tape cartridge into the elevator can simply and reliably be performed.

Since one cartridge extrusion position detecting lever and one cartridge extrusion position detecting sensor are provided for detecting the two positions, i.e., the position displaced by one step and the position displaced by two steps, of the tape cartridge 1 which is extruded into the elevator, an attempt can be made to simplify the structure and decrease the cost.

Since the tape cartridge insertion error detecting mechanism is provided in the elevator, it is possible to easily detect error in the insertion of the tape cartridge into the magazine, and thus prevent an error in the insertion of the tape cartridge into the drive.

Since the first cartridge extruding mechanism can be contained in an area in the lengthwise direction of the magazine so that the first cartridge extruding mechanism can be inserted into the opening of the magazine, which is automatically loaded in the auto-loader body, and set therein, the length of the auto-loader in the lengthwise direction of the magazine can be decreased, thereby decreasing the size of the auto-loader body.

Since the third cartridge extruding mechanism is set at an inner position of the cartridge containment port of the magazine, and then slid to push out the tape cartridge contained in the cartridge containment port of the magazine into the elevator, in synchronism with the operation of drawing the magazine into the auto-loader, the cartridge extruding mechanism can automatically be set at the inner position of the cartridge containment port of the magazine at the same time that the magazine is automatically loaded into the auto-loader body. Thus, after the magazine is automatically loaded in the auto-loader body, the tape cartridge can rapidly be pushed into the elevator from the cartridge containment port of the magazine by the cartridge extruding mechanism, thereby permitting the operation of rapidly transferring the tape cartridges between the magazine and the drive.

Since the rotation angle of the third extrusion arm is set to about 45° so that the third extrusion arm is parallel with the magazine when the third extrusion arm is discharged to the outside of the magazine insertion space, and the cartridge extrusion surface of the third extrusion arm is at right angles with the magazine when the third extrusion arm is inserted into the magazine insertion space, the rotational space of the third extrusion arm can be decreased. Since the third extrusion arm is parallel with the magazine when the third extrusion arm is discharged to the outside of the magazine insertion space, the width of the auto-loader body in the direction perpendicular to the lengthwise direction thereof can be decreased. In addition, since the cartridge extruding surface of the third extrusion arm is at right angles with the magazine when the third extrusion arm is inserted into the magazine insertion space, the tape cartridge can stably be extruded from the cartridge containment port by the cartridge extruding surface.

Since a magazine locking mechanism is provided for locking the magazine when the third extrusion arm is driven in the direction of extrusion by the slide driving member to push the tape cartridge contained in the cartridge containment port into the elevator, and releasing the locking by overstroke of the slide driving member in the direction of drawing, when the tape cartridge is pushed into the elevator from the cartridge ejection port and the cartridge containment port of the magazine by the third extrusion arm, the magazine is not pushed in error, thereby permitting the safe and reliable operation of extruding the tape cartridge into the elevator from the magazine.

Since the lock by the locking mechanism is released by the overstroke of the slide driving member in the direction of drawing of the magazine, there is no need for providing a mechanism for releasing the locking by the locking mechanism, thereby simplifying the structure and facilitating the production.

Since the elevator comprises a cartridge tray having an opening corresponding to the cartridge insertion port, the cartridge ejection port and the cartridge port, and the tray elevating mechanism for moving the cartridge tray upward and downward in the direction perpendicular to the lengthwise direction of the magazine, the magazine has a simple structure and is low cost.

The tray elevating mechanism comprises a pair of vertical guides which are disposed at both sides of the cartridge tray so as to guide upward and downward the cartridge tray in the direction perpendicular to the lengthwise direction of the magazine, and a pair of inclined guides which are disposed at both sides of the cartridge tray so as to be slid in the lengthwise direction of the magazine to drive upward and downward the cartridge tray. The pair of the inclined guides are provided with a pair of slide guide plates which are slid along the lengthwise direction of the magazine, and a pair of inclined guide grooves which are inclined with respect to the direction of sliding of the slide guide plates so as to guide the guide pins provided on both sides of the cartridge tray to vertically drive the cartridge tray. A plurality of horizontal steps are formed at a plurality of positions in the direction of inclination of the pair of the inclined guide grooves so that the cartridge tray is stopped at a height corresponding to each of the cartridge insertion port, the cartridge ejection port and the cartridge port. It is thus possible to securely and smoothly move the cartridge tray upward and downward, and correctly stop the cartridge tray at each of the cartridge insertion port, the cartridge ejection port and the cartridge port, thereby permitting the reliable and smooth operation of horizontally transferring the tape cartridges between the cartridge insertion port, the cartridge ejection port and the cartridge port and the cartridge tray.

The movable cover opening/closing mechanism for closing the cartridge insertion port of the front panel with the movable cover in synchronism with the operation of drawing the magazine into the auto-loader, and closing the movable cover in synchronism with the start of the operation of pushing the magazine into the auto-loader, and the control circuit for permitting the ejection mode of the magazine loading mechanism in the state wherein the opening of the movable cover is inhibited, are provided. Thus, when the tape cartridge in the magazine which is automatically loaded in the auto-loader body projects from the cartridge insertion port and the cartridge ejection port, the operation of pushing one side of the magazine on the movable cover is executed so as to automatically return the tape cartridge projecting into the magazine. There is thus no need for the troublesome operation of drawing the magazine from the auto-loader body and manually returning the tape cartridge, which projects, into the magazine at each time the tape cartridge projects from the magazine which is automatically loaded in the auto-loader. The tape cartridge, which projects, can automatically be returned into the auto-loader body, thereby improving the operating properties.

Since a slide driving member for drawing and extruding the magazine into and out of the auto-loader is provided on the magazine loading mechanism, and the movable cover driving lever for opening and closing the movable cover is provided on the movable cover opening/closing mechanism so that the movable cover driving lever is driven by the endless cam groove provided on the slide driving member, the magazine loading operation can easily be performed synchronously with the operation of opening and closing the movable cover with high reliability.

Further, the elevator comprises the cartridge tray having the opening corresponding to the cartridge insertion port, the cartridge ejection port and the cartridge port, and the tray elevating mechanism for moving upward and downward the cartridge tray in the direction perpendicular to the direction of insertion of the magazine, and the movable cover locking member is provided for permitting the movable cover to be opened and closed by moving the tray elevating mechanism to the initial position, and locking the movable cover in the closed state by moving the tray elevating mechanism to the standby position from the initial position. The movable cover can thus simply be locked in the closed state by driving the movable cover locking member by the tray elevating mechanism when a projecting tape cartridge is returned into the magazine by pushing the other side of the magazine on the movable cover. There is thus no need to further provide a special movable cover locking mechanism on the movable cover opening/closing mechanism, thereby simplifying the whole structure of the auto-loader and decreasing the cost thereof.

Further, at least seven tape cartridges which are successively inserted from the cartridge insertion port are successively contained, by the rotation method (one-way method), along the cartridge rotation path which is connected to the cartridge port through the path around the hollow portion in the magazine body, and are successively pushed to the cartridge port, thereby permitting the simple and reliable operation of rotating the tape cartridges within the magazine. Unlike a conventional magazine, there is thus no need for the complicated reciprocating motions of the tape cartridges within the magazine in the horizontal and vertical directions, thereby simplifying the internal structure of the magazine, decreasing the cost thereof and improving the reliability.

In addition, since the cartridge positioning mechanisms for positioning the tape cartridges are provided at at least three positions including the positions in the cartridge insertion port, the cartridge ejection port and the cartridge containment port, it is possible to securely control the positions of the tape cartridges, and easily prevent the tape cartridges from falling off from the cartridge insertion port, the cartridge ejection port and the cartridge containment port.

## Claims

1. An auto-loading system for recording medium cartridges comprising:
a cartridge containing unit (2) for housing recording medium cartridges;
driving means (14) having a cartridge port (15) for accessing a recording medium contained in a recording medium cartridge (1) which is loaded through said cartridge port; and
transfer means (16, 17) for transferring said recording medium cartridge between said cartridge containing unit (2) and said driving means (14);
characterised in that:
said cartridge containing unit (2) comprises a first space (S₁) which is connected to a cartridge insertion port (5), a second space (S₂) which is horizontally connected to said first space, a third space (S₃) which is formed below said second space perpendicularly to said second space and which is connected to said second space, and a fourth space (S₄) which is horizontally connected to said third space, which is parted from said first space by a partition, and which is connected to a cartridge ejection port (6) formed at a position corresponding to said cartridge insertion port, so that at least one recording medium cartridge (1) is contained in each of said first to fourth spaces;
said transfer means (16, 17) are suitable for transferring a recording medium cartridge between said cartridge insertion port (5), said cartridge ejection port (6) and said cartridge port (15) of said driving means (14);
and in that it comprises:
first cartridge extruding means (54) for moving the recording medium cartridges positioned, in use, in said third and fourth spaces toward said cartridge ejection port (6) by pushing the end surface of a recording medium cartridge positioned in said third space (S₃) on the side opposite to said fourth space (S₄), to load the recording medium cartridge positioned in said fourth space in said transfer means (16, 17) through said cartridge ejection port (6); and
second cartridge extruding means (55) for inserting the recording medium cartridge loaded in said transfer means (16, 17) into said cartridge port (15) of said driving means (14) or to said cartridge insertion port (5) of said cartridge containing unit (2) by pushing the side surface of the recording medium cartridge loaded in said transfer means on the side opposite to said driving means and said cartridge insertion port.

2. An auto-loading system according to Claim 1, wherein said cartridge containing unit (2) further comprises a cartridge containment port (7) having a fifth space which permits only one recording medium cartridge to be horizontally contained between said first space (S₁) and said fourth space (S₄).

3. An auto-loading system according to Claim 2, wherein said second cartridge extruding means (55) are suitable for inserting the recording medium cartridge loaded in said transfer means (16, 17) into said cartridge containment port (7) by pushing the side surface of the recording medium cartridge loaded in said transfer means on the side opposite to said cartridge containment port (7).

4. An auto-loading system according to Claim 2 or 3, further comprising third cartridge extruding means (56) for pushing only the recording medium cartridge contained in said fifth space toward said transfer means (16, 17) to load said recording medium cartridge in said transfer means.

5. An auto-loading system according to Claim 1, wherein each of said first (54) and second (55) cartridge extruding means comprises an extrusion arm (136/153), and a rack and pinion mechanism (141-3/157) for linearly moving said extrusion arm.

6. An auto-loading system according to Claim 4, wherein each of said first (54) and third (56) cartridge extruding means comprises an extrusion arm (136/167) and a rack and pinion mechanism (141-3/173-5) for linearly moving said extrusion arm.

7. An auto-loading system according to Claim 2, wherein said cartridge containment port (7) is detachable.

8. An auto-loading system according to Claim 7, further comprising cartridge containing unit loading means (51) for automatically drawing said cartridge containing unit (2) into said auto-loading system (11) so that said cartridge containment port (7) and said cartridge ejection port (6) of said cartridge containing unit are set at positions corresponding to said cartridge port (15) of said driving means (14).

9. An auto-loading system according to Claim 8, wherein said cartridge containing unit loading means (51) comprises;
latch means (84, 65a) for latching said cartridge containing unit; and
a slide driving member (62) for linearly moving said latch means in the directions of drawing and extrusion of said cartridge containing unit.

10. An auto-loading system according to Claim 1, wherein said transfer means (16, 17) comprises elevating means (17) for moving upward and downward said recording medium cartridge, said second cartridge extruding means (55) being provided on said elevating means.

11. An auto-loading system according to Claim 2, wherein a special recording medium cartridge is contained in said fifth space (7).

12. An auto-loading system according to Claim 1, further comprising fourth cartridge extruding means (58) for pushing the recording medium cartridge to said transfer means (16, 17) from said driving means (14).

13. An auto-loading system according to Claim 12, wherein said recording medium cartridge is a tape cartridge containing a magnetic tape, said driving means (14) comprises a rotating head (201) for reproducing said magnetic tape, and said fourth cartridge extruding means (58) is provided so as to be movable in the longitudinal direction of said driving means in a space above said rotating head within said driving means.

14. An auto-loading system according to Claim 8, wherein said cartridge containing unit (2) comprises an opening (37) at the same height as said cartridge ejection port (6) on the front end side thereof in the direction of insertion into the body of said auto-loading system, and said first cartridge extruding means (54) is set in said cartridge containing unit (2) in correspondence with loading of said cartridge containing unit in the body of said auto-loading system by said cartridge containing unit loading means (51).

15. An auto-loading system according to Claim 8, further comprising setting means (178-190) for setting said third cartridge extruding means (56) at the same height as said fifth space (7) inwardly of said fifth space in the direction of loading of said cartridge containing unit in linkage with the operation of loading said cartridge containing unit (2) in said body of said auto-loading system by said cartridge containing unit loading means (51).

16. An auto-loading system according to Claim 8, further comprising locking means (183) for locking said cartridge containing unit (2) at a loading position in said auto-loading system.

17. An auto-loading system according to Claim 1, wherein said transfer means (16, 17) comprises positioning means (85, 92) for positioning said recording medium cartridge at a height corresponding to said cartridge insertion port (5), said cartridge ejection port (6) and said cartridge port (15).

18. An auto-loading system according to Claim 8, further comprising:
a cartridge insertion port (19) for inserting said cartridge containing unit (2) therein;
a cover (20) for opening and closing said cartridge insertion port;
cover opening/closing means (53) for closing said cover before the completion of the operation of loading said cartridge containing unit (2) by said cartridge containing unit loading means (51), and opening in correspondence with the start of the ejection of said cartridge containing unit by said cartridge containing unit loading means; and
control means for, when the recording medium cartridge in said cartridge containing unit projects from said cartridge insertion port (5) or said cartridge ejection port (6), closing said cover (20) by said cover opening/closing means (53) and ejecting said cartridge containing unit by said cartridge containing unit loading means (51) to push back the recording medium cartridge, which projects from said cartridge containing unit, into said cartridge containing unit when the recording medium cartridge contacts the inner side (20a) of said cover.

19. An auto-loading system according to Claim 2, wherein said cartridge containing unit (2) comprises cartridge positioning means for positioning said recording medium cartridges in said first, fourth and fifth spaces.

20. An auto-loading system according to Claim 12, wherein the amount (L₂) of the recording medium cartridge extruded to said transfer means (16, 17) from said driving means (14) by said fourth cartridge extruding means (58) is set to be larger than the amount (L₁) of the recording medium cartridge extruded to said transfer means (16, 17) from said cartridge containing unit by said first cartridge extruding means (54).

## Patentansprüche

1. Automatisches Ladesystem für Aufzeichnungsträgerkassetten, mit einer Kassettenaufnahmeeinheit (2) zur Unterbringung von Aufzeichnungsträgerkassetten, mit einer einen Kassettendurchgang (15) aufweisenden Antriebseinrichtung (14) für einen Zugang zu einem Aufzeichnungsträger, der in einer durch den betreffenden Kassettendurchgang geladenen Aufzeichnungsträgerkassette (1) enthalten ist,
und mit einer Übertragungseinrichtung (16, 17) zur Übertragung der betreffenden Aufzeichnungsträgerkassette zwischen der genannten Kassettenaufnahmeeinheit (2) und der genannten Antriebseinrichtung (14),
**dadurch gekennzeichnet,**
dass die genannte Kassettenaufnahmeeinheit (2) einen ersten Raum (S₁), der mit einem Kassetteneinführungsdurchgang (5) verbunden ist, einen zweiten Raum (S₂), der mit dem ersten Raum horizontal verbunden ist, einen dritten Raum (S₃), der unterhalb des zweiten Raumes rechtwinklig zu diesem gebildet ist und der mit dem betreffenden zweiten Raum verbunden ist, und einen vierten Raum (S₄) umfaßt, der mit dem dritten Raum horizontal verbunden, von dem genannten ersten Raum durch eine Trennwand abgeteilt und mit einem Kassettenauswurfdurchgang (6) verbunden ist, welcher an einer dem Kassetteneinführungsdurchgang entsprechenden Stelle derart gebildet ist, dass zumindest eine Aufzeichnungsträgerkassette (1) in jedem der ersten bis vierten Räume enthalten ist,
dass die genannte Übertragungseinrichtung (16, 17) geeignet ist für die Übertragung einer Aufzeichnungsträgerkassette zwischen dem genannten Kassetteneinführungsdurchgang (5), dem genannten Kassettenauswurfdurchgang (6) und dem genannten Kassettendurchgang (15) der Antriebseinrichtung (14),
dass eine erste Kassettenausstoßeinrichtung (54) vorgesehen ist zur Verschiebung der im Gebrauch in den dritten und vierten Räumen positionierten Aufzeichnungsträgerkassetten zu dem Kassettenauswurfdurchgang (6) hin durch Druckausübung auf diejenige Endfläche einer in dem genannten dritten Raum (S₃) positionierten Aufzeichnungsträgerkassette, die auf der Seite liegt, welche dem vierten Raum (S₄) gegenüberliegt, derart, dass die in dem betreffenden vierten Raum positionierte Aufzeichnungsträgerkassette durch den Kassettenauswurfdurchgang (6) in die genannte Übertragungseinrichtung (16, 17) geladen wird,
und dass eine zweite Kassettenausstoßeinrichtung (55) vorgesehen ist zur Einführung der in die genannte Übertragungseinrichtung (16, 17) geladenen Aufzeichnungsträgerkassette in den Kassettendurchgang (15) der Antriebseinrichtung (14) oder in den Kassetteneinführungsdurchgang (5) der Kassettenaufnahmeeinheit (2) durch Druckausübung auf diejenige Seitenfläche der in der betreffenden Übertragungseinrichtung geladenen Aufzeichnungsträgerkassette, die auf der Seite liegt, welche der Antriebseinrichtung und dem genannten Kassetteneinführungsdurchgang gegenüberliegt

2. Automatisches Ladesystem nach Anspruch 1, wobei die Kassettenaufnahmeeinheit (2) ferner einen einen fünften Raum aufweisenden Kassettenbehältnisdurchgang (7) enthält, der ermöglicht, dass lediglich eine Aufzeichnungsträgerkassette zwischen dem ersten Raum (S₁) und dem vierten Raum (S₄) horizontal enthalten ist.

3. Automatisches Ladesystem nach Anspruch 2, wobei die genannte zweite Kassettenausstoßeinrichtung (55) geeignet ist für die Einführung der in der Übertragungseinrichtung (16, 17) geladenen Aufzeichnungsträgerkassette in den genannten Kassettenbehältnisdurchgang (7) durch Druckausübung auf diejenige Seitenfläche der in der betreffenden Übertragungseinrichtung geladenen Aufzeichnungsträgerkassette, die auf der Seite liegt, welche dem Kassettenbehältnisdurchgang (7) gegenüberliegt.

4. Automatisches Ladesystem nach Anspruch 2 oder 3, umfassend ferner eine dritte Kassettenausstoßeinrichtung (56) zur Druckausübung lediglich auf die in dem fünften Raum enthaltene Aufzeichnungsträgerkassette zu der genannten Übertragungseinrichtung (16, 17) hin, um die betreffende Aufzeichnungsträgerkassette in die Übertragungseinrichtung zu laden.

5. Automatisches Ladesystem nach Anspruch 1, wobei die erste Kassettenausstoßeinrichtung (54) und die zweite Kassettenausstoßeinrichtung (55) jeweils einen Ausstoßarm (136/153) sowie einen Zahnstangen- und Ritzelmechanismus (141-3/157) zur geradlinigen Verschiebung des Ausstoßarms umfassen.

6. Automatisches Ladesystem nach Anspruch 4, wobei die erste Kassettenausstoßeinrichtung (54)) und die dritte Kassettenausstoßeinrichtung (56) jeweils einen Ausstoßarm (136/167) sowie einen Zahnstangen- und Ritzelmechanismus (141-3/173-5) zur geradlinigen Verschiebung des betreffenden Ausstoßarms umfassen.

7. Automatisches Ladesystem nach Anspruch 2, wobei der genannte Kassettenbehältnisdurchgang (7) lösbar ist.

8. Automatisches Ladesystem nach Anspruch 7, umfassend ferner eine Kassettenaufnahmeeinheit-Ladeeinrichtung (51) zu einem solchen automatischen Hereinziehen der betreffenden Kassettenaufnahmeeinheit (2) in das automatische Ladesystem (11), dass der genannte Kassettenbehältnisdurchgang (7) und der Kassettenauswurfdurchgang (6) der Kassettenaufnahmeeinheit an dem genannten Kassettendurchgang (15) der Antriebseinrichtung (14) entsprechenden Stellen festgelegt sind.

9. Automatisches Ladesystem nach Anspruch 8, wobei die genannte Kassettenaufnahmeeinheit-Ladeeinrichtung (51) eine Verriegelungseinrichtung (84, 65a) zur Verriegelung der betreffenden Kassettenaufnahmeeinheit und ein Verschiebe-Antriebsteil (62) zur geradlinigen Verschiebung der betreffenden Verriegelungseinrichtung in Richtung des Einziehens und in Richtung des Ausstoßens der betreffenden Kassettenaufnahmeeinheit aufweist.

10. Automatisches Ladesystem nach Anspruch 1, wobei die genannte Übertragungseinrichtung (16, 17) eine Hebeeinrichtung (17) umfaßt zur Aufwärts- und Abwärtsbewegung der genannten Aufzeichnungsträgerkassette und wobei die genannte zweite Kassettenausstoßeinrichtung (55) an der betreffenden Hebeeinrichtung vorgesehen ist.

11. Automatisches Ladesystem nach Anspruch 2, wobei in dem genannten fünften Raum (7) eine Spezial-Aufzeichnungsträgerkassette enthalten ist.

12. Automatisches Ladesystem nach Anspruch 1, umfassend ferner eine vierte Kassettenausstoßeinrichtung (58) zum Wegdrücken der Aufzeichnungsträgerkassette in die genannte Übertragungseinrichtung (16, 17) von der genannten Antriebseinrichtung (14) her.

13. Automatisches Ladesystem nach Anspruch 12, wobei die genannte Aufzeichnungsträgerkassette eine ein Magnetband enthaltende Bandkassette ist,
wobei die Antriebseinrichtung (14) einen rotierenden Kopf (201) für die Wiedergabe des betreffenden Magnetbandes enthält und wobei die genannte vierte Kassettenausstoßeinrichtung (58) derart vorgesehen ist, dass sie in der Längsrichtung der Antriebseinrichtung in einem Raum oberhalb des rotierenden Kopfes innerhalb der genannten Antriebseinrichtung verschiebbar ist.

14. Automatisches Ladesystem nach Anspruch 8, wobei die genannte Kassettenaufnahmeeinheit (2) eine Öffnung (37) in derselben Höhe, in der sich der Kassettenauswurfdurchgang (6) befindet, an ihrer vorderen Endseite in der Einführrichtung in den Körper des automatischen Ladesystems aufweist,
und wobei die genannte erste Kassettenausstoßeinrichtung (54) in der genannten Kassettenaufnahmeeinheit (2) in Übereinstimmung mit dem Laden der betreffenden Kassettenaufnahmeeinheit in den Körper des automatischen Ladesystems durch die Kassettenaufnahmeeinheit-Ladeeinrichtung (51) eingestellt wird.

15. Automatisches Ladesystem nach Anspruch 8, umfassend ferner eine Einstelleinrichtung (178-190) zur Einstellung der dritten Kassettenausstoßeinrichtung (56) in derselben Höhe, in der sich der fünfte Raum (7) befindet, im Innern des betreffenden fünften Raumes in Richtung des Ladens der betreffenden Kassettenaufnahmeeinheit in Verbindung mit der Operation des Ladens der Kassettenaufnahmeeinheit (2) in den Körper des automatischen Ladesystems durch die Kassettenaufnahmeeinheit-Ladeeinrichtung (51).

16. Automatisches Ladesystem nach Anspruch 8, umfassend ferner eine Festhalteeinrichtung (183) zum Festhalten der genannten Kassettenaufnahmeeinheit (2) in einer Ladeposition in dem automatischen Ladesystem.

17. Automatisches Ladesystem nach Anspruch 1, wobei die genannte Übertragungseinrichtung (16, 17) eine Positionierungseinrichtung (85, 92) aufweist zur Positionierung der genannten Aufzeichnungsträgerkassette in einer Höhe, die dem genannten Kassetteneinführungsdurchgang (5), dem genannten Kassettenauswurfdurchgang (6) und dem Kassettendurchgang (15) entspricht.

18. Automatisches Ladesystem nach Anspruch 8, umfassend ferner einen Kassetteneinführungsdurchgang (19) für die Einführung der betreffenden Kassettenaufnahmeeinheit (2),
eine Abdeckung (20) zum Öffnen und Verschließen des betreffenden Kassetteneinführungsdurchgangs,
eine Abdeckungs-Öffnungs-/Verschließeinrichtung (53) zum Verschließen der betreffenden Abdeckung vor Abschluß der Ladeoperation der betreffenden Kassettenaufnahmeeinheit (2) durch die Kassettenaufnahmeeinheit-Ladeeinrichtung (51) und zum Öffnen in Übereinstimmung mit dem Beginn des Auswurfs der betreffenden Kassettenaufnahmeeinheit durch die Kassettenaufnahmeeinheit-Ladeeinrichtung,
und eine Steuereinrichtung, die in dem Fall, dass die Aufzeichnungsträgerkassette in der Kassettenaufnahmeeinheit aus dem Kassetteneinführungsdurchgang (5) oder dem Kassettenauswurfdurchgang (6) herausragt, die betreffende Abdeckung (20) durch die Abdeckungs-Öffnungs-/Verschließeinrichtung (53) schließt und die Kassettenaufnahmeeinheit durch die Kassettenaufnahmeeinheit-Ladeeinrichtung (51) ausstößt, derart, dass die betreffende Aufzeichnungsträgerkassette, die von der Kassettenaufnahmeeinheit vorsteht, in die genannte Kassettenaufnahmeeinheit zurückgedrückt wird, wenn die betreffende Aufzeichnungsträgerkassette die Innenseite (20a) der genannten Abdeckung berührt.

19. Automatisches Ladesystem nach Anspruch 2, wobei die genannte Kassettenaufnahmeeinheit (2) eine Kassettenpositionierungseinrichtung zur Positionierung der genannten Aufzeichnungsträgerkassetten in den ersten, vierten und fünften Räumen aufweist.

20. Automatisches Ladesystem nach Anspruch 12, wobei das Ausmaß (L₂), um das die Aufzeichnungsträgerkassette durch die vierte Kassettenausstoßeinrichtung (58) zu der Übertragungseinrichtung (16, 17) hin von der Antriebseinrichtung (14) weggestoßen wird, auf einen größeren Wert festgelegt ist als das Ausmaß (L₁), um das die Aufzeichnungsträgerkassette durch die erste Kassettenausstoßeinrichtung (54) zu der Übertragungseinrichtung (16, 17) hin von der genannten Kassettenaufnahmeeinheit weggestoßen wird.

## Revendications

1. Un système de chargement automatique pour des cartouches de support d'enregistrement comprenant :
une unité de logement de cartouches (2) pour loger des cartouches de support d'enregistrement;
des moyens de lecture/écriture (14) ayant un orifice de cartouche (15) pour accéder à un support d'enregistrement contenu dans une cartouche de support d'enregistrement (1) qui est chargée à travers l'orifice de cartouche; et
des moyens de transfert (16, 17) pour transférer la cartouche de support d'enregistrement entre l'unité de logement de cartouches (2) et les moyens de lecture/écriture (14);
caractérisé en ce que :
l'unité de logement de cartouches (2) comprend un premier espace (S₁) qui communique avec un orifice d'introduction de cartouche (5), un second espace (S₂) qui communique horizontalement avec le premier espace, un troisième espace (S₃) qui est formé au-dessous du second espace, perpendiculairement au second espace, et qui communique avec le second espace, et un quatrième espace (S₄) qui communique horizontalement avec le troisième espace, qui est séparé du premier espace par une cloison, et qui communique avec un orifice d'éjection de cartouche (6) formé à une position correspondant à l'orifice d'introduction de cartouche, de façon qu'au moins une cartouche de support d'enregistrement (1) soit contenue dans chacun des premier à quatrième espaces;
les moyens de transfert (16, 17) conviennent pour transférer une cartouche de support d'enregistrement entre l'orifice d'introduction de cartouche (5), l'orifice d'éjection de cartouche (6) et l'orifice de cartouche (15) des moyens de lecture/écriture (14);
et en ce qu'il comprend :
des premiers moyens d'expulsion de cartouche (54) pour déplacer vers l'orifice d'éjection de cartouche (6) les cartouches de support d'enregistrement qui sont positionnées, pendant l'utilisation, dans les troisième et quatrième espaces, en poussant la surface d'extrémité d'une cartouche de support d'enregistrement positionnée dans le troisième espace (S₃), du côté opposé au quatrième espace (S₄), pour charger dans les moyens de transfert (16, 17), à travers l'orifice d'éjection de cartouche (6), la cartouche de support d'enregistrement qui est positionnée dans le quatrième espace;
et des seconds moyens d'expulsion de cartouche (55) pour introduire dans l'orifice de cartouche (15) des moyens de lecture/écriture (14), ou dans l'orifice d'introduction de cartouche (5) de l'unité de logement de cartouches (2), la cartouche de support d'enregistrement qui est chargée dans les moyens de transfert (16, 17), en poussant la surface latérale de la cartouche de support d'enregistrement chargée dans les moyens de transfert, du côté opposé aux moyens de lecture/écriture et à l'orifice d'introduction de cartouche.

2. Un système de chargement automatique selon la revendication 1, dans lequel l'unité de logement de cartouches (2) comprend en outre un orifice de logement de cartouche (7) ayant un cinquième espace qui permet de contenir horizontalement une seule cartouche de support d'enregistrement, entre le premier espace (S₁) et le quatrième espace (S₄).

3. Un système de chargement automatique selon la revendication 2, dans lequel les seconds moyens d'expulsion de cartouche (55) conviennent pour introduire dans l'orifice de logement de cartouche (7) la cartouche de support d'enregistrement qui est chargée dans les moyens de transfert (16, 17), en poussant la surface latérale de la cartouche de support d'enregistrement chargée dans les moyens de transfert, du côté opposé à l'orifice de logement de cartouche (7).

4. Un système de chargement automatique selon la revendication 2 ou 3, comprenant en outre des troisièmes moyens d'expulsion de cartouche (56) pour pousser seulement la cartouche de support d'enregistrement contenue dans le cinquième espace, vers les moyens de transfert (16, 17), pour charger cette cartouche de support d'enregistrement dans les moyens de transfert.

5. Un système de chargement automatique selon la revendication 1, dans lequel les premiers (54) et seconds (55) moyens d'expulsion de cartouche comprennent chacun un bras d'expulsion (136 / 153), et un mécanisme à pignon et crémaillère (141-3 / 157), pour déplacer de façon rectiligne le bras d'expulsion.

6. Un système de chargement automatique selon la revendication 4, dans lequel les premiers (54) et troisièmes (56) moyens d'expulsion de cartouche comprennent chacun un bras d'expulsion (136 / 167) et un mécanisme à pignon et crémaillère (141-3 / 173-5), pour déplacer de façon rectiligne le bras d'expulsion.

7. Un système de chargement automatique selon la revendication 2, dans lequel l'orifice de logement de cartouche (7) est amovible.

8. Un système de chargement automatique selon la revendication 7, comprenant en outre des moyens de chargement d'unité de logement de cartouches (51) pour tirer automatiquement l'unité de logement de cartouches (2) à l'intérieur du système de chargement automatique (11), de façon que l'orifice de logement de cartouche (7) et l'orifice d'éjection de cartouche (6) de l'unité de logement de cartouches soient placés à des positions correspondant à l'orifice de cartouche (15) des moyens de lecture/écriture (14).

9. Un système de chargement automatique selon la revendication 8, dans lequel les moyens de chargement d'unité de logement de cartouches (51) comprennent :
des moyens de verrouillage (84, 65a) pour verrouiller l'unité de logement de cartouches; et
un organe d'entraînement glissant (62) pour déplacer de façon rectiligne les moyens de verrouillage dans les directions de traction et d'expulsion de l'unité de logement de cartouches.

10. Un système de chargement automatique selon la revendication 1, dans lequel les moyens de transfert (16, 17) comprennent des moyens d'élévation (17) pour déplacer vers le haut et vers le bas la cartouche de support d'enregistrement, les seconds moyens d'expulsion de cartouche (55) étant montés sur les moyens d'élévation.

11. Un système de chargement automatique selon la revendication 2, dans lequel une cartouche de support d'enregistrement spéciale est contenue dans le cinquième espace (7).

12. Un système de chargement automatique selon la revendication 1, comprenant en outre des quatrièmes moyens d'expulsion de cartouche (58) pour pousser la cartouche de support d'enregistrement vers les moyens de transfert (16, 17), à partir des moyens de lecture/écriture (14).

13. Un système de chargement automatique selon la revendication 12, dans lequel la cartouche de support d'enregistrement est une cartouche de bande contenant une bande magnétique, les moyens de lecture/écriture (14) comprennent une tête tournante (201) pour reproduire la bande magnétique, et les quatrièmes moyens d'expulsion de cartouche (58) sont incorporés de façon à pouvoir être déplacés dans la direction longitudinale des moyens de lecture/écriture, dans un espace situé au-dessus de la tête tournante, à l'intérieur des moyens de lecture/écriture.

14. Un système de chargement automatique selon la revendication 8, dans lequel l'unité de logement de cartouches (2) comprend une ouverture (37) à la même hauteur que l'orifice d'éjection de cartouche (6), sur le côté d'extrémité avant de celle-ci, dans la direction d'introduction dans le corps du système de chargement automatique, et les premiers moyens d'expulsion de cartouche (54) sont placés dans l'unité de logement de cartouches (2) en correspondance avec le chargement de l'unité de logement de cartouches dans le corps du système de chargement automatique, par les moyens de chargement d'unité de logement de cartouches (51).

15. Un système de chargement automatique selon la revendication 8, comprenant en outre des moyens de positionnement (178-190) pour positionner les troisièmes moyens d'expulsion de cartouche (56) à la même hauteur que le cinquième espace (7), du côté intérieur par rapport au cinquième espace dans la direction de chargement de l'unité de logement de cartouches, en liaison avec l'opération de chargement de l'unité de logement de cartouches (2) dans le corps du système de chargement automatique, par les moyens de chargement d'unité de logement de cartouches (51).

16. Un système de chargement automatique selon la revendication 8, comprenant en outre des moyens de verrouillage (183) pour verrouiller l'unité de logement de cartouches (2) à une position de chargement dans le système de chargement automatique.

17. Un système de chargement automatique selon la revendication 1, dans lequel les moyens de transfert (16, 17) comprennent des moyens de positionnement (85, 92) pour positionner la cartouche de support d'enregistrement à une hauteur correspondant à l'orifice d'introduction de cartouche (5), à l'orifice d'éjection de cartouche (6) et à l'orifice de cartouche (15).

18. Un système de chargement automatique selon la revendication 8, comprenant en en outre :
un orifice d'introduction de cartouche (19) pour introduire à l'intérieur l'unité de logement de cartouches (2);
un volet (20) pour ouvrir et fermer l'orifice d'introduction de cartouche;
des moyens d'ouverture/fermeture de volet (53) pour fermer le volet avant l'achèvement de l'opération de chargement de l'unité de logement de cartouches (2) par les moyens de chargement d'unité de logement de cartouches (51), et pour l'ouvrir en correspondance avec le début de l'éjection de l'unité de logement de cartouches par les moyens de chargement d'unité de logement de cartouches; et
des moyens de commande pour, lorsque la cartouche de support d'enregistrement dans l'unité de logement de cartouches dépasse hors de l'orifice d'introduction de cartouche (5) ou de l'orifice d'éjection de cartouche (6), fermer le volet (20) par les moyens d'ouverture/fermeture de volet (53), et éjecter l'unité de logement de cartouches par les moyens de chargement d'unité de logement de cartouches (51), pour pousser en arrière, dans l'unité de logement de cartouches, la cartouche de support d'enregistrement qui dépasse hors de l'unité de logement de cartouches, lorsque la cartouche de support d'enregistrement vient en contact avec le côté intérieur (20a) du volet.

19. Un système de chargement automatique selon la revendication 2, dans lequel l'unité de logement de cartouches (2) comprend des moyens de positionnement de cartouche pour positionner les cartouches de support d'enregistrement dans les premier, quatrième et cinquième espaces.

20. Un système de chargement automatique selon la revendication 12 dans lequel la distance (L₂) sur laquelle la cartouche de support d'enregistrement est expulsée vers les moyens de transfert (16, 17), à partir des moyens de lecture/écriture (14), par les quatrièmes moyens d'expulsion de cartouche (58), est fixée de façon à être supérieure à la distance (L₁) sur laquelle la cartouche de support d'enregistrement est expulsée vers les moyens de transfert (16, 17) à partir de l'unité de logement de cartouches, par les premiers moyens d'expulsion de cartouche (54).
